# EUROPEAN PATENT APPLICATION

(11) **EP 4 550 085 A1**
(43) Date of publication of application: **07.05.2025**
(21) Application number: 24211137.5
(22) Date of filing: 06.11.2024
(51) Int. Cl.: G06F 1/20, G06F 1/3206, G06F 1/3215, G06F 1/324, G06F 1/3234, G06F 1/3296, G06F 1/16

(54) **MULTI-DEVICE THERMAL AND PERFORMANCE MANAGEMENT, AND SYSTEMS AND METHODS OF USE THEREOF**

(30) Priority: 06.11.2023 US 202363596569 P; 04.11.2024 US 202418936910
(71) Applicant: Meta Platforms Technologies, LLC, Menlo Park, CA 94025 (US)
(72) Inventor: Kim, Sophia Hyein, Menlo Park (US); Soe, Soethiha, Menlo Park (US); Heida, Matthew, Menlo Park (US)
(74) Representative: Murgitroyd & Company

(57) **Abstract**

A non-transitory computer readable storage medium storing one or more programs that comprise instructions. The instructions are executed by an intermediary processing device that is in communication with an artificial-reality headset. The executed instructions cause the intermediary processing device, while the intermediary processing device is operating in a default state to process data for the artificial-reality headset and in accordance with a determination that an operational condition at the artificial-reality headset satisfies thermal-throttling criteria, to operate the intermediary processing device in a throttled state. The throttled state is distinct from the default state. The throttled state causes the intermediary processing device to reduce at least one performance characteristic associated with the default state.

## Description

### RELATED APPLICATIONS

This application claims priority to U.S. Prov. App. No. 63/596,569, filed on November 6, 2024, and titled "Multi-Device Thermal and Performance Management, and Systems and Methods of Use Thereof'.

### TECHNICAL FIELD

This relates generally to artificial-reality headsets adjusting performance characteristics to match the current performance available at an associated device when the associated device is operating at a reduced performance due to being in a thermal-throttled state or the associated device adjusting performance characteristics to match the current performance available at the artificial-reality headset when the artificial-reality headset is operating at a reduced performance due to being in a thermal-throttled state.

### BACKGROUND

Artificial-reality headsets and associated devices can have different heat generation and heat dissipation rates, and thus can be operating at different temperatures. Additionally, the artificial-reality headsets and the associated devices can also have different thermal limits. When a respective device (e.g., the artificial-reality headset or the associated device) reaches or exceeds its respective thermal limit, the respective device can thermal throttle and consequently reduce its performance to reduce heat generated at the respective device.

However, techniques for thermal throttling a respective device by reducing its performance do not manage the performance of non-thermal-throttling devices associated with the respective device. For example, the artificial-reality headset may be thermal throttling and operating at a reduced performance while the associated device continues to operate at full performance. Only having one device thermal throttle while the other device is still operating at full performance can lead to wasted performance, resulting in unnecessary heat generation, increased power consumption, and decreased battery life. Accordingly, there is a need for managing performance of non-thermal-throttling devices when a thermal-throttling device is operating at a reduced performance due to thermal throttling.

As such, there is a need to address one or more of the above-identified challenges. A brief summary of solutions to the issues noted above are described below.

### SUMMARY

The present invention provides a non-transitory computer-readable storage medium, a method of thermal management and an intermediate processing device as defined in the appended claims.

In accordance with a first aspect, there is provided a non-transitory computer-readable storage medium storing one or more programs, the one or more programs comprising instructions that, when executed by a system that comprises an intermediary processing device that is in communication with an extended-reality headset, cause the system to:
while the intermediary processing device is operating in a default state to process data for the extended-reality headset and in accordance with a determination that an operational condition at the extended-reality headset satisfies thermal-throttling criteria:
operate the intermediary processing device in a throttled state that is distinct from the default state, the throttled state causing the intermediary processing device to reduce at least one performance characteristic associated with the default state.

The one or more programs may comprise instructions that, when executed by the system, further cause the system to:
in accordance with a determination that the operational condition at the extended-reality headset no longer satisfies the thermal-throttling criteria:
revert the intermediary processing device to the default state.

The one or more programs may comprise instructions that, when executed by the system, further cause the system to:
in accordance with the determination that the operational condition at the extended-reality headset satisfies the thermal-throttling criteria:
provide an instruction to cause a visual notification or a haptic notification that the extended-reality headset satisfies the thermal-throttling criteria to be displayed at one or both of the intermediary processing devices and the extended-reality headset.

The one or more programs may comprise instructions that, when executed by the system, further cause the system to:
while the intermediary processing device is operating in the throttled state, and in accordance with a determination that all user-experience indicators at the extended-reality headset and the intermediary processing device satisfy one or more user-experience criteria:
maintain operating the intermediary processing device in the throttled state.

The one or more programs may comprise instructions that, when executed by the system, further cause the system to:
while the intermediary processing device is operating in the throttled state, and in accordance with a determination that at least one user-experience indicator at the extended-reality headset or the intermediary processing device does not satisfy one or more user-experience criteria:
revert the intermediary processing device to the default state.

The one or more programs may comprise instructions that, when executed by the system, further cause the system to:
while the intermediary processing device is operating in the throttled state, and in accordance with a determination that at least one user-experience indicator at the intermediary processing device does not satisfy one or more user-experience criteria:
revert the at least one performance characteristic to the default state; and
reduce at least one second performance characteristic that is distinct from the at least one performance characteristic.

The performance characteristic may comprise:
a voltage of an intermediary processing device CPU associated with the intermediary processing device and another voltage of a headset CPU associated with the extended-reality headset;
a frequency of the intermediary processing device CPU associated with the intermediary processing device and another frequency of the headset CPU associated with the extended-reality headset;
a cellular throughput associated with the intermediary processing device and another cellular throughput associated with the extended-reality headset; or
video call quality between the intermediary processing device and the extended-reality headset.

The thermal throttling criteria comprises a predictive model that predicts environmental temperature changes based on pattern recognition and can partially throttle to maintain a performance characteristic for a greater period of time than if the extended-reality headset only throttles once the thermal-throttling criteria is satisfied or the intermediary processing device only throttles once the thermal-throttling criteria is satisfied.

The intermediary processing device may be a wrist-wearable device.

The intermediary processing device may comprise a network coordinator associated with the intermediary processing device, and wherein the one or more programs comprise instructions that, when executed by the intermediary processing device, further cause the intermediary processing device to:
in accordance with the determination that the operational condition at the extended-reality headset satisfies thermal-throttling criteria:
receive, by the network coordinator of the intermediary processing device, an updated thermal-throttling state of the extended-reality headset from a network leader.

The updated thermal-throttling criteria of the extended-reality headset may be sent from a network coordinator associated with the extended-reality headset to the network leader.

The network leader may be based on a respective operational condition of a respective device within a network, wherein the network comprises the extended-reality headset and the intermediary processing device.

The one or more programs may comprise instructions that, when executed by the system, further cause the system to:
while the extended-reality headset is operating in a default state to process data for the intermediary processing device, and in accordance with a determination that an operational condition at the intermediary processing device satisfies thermal-throttling criteria:
operate the extended-reality headset in a throttled state that is distinct from the default state, the throttled state causing the extended-reality headset to reduce at least one performance characteristic associated with the default state.

The one or more programs may comprise instructions that, when executed by the system, further cause the system to:
in accordance with a determination that the operational condition at the intermediary processing device no longer satisfies the thermal-throttling criteria:
revert the extended-reality headset to the default state.

The one or more programs may comprise instructions that, when executed by the system, further cause the system to:
in accordance with the determination that the operational condition at the intermediary processing device satisfies the thermal-throttling criteria:
provide an instruction to cause a visual notification or an auditory notification indicating that the intermediary processing device satisfies the thermal-throttling criteria to be displayed at one or both of the intermediary processing device and the extended-reality headset.

The one or more programs may comprise instructions that, when executed by the system, further cause the system to:
while the extended-reality headset is operating in the throttled state: in accordance with a determination that all user-experience indicators at the intermediary processing device satisfy one or more user-experience criteria:
maintain operating the extended-reality headset in the throttled state.

The one or more programs may comprise instructions that, when executed by the system, further cause the system to:
while the extended-reality headset is operating in the throttled state: in accordance with a determination that at least one user-experience indicator at the intermediary processing device does not satisfy one or more user-experience criteria:
revert the extended-reality headset to the default state.

The one or more programs may comprise instructions that, when executed by the system, further cause the system to:
while the extended-reality headset is operating in the throttled state: in accordance with a determination that at least one user-experience indicator at the extended-reality headset does not satisfy one or more user-experience criteria:
revert the at least one performance characteristic to the default state; and
reduce at least one second performance characteristic that is distinct from the at least one performance characteristic.

In accordance with a second aspect, there is provided a method of thermal management, the method comprising:
at a system that comprises an intermediary processing device that is in communication with an extended-reality headset:
while the intermediary processing device is operating in a default state to process data for the extended-reality headset and in accordance with a determination that an operational condition at the extended-reality headset satisfies thermal-throttling criteria:
operate the intermediary processing device in a throttled state that is distinct from the default state, the throttled state causing the intermediary processing device to reduce at least one performance characteristic associated with the default state.

In accordance with a third aspect, there is provided an intermediate processing device, comprising:
a communication component that is configured to communicate with an extended-reality headset;
a processor, wherein the processor is configured to:
while the intermediary processing device is operating in a default state to process data for the extended-reality headset and in accordance with a determination that an operational condition at the extended-reality headset satisfies thermal-throttling criteria:
operate the intermediary processing device in a throttled state that is distinct from the default state, the throttled state causing the intermediary processing device to reduce at least one performance characteristic associated with the default state.

The methods, systems, and devices described herein allow more efficient resource management by matching performance of a non-thermal-throttling device with the reduced performance of a thermal-throttling device. When the thermal-throttling device approaches or exceeds a thermal-throttling condition and begins to thermal throttle by reducing performance, information is sent to the non-thermal throttling device regarding what the reduced performance is at the thermal-throttling device. The non-thermal-throttling device then matches its performance to the reduced performance of the thermal-throttling device to reduce excess performance at the non-thermal-throttling device that cannot be utilized by the thermal-throttling device while in the reduced-performance mode. Reducing performance at the non-thermal-throttling device can reduce the heat generated (and thus reduce the likelihood that the non-thermal-throttling device will reach its thermal-throttling condition and also begin to thermal throttle) and improve battery life.

One example of an intermediary processing device that is in communication with an artificial-reality headset is described herein. The intermediary processing device comprises one or more programs, where the one or more programs are stored in memory and configured to be executed by one or more processors. The one or more programs comprising instructions for performing operations. The operations comprise, while the intermediary processing device is operating in a default state to process data for the artificial-reality headset and in accordance with a determination that an operational condition at the artificial-reality headset satisfies thermal-throttling criteria, operating the intermediary processing device in a throttled state that is distinct from the default state. The throttled state causes the intermediary processing device to reduce at least one performance characteristic associated with the default state.

In another example of an intermediary processing device that is in communication with an artificial-reality headset is described herein. The artificial-reality headset comprises one or more programs, where the one or more programs are stored in memory and configured to be executed by one or more processors. The one or more programs comprise instructions for performing operations. The operations comprise, while the artificial-reality headset is operating in a default state to process data for the intermediary processing device and in accordance with a determination that an operational condition at the intermediary process device satisfies thermal-throttling criteria, operating the artificial-reality headset in a throttled state that is distinct from the default state. The throttled state causes the artificial-reality headset to reduce at least one performance characteristic associated with the default state.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

Having summarized the above example aspects, a brief description of the drawings will now be presented.

### BRIEF DESCRIPTION OF THE DRAWINGS

For a better understanding of the various described embodiments, reference should be made to the detailed description below, in conjunction with the following drawings in which like reference numerals refer to corresponding parts throughout the figures.
Figures 1A-1G illustrate an example artificial-reality headset and intermediary processing device where the artificial-reality headset approaches and exceeds a thermal-throttling temperature limit (Tₘₐₓ₋ₕ), and the intermediary processing device matches the performance of the artificial-reality headset as the artificial-reality headset is thermal throttling, in accordance with some embodiments.
Figures 2A-2G illustrate an example artificial-reality headset and intermediary processing device where the intermediary processing device approaches and exceeds a thermal-throttling temperature limit (T_{max-w}), and the artificial-reality headset matches the performance of the intermediary processing device as the intermediary processing device is thermal throttling, in accordance with some embodiments.
Figure 3 illustrates example notifications and alerts that are displayed at the artificial-reality headset when the intermediary processing device is thermal throttling, in accordance with some embodiments.
Figure 4 illustrates example notifications and alerts that are displayed at the intermediary processing device when the artificial-reality headset is thermal throttling, in accordance with some embodiments.
Figures 5A-5D illustrate an example selection of constellation leaders based on which device in the constellation is thermal throttling, in accordance with some embodiments.
Figure 6 illustrates example device states at an artificial-reality headset and at an intermediary processing device.
Figure 7 shows an example method flow chart for managing performance of a non-thermal-throttling device when performance is reduced at a thermal-throttling device, in accordance with some embodiments.
Figures 8A-8C-2 illustrate example artificial-reality systems, in accordance with some embodiments.
Figures 9A-9B illustrate an example wrist-wearable device 900, in accordance with some embodiments.
Figures 10A-10C illustrate example head-wearable devices, in accordance with some embodiments.
Figures 11A-11B illustrate an example handheld intermediary processing device, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

Embodiments of this disclosure can include or be implemented in conjunction with various types or embodiments of artificial-reality systems. Artificial reality (AR), as described herein, is any superimposed functionality and or sensory-detectable presentation provided by an artificial-reality system within a user's physical surroundings. Such ARs can include and/or represent virtual reality (VR), augmented reality, mixed artificial reality (MAR), or some combination and/or variation of one of these. For example, a user can perform a swiping in-air hand gesture to cause a song to be skipped by a song-providing application programming interface (API) providing playback at, for example, a home speaker. An AR environment, as described herein, includes, but is not limited to, VR environments (including non-immersive, semi-immersive, and fully immersive VR environments); augmented-reality environments (including marker-based augmented-reality environments, markerless augmented-reality environments, location-based augmented-reality environments, and projection-based augmented-reality environments); hybrid reality; and other types of mixed-reality environments.

Artificial-reality content can include completely generated content or generated content combined with captured (e.g., real-world) content. The artificial-reality content can include video, audio, haptic events, or some combination thereof, any of which can be presented in a single channel or in multiple channels (such as stereo video that produces a three-dimensional effect to a viewer). Additionally, in some embodiments AR can also be associated with applications, products, accessories, services, or some combination thereof, that are used, for example, to create content in an AR and/or are otherwise used in (e.g., to perform activities in) an AR.

Terminology surrounding ever-evolving extended-reality devices is constantly changing, and as such this application uses a variety of terms that in some instances can be interchangeable with other terms. While not limiting in nature, some alternative definitions are included herein. This application uses the term "Artificial Reality" to be a catchall term covering virtual reality (VR), augmented reality, mixed artificial reality (MAR), however, the term "extended-reality" can be used in place of "artificial reality" as a catchall term. The term augmented reality (commonly referred to as "AR" despite this application defining AR as artificial-reality) falls under the extended-reality catchall umbrella. The terms virtual-reality and mixed artificial reality, in some instances, can be replaced by the broader term "mixed-reality" commonly referred to as "MR," and also fall under the extended-reality catchall umbrella. This MR term is meant to cover all extended-reality experiences that do not include a direct viewing of the surrounding environment, which can include virtual reality, virtual-realities that have the surrounding environment presented to the user indirectly from data acquired from sensors of the device (e.g., SLAM cameras, cameras, ToF sensors, etc.). To contrary, and as defined in this application, augmented reality includes directly viewing the surrounding environment, e.g., through a waveguide or a lens. One skilled in the art would appreciate that this is a developing field and subsequent redefining of terms does occur and would not limit the scope of this application.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device) and/or detected via image data captured by an imaging device of a wearable device (e.g., a camera of a head-wearable device)) or a combination of the user's hands. In-air means, in some embodiments, that the user hand does not contact a surface, object, or portion of an electronic device (e.g., a head-wearable device or other communicatively coupled device, such as the wrist-wearable device); in other words, the gesture is performed in open air in three-dimensional (3D) space and without contacting a surface, an object, or an electronic device. Surface-contact gestures (contacts at a surface, object, body part of the user, or electronic device) more generally are also contemplated in which a contact (or an intention to contact) is detected at a surface (e.g., a single or double finger tap on a table, on a user's hand or another finger, on the user's leg, a couch, a steering wheel, etc.). The different hand gestures disclosed herein can be detected using image data and/or sensor data (e.g., neuromuscular signals sensed by one or more biopotential sensors (e.g., EMG sensors) or other types of data from other sensors, such as proximity sensors, time-of-flight sensors, sensors of an inertial measurement unit, etc.) detected by a wearable device worn by the user and/or other electronic devices in the user's possession (e.g., smartphones, laptops, imaging devices, intermediary devices, and/or other devices described herein).

As described herein, when a device has reached or exceeded a predefined thermal limit, the device can be performance throttled to maintain the predefined thermal limit. As a result, a thermal-throttling device can have reduced performance until the device is below the predefined thermal limit. In instances where the device is part of a system of devices, it can be wasteful to run other devices of the system at their maximum performance, as it can be a waste of power. Furthermore, unnecessarily running the other devices of the system at their maximum performance can generate unnecessary heat that can then cause the other devices to be more likely to reach or exceed a predefined thermal limit and performance throttle. Thus, the description provided herein include methods and systems for reducing performance of a non-thermal-throttling device such that the performance of the non-thermal-throttling device matches the reduced performance of the thermal-throttling device.

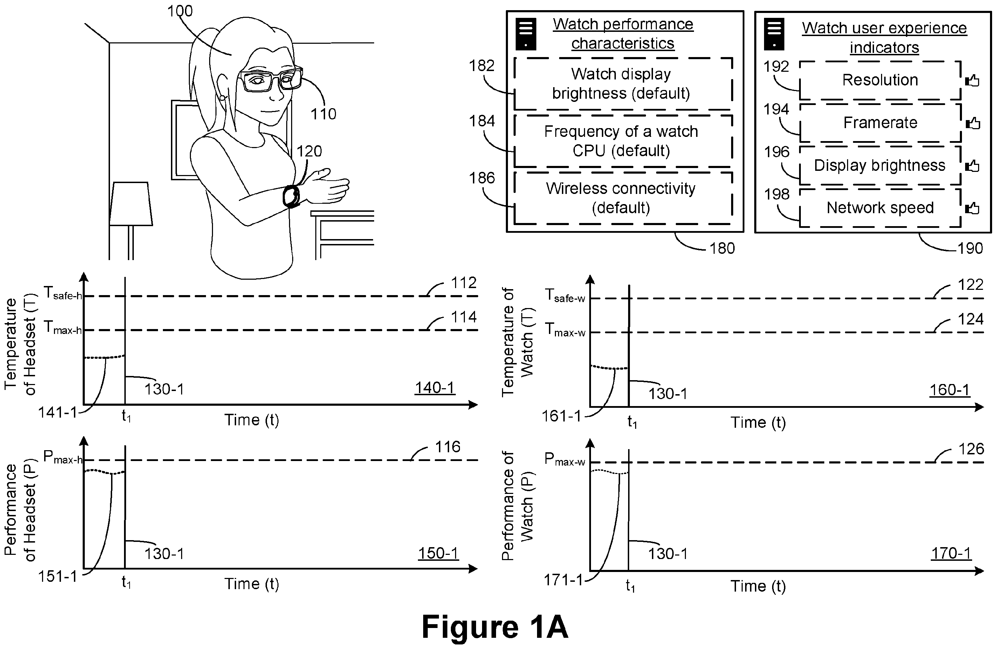

Figures 1A-1G illustrate an example of a user 100 wearing an artificial-reality headset 110 and intermediary processing device 120, where the artificial-reality headset 110 approaches and exceeds a predefined thermal-throttling temperature limit 114 (Tₘₐₓ₋ₕ), and the intermediary processing device 120 reduces its performance to match the performance of the thermal-throttling artificial-reality headset 110 to save power and reduce heat output while the artificial-reality headset 110 is thermal throttling, in accordance with some embodiments.

As illustrated in Figure 1A, the artificial-reality headset 110 is in communication with the intermediary processing device 120 (also referred to interchangeably herein as watch 120) via a wireless communication protocol. In the example illustrated in Figure 1A, the ambient temperature of the environment surrounding the artificial-reality headset 110 and the intermediary processing device 120 is an indoor environment (e.g., between 68°F and 76°F).

Figure 1A illustrates the user 100 wearing the artificial-reality headset 110 and the intermediary processing device 120 at a first point in time, t₁, in which neither the artificial-reality headset 110 nor the intermediary processing device 120 is being thermally throttled.

Chart 140-1 shows a temperature measurement of the artificial-reality headset 110 at a first point in time, t₁, as illustrated by vertical bar 130-1. Chart 140-1 illustrates a horizontal threshold line 112 (labeled 'T_{safe-h}') that indicates a maximum safe temperature the artificial-reality headset 110 can reach without being harmful and/or uncomfortable for the user 100. Chart 140-1 also illustrates another horizontal threshold line 114 (labeled 'Tₘₐₓ₋ₕ') that indicates a maximum temperature the artificial-reality headset 110 will reach before thermal throttling. The amount of thermal-throttling of the artificial-reality headset 110 can vary depending on how much the current temperature of the artificial-reality headset 110 has exceeded Tₘₐₓ₋ₕ 114. In some embodiments, the artificial-reality headset 110 will shut off if the Tₘₐₓ₋ₕ 114 is exceeded for an extended period or if the temperature of the device gets too close to T_{safe-h} 112. At time t₁, as indicated by the vertical bar 130-1, the temperature of the artificial-reality headset 110, indicated by line 141-1, is below Tₘₐₓ₋ₕ 114, which means thermal throttling is not required for the artificial-reality headset 110 at this time.

The temperature of the artificial-reality headset 110 and/or the intermediary processing device 120 can be determined at various portions of the artificial-reality headset 110 and the intermediary processing device 120, respectively. For example, the temperature of the artificial-reality headset 110 and/or the intermediary processing device 120 is determined at the processing unit (e.g., central processing unit, graphics processing unit, system-on-chip) and/or at the interface between the respective device and the user 100. The temperature of the artificial-reality headset 110 and/or the intermediary processing device 120 can be determined by averaging temperature measurements taken at various portions of the artificial-reality headset 110 and the intermediary processing device 120, respectively.

In some embodiments, in accordance with a determination that an operational condition (e.g., temperature of the artificial-reality headset 110 approaching or exceeding Tₘₐₓ₋ₕ 114) at the artificial-reality headset 110 satisfies thermal-throttling criteria, the artificial-reality headset 110 begins thermal throttling. In some embodiments, the amount of thermal throttling of the artificial-reality headset 110 varies based on how much the current temperature of the artificial-reality headset 110 has exceeded Tₘₐₓ₋ₕ 114.

In some embodiments, the reduced performance of the artificial-reality headset 110 due to thermal throttling of the artificial-reality headset 110 is adjusted by adjusting one or more headset performance characteristics. Adjusting the one or more headset performance characteristics can be based on one or more headset user experience indicators. The one or more headset performance characteristics of the artificial-reality headset 110 can include a voltage of the artificial-reality headset CPU, a frequency of the artificial-reality headset CPU, a wireless connectivity at the artificial-reality headset, a cellular throughput at the artificial-reality headset 110, a video or audio transmission or playback quality at the artificial-reality headset 110, an artificial-reality headset display setting (e.g., on or off state, brightness, color depth, resolution, refresh rate, and/or field of view), and/or a leader status of a system of devices (e.g., whether the artificial-reality headset 110 is the leader responsible for receiving and transmitting states associated with devices in the system of devices). In some embodiments, the artificial-reality device 110 continues to thermal throttle and operate with reduced performance until a determination that the operational condition at the artificial-reality headset 110 no longer satisfies the thermal-throttling criteria.

Chart 150-1 shows a performance metric of the artificial-reality headset 110 at the first point in time, t₁, as illustrated by vertical bar 130-1. Chart 150-1 illustrates a horizontal maximum performance threshold line 116 (labeled 'Pₘₐₓ₋ₕ') that indicates a maximum performance threshold that the artificial-reality headset 110 is capable of. At the time t₁, as indicated by the vertical bar 130-1, the currently utilized performance of the artificial-reality headset 110, as indicated by line 151-1, is approximate to the maximum performance threshold Pₘₐₓ₋ₕ 116. For example, because the artificial-reality headset 110 is not thermal throttling, the artificial-reality headset can utilize up to the maximum performance threshold Pₘₐₓ₋ₕ 116. In some embodiments, the currently utilized performance of the artificial-reality headset 110 can be less than the maximum performance threshold Pₘₐₓ₋ₕ 116 based on current operations (e.g., video playback may utilize less performance than video game rendering) of the artificial-reality headset 110.

Chart 160-1 shows a temperature measurement of the intermediary processing device 120 at the first point in time, t₁, as illustrated by vertical bar 130-1. Chart 160-1 illustrates a horizontal threshold line 122 (labeled 'T_{safe-w}') that indicates a maximum safe temperature the intermediary processing device 120 can reach without being harmful and/or uncomfortable for the user 100. Chart 160-1 also illustrates another horizontal threshold line 124 (labeled 'T_{max-w}') that indicates a maximum temperature the intermediary processing device 120 will reach before thermal throttling. In some embodiments, the intermediary processing device 120 will shut off if the T_{max-w} is exceeded for an extended period or if the temperature of the device gets too close to T_{safe-w}. At time t₁, as indicated by the vertical bar 130-1, the temperature of the intermediary processing device, indicated by line 161-1, is below T_{max-w}, which means thermal throttling is not required for the intermediary processing device 120 at this time.

Chart 170-1 shows a performance metric of the intermediary processing device 120 at the first point in time, t₁, as illustrated by vertical bar 130-1. Chart 170-1 illustrates a horizontal threshold line 126 (labeled 'P_{max-w}') that indicates a maximum performance threshold that the intermediary processing device 120 is capable of. At the time t₁, as indicated by the vertical bar 130-1, the currently utilized performance of the intermediary processing device 120, as indicated by line 171-1, is approximate to P_{max-w} 126. For example, because the intermediary processing device 120 is not thermal throttling, the intermediary processing device 120 can utilize up to the maximum performance threshold P_{max-w} 126. In some embodiments, the currently utilized performance of the intermediary processing device 120 can be less than the maximum performance threshold P_{max-w} 126 based on current operations (e.g., a Wi-Fi connection may utilize less performance than a cellular connection) of the intermediary processing device 120.

Table 180 shows watch performance characteristics. As illustrated, the watch performance characteristics include at least a watch display brightness 182, a frequency of a watch CPU 184, and a wireless connectivity 186. The watch performance characteristics can be adjusted when the intermediary processing device 120 is throttled (e.g., thermal throttling of the intermediary processing device 120 or throttling of the intermediary processing device 120 to match the performance of another device in a system of devices). At time t₁, neither the artificial-reality headset 110 nor the intermediary processing device 120 is throttled. All watch performance characteristics are in a default setting at time t₁ when neither device is throttled. In some embodiments, the default setting for the watch performance characteristics is the setting that yields the maximum performance threshold P_{max-w} 126 at the intermediary processing device 120.

Table 190 shows watch user experience indicators. The watch user experience indicators can include at least a resolution 192, a framerate 194, a display brightness 196, and a network speed 198. The watch user experience indicators can represent how well the user 100 experiences the intermediary processing device to be operating. As shown in table 190, the watch user experience indicators at time t₁ are satisfied. In some embodiments, the watch user experience indicators are satisfied when all watch performance characteristics are operating in the default setting.

In some embodiments, watch user experience indicators that impact the user experience more are prioritized. In some embodiments, the threshold for the watch user experience indicators can be set by the artificial-reality headset 110, intermediary processing device 120, and/or the user 100.

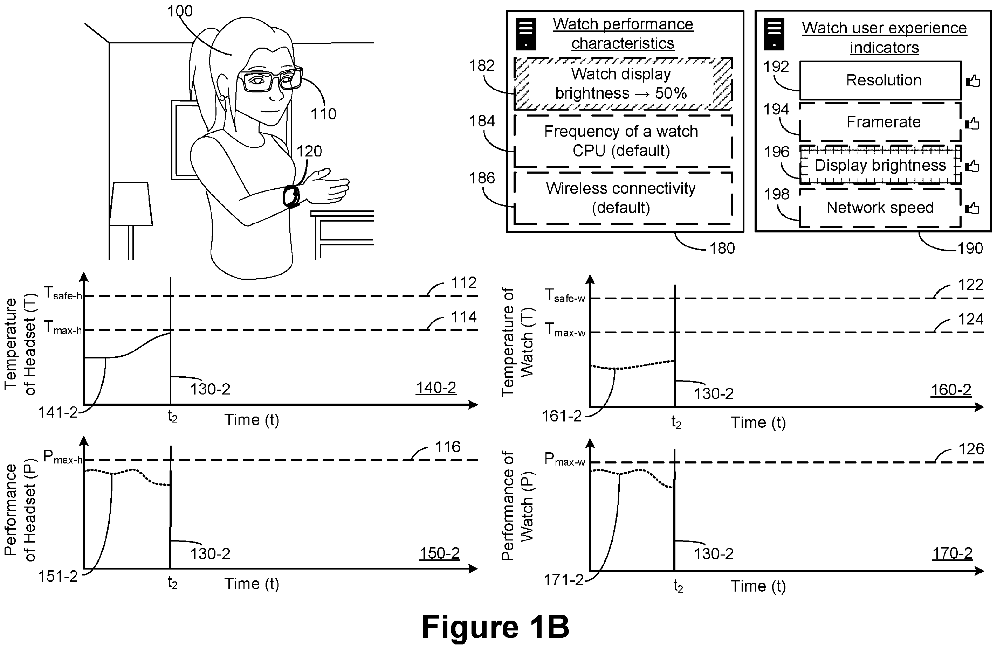

Figure 1B illustrates the user 100 wearing the artificial-reality headset 110 and the intermediary processing device 120 at the second point in time, t₂, in which the artificial-reality headset 110 temperature has increased and is approaching Tₘₐₓ₋ₕ 114, causing the artificial-reality headset 110 to begin thermal throttling. The intermediary processing device 120 reduces its performance to match the performance of the thermal-throttling artificial-reality headset 110.

Chart 140-2 shows a temperature measurement of the artificial-reality headset 110 at the second point in time, t₂, as illustrated by vertical bar 130-2. Chart 140-2 illustrates the horizontal threshold line T_{safe-h} 112 that indicates the maximum safe temperature the artificial-reality headset 110 can reach without being harmful and/or uncomfortable for the user 100. Chart 140-2 also illustrates the horizontal threshold line Tₘₐₓ₋ₕ 114 that indicates the maximum temperature the artificial-reality headset 110 will reach before thermal throttling. In some embodiments, the artificial-reality headset 110 will shut off if the Tₘₐₓ₋ₕ 114 is exceeded for an extended period or if the temperature of the device gets too close to T_{safe-h} 112 At time t₂, as indicated by the vertical bar 130-2, the temperature of the artificial-reality headset 110, indicated by line 141-2, has increased to Tₘₐₓ₋ₕ 114. In some embodiments, when the artificial-reality headset 110 approaches Tₘₐₓ₋ₕ at a rate that would result in the temperature of the artificial-reality headset 110 to exceed Tₘₐₓ₋ₕ (e.g., if no action is taken to change the rate of temperature increase at the artificial-reality headset 110), the artificial-reality headset 110 will begin thermal throttling.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the artificial-reality headset 110 approaching or exceeding Tₘₐₓ₋ₕ 114) at the artificial-reality headset 110 satisfies thermal-throttling criteria, the artificial-reality headset 110 begins thermal throttling. In some embodiments, the amount of thermal throttling of the artificial-reality headset 110 varies based on how much the current temperature of the artificial-reality headset 110 has exceeded Tₘₐₓ₋ₕ 114.

In some embodiments, the reduced performance of the artificial-reality headset 110 due to thermal throttling of the artificial-reality headset 110 is adjusted by adjusting the one or more headset performance characteristics. Adjusting the one or more headset performance characteristics can be based on one or more headset user experience indicators. The one or more headset performance characteristics of the artificial-reality headset 110 can include the voltage of the artificial-reality headset CPU, the frequency of the artificial-reality headset CPU, the wireless connectivity at the artificial-reality headset, the cellular throughput at the artificial-reality headset, the video or audio transmission or playback quality at the artificial-reality headset, the artificial-reality headset display setting (e.g., on or off state, brightness, color depth, resolution, refresh rate, and/or field of view), and/or a leader status of a system of devices (e.g., whether the artificial-reality headset 110 is the leader responsible for receiving and transmitting states associated with devices in the system of devices). In some embodiments, the artificial-reality device 110 continues to thermal throttle and operate with reduced performance until a determination that the operational condition at the artificial-reality headset 110 no longer satisfies the thermal-throttling criteria.

Chart 150-2 shows a performance metric of the artificial-reality headset 110 at the second point in time, t₂, as illustrated by the vertical bar 130-2. Chart 150-2 illustrates the horizontal threshold line Pₘₐₓ₋ₕ 116 that indicates the maximum performance threshold that the artificial-reality headset 110 is capable of. At the time t₂, as indicated by the vertical bar 130-2, the currently utilized performance of the artificial-reality headset 110, as indicated by line 151-2, has reduced as compared to the currently utilized performance of the artificial-reality headset 110 at time t₁. In some embodiments, the reduction in currently utilized performance of the artificial-reality headset 110 at time t₂ can be in response to the artificial-reality headset thermal throttling as it approaches Tₘₐₓ₋ₕ.

Chart 160-2 shows a temperature measurement of the intermediary processing device 120 at the second point in time, t₂, as illustrated by vertical bar 130-2. Chart 160-2 illustrates the horizontal threshold line T_{safe-w} 122 that indicates the maximum safe temperature the intermediary processing device 120 can reach without being harmful and/or uncomfortable for the user 100. Chart 160-2 also illustrates the horizontal threshold line T_{max-w} 124 that indicates the maximum temperature the intermediary processing device 120 will reach before thermal throttling. In some embodiments, the intermediary processing device 120 will shut off if the T_{max-w} is exceeded for an extended period or if the temperature of the device gets too close to T_{safe-w}. At time t₂, as indicated by the vertical bar 130-2, the temperature of the intermediary processing device 120, as indicated by line 161-2, is below T_{max-w}, which means thermal throttling is not required for the intermediary processing device 120 at this time.

Chart 170-2 shows a performance metric of the intermediary processing device 120 at the second point in time, t₂, as illustrated by bar 130-2. Chart 170-2 illustrates the horizontal threshold line P_{max-w} 126 that indicates the maximum performance threshold that the intermediary processing device 120 is capable of. At the time t₂, as indicated by the vertical bar 130-2, the currently utilized performance of the intermediary processing device 120, as indicated by the line 171-2, is reduced as compared to the currently utilized performance of the intermediary processing device 120 at time t₁. In some embodiments, the reduction in the currently utilized performance of the intermediary processing device 120 at time t₂ can be in response to the artificial-reality headset 110 thermal throttling and reducing performance of the artificial-reality headset 110. Stated another way, the intermediary processing device 120 may reduce its performance to match the performance of the artificial-reality headset 110. The reduction in the currently utilized performance of the intermediary processing device 120 can be achieved via reducing one or more performance characteristics of the intermediary processing device 120.

Table 180 shows the watch performance characteristics. As illustrated, the watch performance characteristics include at least the watch display brightness 182, the frequency of a watch CPU 184, and the wireless connectivity 186. In some embodiments, the watch performance characteristics 180 further include the voltage of the watch CPU, the cellular throughput associated with intermediary processing device 120, and the voice call quality between the intermediary processing device 120 and the artificial-reality headset 110. The watch performance characteristics can be adjusted when the intermediary processing device 120 is throttled to match the current performance of the artificial-reality headset 110. At time t₂, the watch display brightness 162 is adjusted from the default setting (e.g., 100% of the maximum brightness of the watch display brightness) to 50% of the maximum brightness of the watch display brightness to reduce the performance at the intermediary processing device 120. As an example, the artificial-reality headset 110 decreases its display brightness when thermal throttling, and the intermediary processing device 120 also decreases the watch display brightness 162 such that both displays are approximately the same brightness.

Table 190 shows the watch user experience indicators. The watch user experience indicators can include at least the resolution 192, the framerate 194, the display brightness 196, and the network speed 198. The watch user experience indicators can represent how well the user 100 experiences the intermediary processing device 120 to be operating. As shown in table 190, the watch user experience indicators at time t₂ remain satisfied even with the watch display brightness 182 adjusted to 50%. In some embodiments, because all the watch user experience indicators are satisfied, the intermediary processing device 120 continues to throttle via the reduction in the watch display brightness 182.

In some embodiments, watch user experience indicators that impact the user experience more are prioritized. In some embodiments, the threshold for the watch user experience indicators can be set by the artificial-reality headset 110, intermediary processing device 120, and/or the user 100.

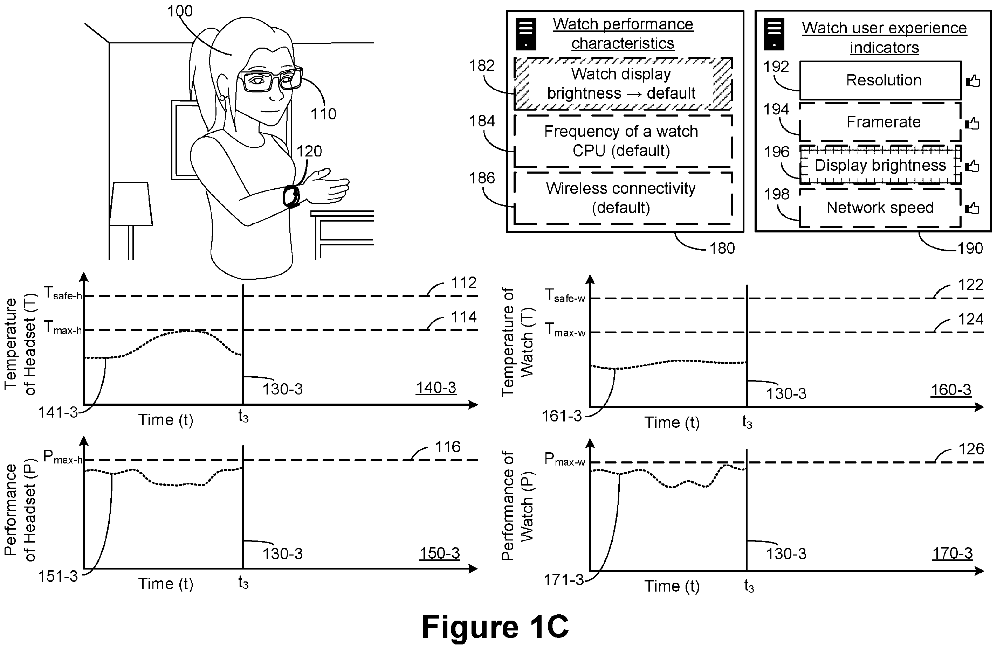

Figure 1C illustrates the user 100 wearing the artificial-reality headset 110 and the intermediary processing device 120 at the third point in time, t₃, as illustrated by vertical bar 130-3, in which the artificial-reality headset 110 temperature has decreased from Tₘₐₓ₋ₕ 114, causing the artificial-reality headset to stop thermal throttling. The intermediary processing device 120 increases its performance to match the performance of the now non-thermal-throttling artificial-reality headset 110.

Chart 140-3 shows a temperature measurement of the artificial-reality headset 110 at the third point in time, t₃, as illustrated by vertical bar 130-3. Chart 140-3 illustrates the horizontal threshold line T_{safe-h} 112 that indicates the maximum safe temperature the artificial-reality headset 110 can reach without being harmful and/or uncomfortable for the user 100. Chart 140-3 also illustrates the horizontal threshold line Tₘₐₓ₋ₕ 114 that indicates the maximum temperature the artificial-reality headset 110 will reach before thermal throttling. In some embodiments, the artificial-reality headset 110 will shut off if the Tₘₐₓ₋ₕ is exceeded for an extended period or if the temperature of the device gets too close to T_{safe-h}. At time t₃, as indicated by the vertical bar 130-3, the temperature of the artificial-reality headset 110, indicated by line 141-3, has decreased from Tₘₐₓ₋ₕ 114. The temperature of the artificial-reality headset 110 is now below Tₘₐₓ₋ₕ, which means thermal throttling is not required for the artificial-reality headset 110 at this time.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by headset 110 and the intermediary processing device 120, respectively.

In some embodiments, in accordance with a determination that an operational condition (e.g., temperature of the artificial-reality headset 110 approaching or exceeding Tₘₐₓ₋ₕ 114) at the artificial-reality headset 110 satisfies thermal-throttling criteria, the artificial-reality headset 110 begins thermal throttling. In some embodiments, the amount of thermal throttling of the artificial-reality headset 110 varies based on how much the current temperature of the artificial-reality headset 110 has exceeded Tₘₐₓ₋ₕ 114.

In some embodiments, the reduced performance of the artificial-reality headset 110 due to thermal-throttling of the artificial-reality headset 110 is adjusted by adjusting the one or more headset performance characteristics. Adjusting the one or more headset performance characteristics can be based on one or more headset user experience indicators. The one or more headset performance characteristics of the artificial-reality headset 110 can include the voltage of the artificial-reality headset CPU, the frequency of the artificial-reality headset CPU, the wireless connectivity at the artificial-reality headset, the cellular throughput at the artificial-reality headset, the video or audio transmission or playback quality at the artificial-reality headset, the artificial-reality headset display setting (e.g., on or off state, brightness, color depth, resolution, refresh rate, and/or field of view), and/or a leader status of a system of devices (e.g., whether the artificial-reality headset 110 is the leader responsible for receiving and transmitting states associated with devices in the system of devices). In some embodiments, the artificial-reality device 110 continues to thermal throttle and operate with reduced performance until a determination that the operational condition at the artificial-reality headset 110 no longer satisfies the thermal-throttling criteria.

Chart 150-3 shows a performance metric of the artificial-reality headset 110 at the third point in time, t₃, as illustrated by vertical bar 130-3. Chart 150-3 illustrates the horizontal threshold line Pₘₐₓ₋ₕ 116 that indicates a maximum performance threshold that the artificial-reality headset 110 is capable of. At the time t₃, as indicated by the vertical bar 130-3, the currently utilized performance of the artificial-reality headset 110, as indicated by line 151-3, has increased as compared to the reduced currently utilized performance of the artificial-reality headset 110 at time t₂. The currently utilized performance of the artificial-reality headset, as indicated by line 151-3, is approximate to the maximum performance threshold Pₘₐₓ₋ₕ 116. For example, because the artificial-reality headset 110 is not thermal throttling, the artificial-reality headset can utilize up to the maximum performance threshold Pₘₐₓ₋ₕ 116.

Chart 160-3 shows a temperature measurement of the intermediary processing device 120 at the third point in time, t₃, as illustrated by vertical bar 130-3. Chart 160-3 illustrates the horizontal threshold line T_{safe-w} 122 that indicates the maximum safe temperature the intermediary processing device 120 can reach without being harmful and/or uncomfortable for the user 100. Chart 160-3 also illustrates the horizontal threshold line T_{max-w} 124 that indicates the maximum temperature the intermediary processing device 120 will reach before thermal throttling. In some embodiments, the intermediary processing device 120 will shut off if the T_{max-w} is exceeded for an extended period or if the temperature of the device is greater than or equal to T_{safe-w}. At time t₃, as indicated by the vertical bar 130-3, the temperature of the intermediary processing device, indicated by line 161-3, is below T_{max-w}, which means thermal throttling is not required for the intermediary processing device 120 at this time.

Chart 170-3 shows a performance metric of the intermediary processing device 120 at the third point in time, t₃ as illustrated by bar 130-3. Chart 170-3 illustrates a horizontal threshold line P_{max-w} 126 that indicates the maximum performance threshold that the intermediary processing device 120 is capable of. At the time t₃, as indicated by the vertical bar 130-3, the currently utilized performance of the intermediary processing device 120, as indicated by line 171-3, is increased as compared to the reduced currently utilized performance of the intermediary processing device 120 at time t₂. In some embodiments, the increase in the currently utilized performance of the intermediary processing device 120 at time t₃ can be in response to the artificial-reality headset 110 no longer thermal throttling, and as a result increasing or reverting the performance of the artificial-reality headset 110 back to the non-throttled setting. Stated another way, the intermediary processing device 120 may increase its performance to match the performance of the artificial-reality headset 110. For example, because the intermediary processing device 120 and the artificial-reality headset are not thermal throttling, the intermediary processing device can utilize up to the maximum performance threshold P_{max-w} 126.

Table 180 shows the watch performance characteristics. As illustrated, the watch performance characteristics include at least the watch display brightness 182, the frequency of a watch CPU 184, and the wireless connectivity 186. In some embodiments, the watch performance characteristics 180 further include the voltage of the watch CPU, the cellular throughput associated with intermediary processing device 120, and the voice call quality between the intermediary processing device 120 and the artificial-reality headset 110. The watch performance characteristics can be adjusted when the intermediary processing device 120 is throttled (e.g., thermal throttling of the intermediary processing device 120 or throttling of the intermediary processing device 120 to match the performance of another device in a system of devices) to match the current performance of the artificial-reality headset 110. At time t₃, the watch performance characteristics are reverted to the default setting. For example, the watch display brightness 162 is adjusted from 50% of the maximum brightness of the watch display brightness to the default setting. All the watch performance characteristics can continue to be in a default setting while neither the artificial-reality headset 110 nor the intermediary processing device 120 is throttled. In some embodiments, the default setting for the watch performance characteristics is the setting that yields the maximum performance threshold P_{max-w} 126 at the intermediary processing device 120.

Table 190 shows the watch user experience indicators. The watch user experience indicators can include at least the resolution 192, the framerate 194, the display brightness 196, and the network speed 198. The watch user experience indicators can represent how well the user 100 experiences the intermediary processing device to be operating. As shown in table 190, the watch user experience indicators at time t₃ remain satisfied as the watch display brightness 162 is reverted from 50% to the default setting. In some embodiments, the watch user experience indicators are satisfied when all watch performance characteristics are operating in the default setting.

In some embodiments, watch user experience indicators that impact the user experience more are prioritized. In some embodiments, the threshold for the watch user experience indicators can be set by the artificial-reality headset 110, intermediary processing device 120, and/or the user 100.

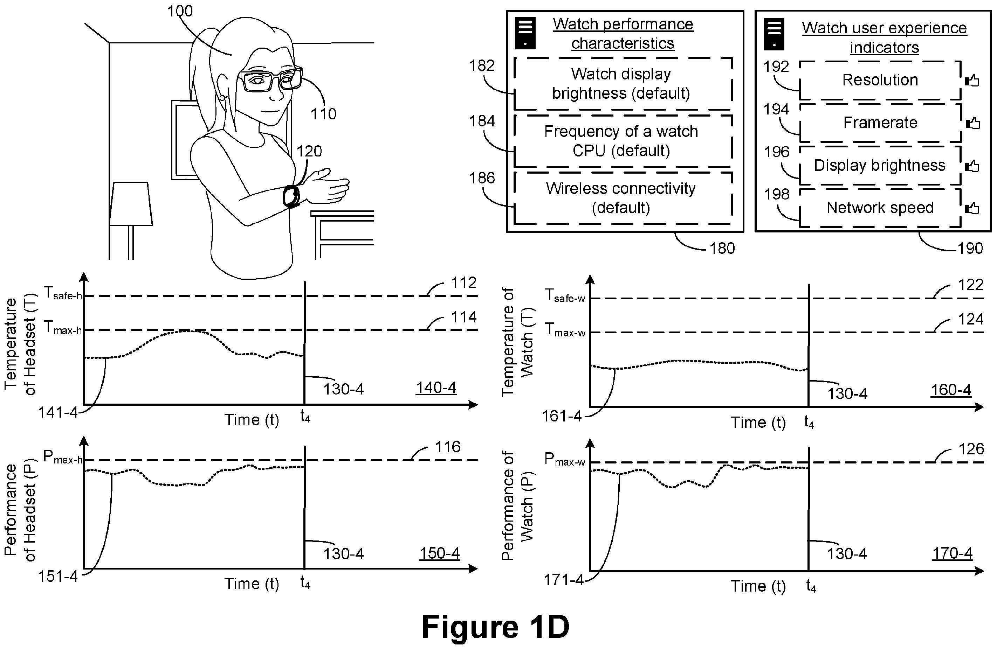

Figure 1D illustrates a user 100 wearing an artificial-reality headset 110 and an intermediary processing device 120 at a fourth point in time, t₄, in which the artificial-reality headset 110 and the intermediary processing device 120 have returned to a default operating condition. For example, neither the artificial-reality headset 110 nor the intermediary processing device 120 is being thermally throttled and neither has reduced performance.

Chart 140-4 shows a temperature measurement of the artificial-reality headset 110 at a fourth point in time, t₄, as illustrated by vertical bar 130-4. Chart 140-4 illustrates the horizontal threshold line T_{safe-h} 112 that indicates the maximum safe temperature the artificial-reality headset 110 can reach without being harmful and/or uncomfortable for the user 100. Chart 140-4 also illustrates the horizontal threshold line Tₘₐₓ₋ₕ 114 that indicates the maximum temperature the artificial-reality headset 110 will reach before thermal throttling. In some embodiments, the artificial-reality headset 110 will shut off if the Tₘₐₓ₋ₕ 114 is exceeded for an extended period or if the temperature of the device gets too close to T_{safe-h} 112. At time t₄, as indicated by the vertical bar 130-4, the temperature of the artificial-reality headset 110, indicated by line 141-4, is below Tₘₐₓ₋ₕ 114, which means thermal throttling is not required for the artificial-reality headset 110 at this time.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the artificial-reality headset 110 approaching or exceeding Tₘₐₓ₋ₕ 114) at the artificial-reality headset 110 satisfies thermal-throttling criteria, the artificial-reality headset 110 begins thermal throttling. In some embodiments, the amount of thermal throttling of the artificial-reality headset 110 varies based on how much the current temperature of the artificial-reality headset 110 has exceeded Tₘₐₓ₋ₕ 114.

In some embodiments, the reduced performance of the artificial-reality headset 110 due to thermal throttling of the artificial-reality headset 110 is adjusted by adjusting the one or more headset performance characteristics. Adjusting the one or more headset performance characteristics can be based on one or more headset user experience indicators. The one or more headset performance characteristics of the artificial-reality headset 110 can include the voltage of the artificial-reality headset CPU, the frequency of the artificial-reality headset CPU, the wireless connectivity at the artificial-reality headset, the cellular throughput at the artificial-reality headset, the video or audio transmission or playback quality at the artificial-reality headset, the artificial-reality headset display setting (e.g., on or off state, brightness, color depth, resolution, refresh rate, and/or field of view), and/or a leader status of a system of devices (e.g., whether the artificial-reality headset 110 is the leader responsible for receiving and transmitting states associated with devices in the system of devices). In some embodiments, the artificial-reality device 110 continues to thermal throttle and operate with reduced performance until a determination that the operational condition at the artificial-reality headset 110 no longer satisfies the thermal-throttling criteria.

Chart 150-4 shows a performance metric of the artificial-reality headset 110 at the fourth point in time, t₄, as illustrated by vertical bar 130-4. Chart 150-4 illustrates the horizontal threshold line Pₘₐₓ₋ₕ 116 that indicates the maximum performance threshold that the artificial-reality headset 110 is capable of. At the time t₄, as indicated by the vertical bar 130-4, the currently utilized performance of the artificial-reality headset, as indicated by line 151-4, is approximate to the maximum performance threshold Pₘₐₓ₋ₕ 116. For example, because the artificial-reality headset 110 is not thermal throttling, the artificial-reality headset can utilize up to the maximum performance threshold Pₘₐₓ₋ₕ 116.

Chart 160-4 shows a temperature measurement of the intermediary processing device 120 at the fourth point in time, t₄, as illustrated by vertical bar 130-4. Chart 160-4 illustrates the threshold line T_{safe-w} 112 that the intermediary processing device 120 can reach without being harmful and/or uncomfortable for the user 100. Chart 160-1 also illustrates the horizontal threshold line T_{max-w} 124 that indicates a maximum temperature the intermediary processing device 120 will reach before thermal throttling. In some embodiments, the intermediary processing device 120 will shut off if the T_{max-w} 124 is exceeded for an extended period or if the temperature of the device gets too close to T_{safe-w} 122. At time t₄, as indicated by the vertical bar 130-4, the temperature of the intermediary processing device, indicated by line 161-4, is below T_{max-w} 124, which means thermal throttling is not required for the intermediary processing device 120 at this time.

Chart 170-4 shows the performance metric of the intermediary processing device 120 at the fourth point in time, t₄, as illustrated by vertical bar 130-4. Chart 170-4 illustrates the horizontal threshold line P_{max-w} 126 that indicates a maximum performance threshold that the intermediary processing device 120 is capable of. At the time t₄, as indicated by the vertical bar 130-4, the currently utilized performance of the intermediary processing device 120, as indicated by line 171-4, is approximate to P_{max-w} 126. For example, because the intermediary processing device 120 is not thermal throttling, the intermediary processing device can utilize up to the maximum performance threshold P_{max-w} 126.

Table 180 shows the watch performance characteristics. As illustrated, the watch performance characteristics include at least the watch display brightness 182, the frequency of a watch CPU 184, and the wireless connectivity 186. In some embodiments, the watch performance characteristics 180 further include the voltage of the watch CPU, the cellular throughput associated with intermediary processing device 120, and the voice call quality between the intermediary processing device 120 and the artificial-reality headset 110. The watch performance characteristics can be adjusted when the intermediary processing device 120 is throttled (e.g., thermal throttling of the intermediary processing device 120 or throttling of the intermediary device 120 to match the performance of another device in a system of devices) to match the current performance of the artificial-reality headset 110. At time t₄, neither the artificial-reality headset 110 nor the intermediary processing device 120 is throttled. All watch performance characteristics are in a default setting at time t₄ when neither device is throttled. In some embodiments, the default setting for the watch performance characteristics is the setting that yields the maximum performance threshold P_{max-w} 126 at the intermediary processing device 120.

Table 190 shows the watch user experience indicators. The watch user experience indicators can include at least the resolution 192, the framerate 194, the display brightness 196, and the network speed 198. The watch user experience indicators can represent how well the user 100 experiences the intermediary processing device to be operating. As shown in table 190, the watch user experience indicators at time t₄ are satisfied. In some embodiments, the watch user experience indicators are satisfied when all watch performance characteristics are operating in the default setting.

In some embodiments, watch user experience indicators that impact the user experience more are prioritized. In some embodiments, the threshold for the watch user experience indicators can be set by the artificial-reality headset 110, intermediary processing device 120, and/or the user 100.

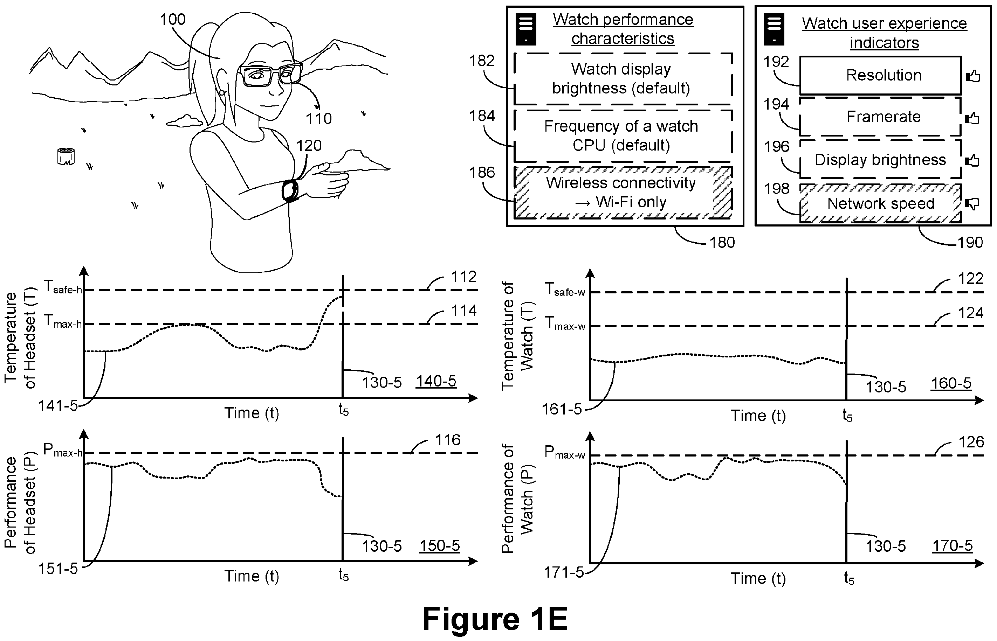

Figure 1E illustrates the user 100 wearing the artificial-reality headset 110 and the intermediary processing device 120 at the fifth point in time, t₅, in which the artificial-reality headset 110 temperature has exceeded and Tₘₐₓ₋ₕ 114 when the user 100 steps outside, causing the artificial-reality headset to begin thermal throttling. In the example illustrated by Figure 1E, the outside temperature is higher than the indoor temperature as illustrated by Figures 1A-1D. The intermediary processing device 120 reduces its performance to match the performance of the thermal-throttling artificial-reality headset 110.

Chart 140-5 shows a temperature measurement of the artificial-reality headset 110 at the fifth point in time, t₅, as illustrated by vertical bar 130-5. Chart 140-5 illustrates the horizontal threshold line T_{safe-h} 112 that indicates the maximum safe temperature the artificial-reality headset 110 can reach without being harmful and/or uncomfortable for the user 100. Chart 140-5 also illustrates the horizontal threshold line Tₘₐₓ₋ₕ 114 that indicates the maximum temperature the artificial-reality headset 110 will reach before thermal throttling. In some embodiments, the artificial-reality headset 110 will shut off if the Tₘₐₓ₋ₕ 114 is exceeded for an extended period or if the temperature of the device gets too close to T_{safe-h} 112. At time t₅, as indicated by the vertical bar 130-5, the temperature of the artificial-reality headset 110, indicated by line 141-5, has increased past Tₘₐₓ₋ₕ 114 and is approaching T_{safe-h} 112, which means the artificial-reality headset 110 will begin thermal throttling.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the artificial-reality headset 110 approaching or exceeding Tₘₐₓ₋ₕ 114) at the artificial-reality headset 110 satisfies thermal-throttling criteria, the artificial-reality headset 110 begins thermal throttling. In some embodiments, the amount of thermal throttling of the artificial-reality headset 110 varies based on how much the current temperature of the artificial-reality headset 110 has exceeded Tₘₐₓ₋ₕ 114.

In some embodiments, the reduced performance of the artificial-reality headset 110 due to thermal-throttling of the artificial-reality headset 110 is adjusted by adjusting the one or more headset performance characteristics. Adjusting the one or more headset performance characteristics can be based on one or more headset user experience indicators. The one or more headset performance characteristics of the artificial-reality headset 110 can include the voltage of the artificial-reality headset CPU, the frequency of the artificial-reality headset CPU, the wireless connectivity at the artificial-reality headset, the cellular throughput at the artificial-reality headset, the video or audio transmission or playback quality at the artificial-reality headset, the artificial-reality headset display setting (e.g., on or off state, brightness, color depth, resolution, refresh rate, and/or field of view), and/or a leader status of a system of devices (e.g., whether the artificial-reality headset 110 is the leader responsible for receiving and transmitting states associated with devices in the system of devices). In some embodiments, the artificial-reality device 110 continues to thermal throttle and operate with reduced performance until a determination that the operational condition at the artificial-reality headset 110 no longer satisfies the thermal-throttling criteria.

Chart 150-5 shows a performance metric of the artificial-reality headset 110 at the fifth point in time, t₅, as illustrated by the vertical bar 130-5. Chart 150-5 illustrates the horizontal threshold line Pₘₐₓ₋ₕ 116 that indicates the maximum performance threshold that the artificial-reality headset 110 is capable of. At the time t₅, as indicated by the vertical bar 130-5, the currently utilized performance of the artificial-reality headset 110, as indicated by line 151-5, has reduced as compared to the currently utilized performance of the artificial-reality headset 110 at time t₄. In some embodiments, the reduction in currently utilized performance of the artificial-reality headset 110 at time t₅ is in response to the artificial-reality headset thermal throttling as it exceeds Tₘₐₓ₋ₕ.

Chart 160-5 shows a temperature measurement of the intermediary processing device 120 at the fifth point in time, t₅, as illustrated by vertical bar 130-5. Chart 160-5 illustrates the horizontal threshold line T_{safe-w} 122 that indicates the maximum safe temperature the intermediary processing device 120 can reach without being harmful and/or uncomfortable for the user 100. Chart 160-5 also illustrates the horizontal threshold line T_{max-w} 124 that indicates the maximum temperature the intermediary processing device 120 will reach before thermal throttling. In some embodiments, the intermediary processing device 120 will shut off if the T_{max-w} is exceeded for an extended period or if the temperature of the device gets too close to T_{safe-w}. At time t₅, as indicated by the vertical bar 130-5, the temperature of the intermediary processing device 120, as indicated by line 161-5, is below T_{max-w}, which means thermal throttling is not required for the intermediary processing device 120 at this time.

Chart 170-5 shows a performance metric of the intermediary processing device 120 at the fifth point in time, t₅, as illustrated by bar 130-5. Chart 170-5 illustrates the horizontal threshold line P_{max-w} 126 that indicates the maximum performance threshold that the intermediary processing device 120 is capable of. At the time t₅, as indicated by the vertical bar 130-5, the currently utilized performance of the intermediary processing device 120, as indicated by the line 171-5, is reduced as compared to the currently utilized performance of the intermediary processing device 120 at time t₄. The reduction in the currently utilized performance of the intermediary processing device 120 at time t₅ can be in response to the artificial-reality headset 110 thermal throttling and, as a result, reducing performance at the artificial-reality headset 110. Stated another way, the intermediary processing device 120 may reduce its performance to match the performance of the artificial-reality headset 110. The reduction in the currently utilized performance of the intermediary processing device 120 can be achieved via reducing one or more performance characteristics of the intermediary processing device 120.

Table 180 shows the watch performance characteristics. As illustrated, the watch performance characteristics include at least the watch display brightness 182, the frequency of a watch CPU 184, and the wireless connectivity 186. In some embodiments, the watch performance characteristics 180 further include the voltage of the watch CPU, the cellular throughput associated with intermediary processing device 120, and the voice call quality between the intermediary processing device 120 and the artificial-reality headset 110. The watch performance characteristics can be adjusted when the intermediary processing device 120 is throttled (e.g., thermal throttling of the intermediary processing device 120 or throttling of the intermediary processing device 120 to match the performance of another device in a system of devices) to match the current performance of the artificial-reality headset 110. At time t₅, the wireless connectivity 186 is adjusted from the default setting to Wi-Fi only to reduce the performance at the intermediary processing device 120. The default setting of the wireless connectivity 186 can include a concurrent connection via Wi-Fi and a cellular connection.

Table 190 shows the watch user experience indicators. The watch user experience indicators can include at least the resolution 192, the framerate 194, the display brightness 196, and the network speed 198. The watch user experience indicators can represent how well the user 100 experiences the intermediary processing device to be operating. As shown in table 190, not all the watch user experience indicators at time t₅ are satisfied. The network speed 198 is not satisfied when the wireless connectivity 186 reduced from default to Wi-Fi only. Because at least one of the watch user experience indicators is not satisfied, the intermediary processing device 120 can revert all the watch performance characteristics to the default setting and reduce the performance of a different watch performance characteristic.

In some embodiments, watch user experience indicators that impact the user experience more are prioritized. In some embodiments, the threshold for the watch user experience indicators can be set by the artificial-reality headset 110, intermediary processing device 120, and/or the user 100.

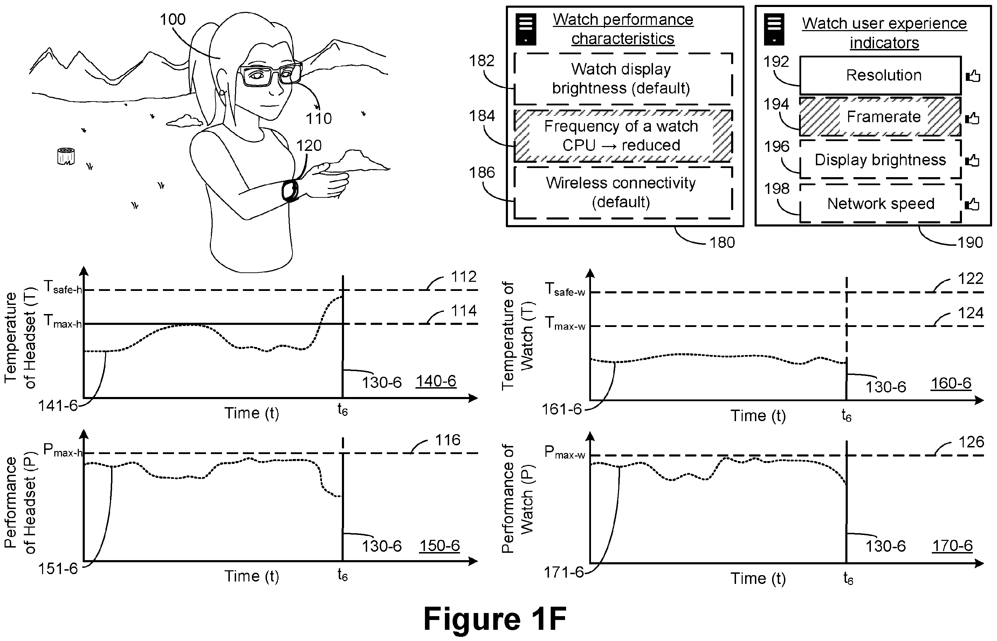

Figure 1F illustrates the user 100 wearing the artificial-reality headset 110 and the intermediary processing device 120 at the sixth point in time, t₆, in which the artificial-reality headset 110 temperature has exceeded and Tₘₐₓ₋ₕ 114 and has already unsuccessfully attempted to thermal throttle by reducing performance of a watch performance characteristic and is now reducing a performance of a different watch performance characteristic to match the performance of the thermal-throttling artificial-reality headset 110.

Chart 140-6 shows a temperature measurement of the artificial-reality headset 110 at the sixth point in time, t₆, as illustrated by vertical bar 130-6. Chart 140-6 illustrates the horizontal threshold line T_{safe-h} 112 that indicates the maximum safe temperature the artificial-reality headset 110 can reach without being harmful and/or uncomfortable for the user 100. Chart 140-6 also illustrates the horizontal threshold line Tₘₐₓ₋ₕ 114 that indicates the maximum temperature the artificial-reality headset 110 will reach before thermal throttling. In some embodiments, the artificial-reality headset 110 will shut off if the Tₘₐₓ₋ₕ 114 is exceeded for an extended period or if the temperature of the device gets too close to T_{safe-h} 112. At time t₆, as indicated by the vertical bar 130-6, the temperature of the artificial-reality headset 110, indicated by line 141-6, remains past Tₘₐₓ₋ₕ 114, which means the artificial-reality headset 110 continues to thermal throttle.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the artificial-reality headset 110 approaching or exceeding Tₘₐₓ₋ₕ 114) at the artificial-reality headset 110 satisfies thermal throttling criteria, the artificial reality headset 110 begins thermal throttling. In some embodiments, the amount of thermal throttling of the artificial-reality headset 110 varies based on how much the current temperature of the artificial-reality headset 110 has exceeded Tₘₐₓ₋ₕ 114.

In some embodiments, the reduced performance of the artificial-reality headset 110 due to thermal throttling of the artificial-reality headset 110 is adjusted by adjusting the one or more headset performance characteristics. Adjusting the one or more headset performance characteristics can be based on one or more headset user experience indicators. The one or more headset performance characteristics of the artificial-reality headset 110 can include the voltage of the artificial-reality headset CPU, the frequency of the artificial-reality headset CPU, the wireless connectivity at the artificial-reality headset, the cellular throughput at the artificial-reality headset, the video or audio transmission or playback quality at the artificial-reality headset, the artificial-reality headset display setting (e.g., on or off state, brightness, color depth, resolution, refresh rate, and/or field of view), and/or a leader status of a system of devices (e.g., whether the artificial-reality headset 110 is the leader responsible for receiving and transmitting states associated with devices in the system of devices). In some embodiments, the artificial-reality device 110 continues to thermal throttle and operate with reduced performance until a determination that the operational condition at the artificial-reality headset 110 no longer satisfies the thermal-throttling criteria.

Chart 150-6 shows a performance metric of the artificial-reality headset 110 at the sixth point in time, t₆, as illustrated by the vertical bar 130-6. Chart 150-6 illustrates the horizontal threshold line Pₘₐₓ₋ₕ 116 that indicates the maximum performance threshold that the artificial-reality headset 110 is capable of. At the time t₆, as indicated by the vertical bar 130-6, the currently utilized performance of the artificial-reality headset 110, as indicated by line 151-6, has reduced as compared to the currently utilized performance of the artificial-reality headset 110 at time t₄. In some embodiments, the reduction in currently utilized performance of the artificial-reality headset 110 at time t₆ is in response to the artificial-reality headset thermal throttling as it exceeds Tₘₐₓ₋ₕ.

Chart 160-6 shows a temperature measurement of the intermediary processing device 120 at the sixth point in time, t₆, as illustrated by vertical bar 130-6. Chart 160-6 illustrates the horizontal threshold line T_{safe-w} 122 that indicates the maximum safe temperature the intermediary processing device 120 can reach without being harmful and/or uncomfortable for the user 100. Chart 160-6 also illustrates the horizontal threshold line T_{max-w} 124 that indicates the maximum temperature the intermediary processing device 120 will reach before thermal throttling. In some embodiments, the intermediary processing device 120 will shut off if the T_{max-w} is exceeded for an extended period or if the temperature of the device gets too close to T_{safe-w}. At time t₆, as indicated by the vertical bar 130-6, the temperature of the intermediary processing device 120, as indicated by line 161-6, is below T_{max-w}, which means thermal throttling is not required for the intermediary processing device 120 at this time.

Chart 170-6 shows a performance metric of the intermediary processing device 120 at the sixth point in time, t₆, as illustrated by bar 130-6. Chart 170-6 illustrates the horizontal threshold line P_{max-w} 126 that indicates the maximum performance threshold that the intermediary processing device 120 is capable of. At the time t₆, as indicated by the vertical bar 130-6, the currently utilized performance of the intermediary processing device 120, as indicated by the line 171-6, is reduced as compared to the currently utilized performance of the intermediary processing device 120 at time t₄. The reduction in the currently utilized performance of the intermediary processing device 120 at time t₆ can be in response to the artificial-reality headset 110 thermal throttling and, as a result, reduce performance at the artificial-reality headset 110. Stated another way, the intermediary processing device 120 may reduce its performance to match the performance of the artificial-reality headset 110. The reduction in the currently utilized performance of the intermediary processing device 120 can be achieved via reducing one or more performance characteristics of the intermediary processing device 120.

Table 180 shows the watch performance characteristics. As illustrated, the watch performance characteristics include at least the watch display brightness 182, the frequency of a watch CPU 184, and the wireless connectivity 186. In some embodiments, the watch performance characteristics 180 further include the voltage of the watch CPU, the cellular throughput associated with intermediary processing device 120, and the voice call quality between the intermediary processing device 120 and the artificial-reality headset 110. The watch performance characteristics can be adjusted when the intermediary processing device 120 is throttled (e.g., thermal throttling of the intermediary processing device 120 or throttling of the intermediary processing device 120 to match the performance of another device in a system of devices) to match the current performance of the artificial-reality headset 110. At time t₆, the wireless connectivity 186 has been reverted to the default setting from the Wi-Fi-only setting because the Wi-Fi setting resulted in the network speed 198 (e.g., a watch user experience indicator) to not be satisfied. The frequency of a watch CPU 184 is adjusted from the default setting to a reduced frequency setting to reduce the performance at the intermediary processing device 120.

Table 190 shows the watch user experience indicators. The watch user experience indicators can include at least the resolution 192, the framerate 194, the display brightness 196, and the network speed 198. The watch user experience indicators can represent how well the user 100 experiences the intermediary processing device to be operating. As shown in table 190, the watch user experience indicators at time t₆ remain satisfied even with the frequency of the watch CPU 184 reduced. In some embodiments, because all the watch user experience indicators are satisfied, the intermediary processing device 120 continues to throttle via the reduction in the frequency of the watch CPU 184.

In some embodiments, watch user experience indicators that impact the user experience more are prioritized. In some embodiments, the threshold for the watch user experience indicators can be set by the artificial-reality headset 110, intermediary processing device 120, and/or the user 100.

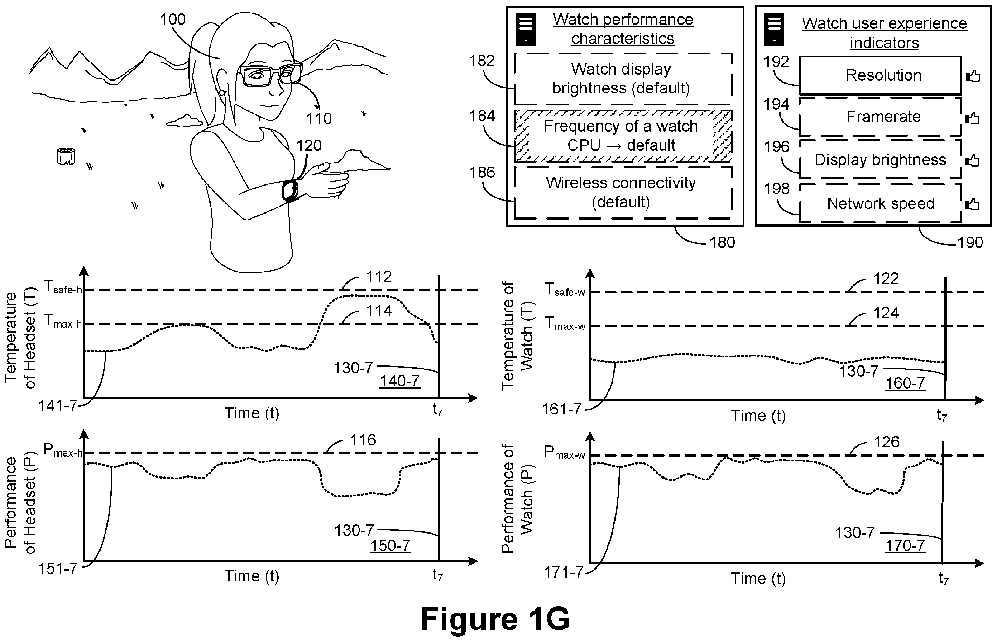

Figure 1G illustrates the user 100 wearing the artificial-reality headset 110 and the intermediary processing device 120 at the seventh point in time, t₇, as illustrated by vertical bar 130-7, in which the artificial-reality headset 110 temperature has decreased from above Tₘₐₓ₋ₕ 114 to below Tₘₐₓ₋ₕ 114, causing the artificial-reality headset to stop thermal throttling. The intermediary processing device 120 increases its performance to match the performance of the now non-thermal-throttling artificial-reality headset 110.

Chart 140-7 shows a temperature measurement of the artificial-reality headset 110 at the seventh point in time, t₇, as illustrated by vertical bar 130-7. Chart 140-7 illustrates the horizontal threshold line T_{safe-h} 112 that indicates the maximum safe temperature the artificial-reality headset 110 can reach without being harmful and/or uncomfortable for the user 100. Chart 140-7 also illustrates the horizontal threshold line Tₘₐₓ₋ₕ 114 that indicates the maximum temperature the artificial-reality headset 110 will reach before thermal throttling. In some embodiments, the artificial-reality headset 110 will shut off if the Tₘₐₓ₋ₕ is exceeded for an extended period or if the temperature of the device gets too close to T_{safe-h} 112. At time t₇, as indicated by the vertical bar 130-7, the temperature of the artificial-reality headset 110, indicated by line 141-7, has decreased from above Tₘₐₓ₋ₕ 114 to below Tₘₐₓ₋ₕ 114. The temperature of the artificial-reality headset 110 is now below Tₘₐₓ₋ₕ 114, which means thermal throttling is not required for the artificial-reality headset 110 at this time.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the artificial-reality headset 110 approaching or exceeding Tₘₐₓ₋ₕ 114) at the artificial-reality headset 110 satisfies thermal-throttling criteria, the artificial-reality headset 110 begins thermal throttling. In some embodiments, the amount of thermal throttling of the artificial-reality headset 110 varies based on how much the current temperature of the artificial-reality headset 110 has exceeded Tₘₐₓ₋ₕ 114.

In some embodiments, the reduced performance of the artificial-reality headset 110 due to thermal-throttling of the artificial-reality headset 110 is adjusted by adjusting the one or more headset performance characteristics. Adjusting the one or more headset performance characteristics can be based on one or more headset user experience indicators. The one or more headset performance characteristics of the artificial-reality headset 110 can include the voltage of the artificial-reality headset CPU, the frequency of the artificial-reality headset CPU, the wireless connectivity at the artificial-reality headset, the cellular throughput at the artificial-reality headset, the video or audio transmission or playback quality at the artificial-reality headset, the artificial-reality headset display setting (e.g., on or off state, brightness, color depth, resolution, refresh rate, and/or field of view), and/or a leader status of a system of devices (e.g., whether the artificial-reality headset 110 is the leader responsible for receiving and transmitting states associated with devices in the system of devices). In some embodiments, the artificial-reality device 110 continues to thermal throttle and operate with reduced performance until a determination that the operational condition at the artificial-reality headset 110 no longer satisfies the thermal-throttling criteria.

Chart 150-7 shows a performance metric of the artificial-reality headset 110 at the seventh point in time, t₇, as illustrated by vertical bar 130-7. Chart 150-7 illustrates the horizontal threshold line Pₘₐₓ₋ₕ 116 that indicates a maximum performance threshold that the artificial-reality headset 110 is capable of. At the time t₇, as indicated by the vertical bar 130-7, the currently utilized performance of the artificial-reality headset 110, as indicated by line 151-7, has increased as compared to the reduced currently utilized performance of the artificial-reality headset 110 at time t₆. The currently utilized performance of the artificial-reality headset, as indicated by line 151-7, is approximate to the maximum performance threshold Pₘₐₓ₋ₕ 116. For example, because the artificial-reality headset 110 is not thermal throttling, the artificial-reality headset can utilize up to the maximum performance threshold Pₘₐₓ₋ₕ 116.

Chart 160-7 shows a temperature measurement of the intermediary processing device 120 at the seventh point in time, t₇, as illustrated by vertical bar 130-7. Chart 160-7 illustrates the horizontal threshold line T_{safe-w} 122 that indicates the maximum safe temperature the intermediary processing device 120 can reach without being harmful and/or uncomfortable for the user 100. Chart 160-7 also illustrates the horizontal threshold line T_{max-w} 124 that indicates the maximum temperature the intermediary processing device 120 will reach before thermal throttling. In some embodiments, the intermediary processing device 120 will shut off if the T_{max-w} is exceeded for an extended period or if the temperature of the device gets too close to T_{safe-w}. At time t₇, as indicated by the vertical bar 130-7, the temperature of the intermediary processing device, indicated by line 161-7, is below T_{max-w}, which means thermal throttling is not required for the intermediary processing device 120 at this time.

Chart 170-7 shows a performance metric of the intermediary processing device 120 at the seventh point in time, t₇ as illustrated by bar 130-7. Chart 170-7 illustrates a horizontal threshold line P_{max-w} 126 that indicates the maximum performance threshold that the intermediary processing device 120 is capable of. At the time t₇, as indicated by the vertical bar 130-7, the currently utilized performance of the intermediary processing device 120, as indicated by line 171-7, is increased as compared to the reduced currently utilized performance of the intermediary processing device 120 at time t₆. In some embodiments, the increase in the currently utilized performance of the intermediary processing device 120 at time t₇ can be in response to the artificial-reality headset 110 no longer thermal throttling and as a result increasing or reverting the performance of the artificial-reality headset 110 back to the non-throttled setting. Stated another way, the intermediary processing device 120 may increase its performance to match the performance of the artificial-reality headset 110. For example, because the intermediary processing device 120 and the artificial-reality headset are not thermal throttling, the intermediary processing device can utilize up to the maximum performance threshold P_{max-w} 126.

Table 180 shows the watch performance characteristics. As illustrated, the watch performance characteristics include at least the watch display brightness 182, the frequency of a watch CPU 184, and the wireless connectivity 186. In some embodiments, the watch performance characteristics 180 further include the voltage of the watch CPU, the cellular throughput associated with intermediary processing device 120, and the voice call quality between the intermediary processing device 120 and the artificial-reality headset 110. The watch performance characteristics can be adjusted when the intermediary processing device 120 is throttled (e.g., thermal throttling of the intermediary processing device 120 or throttling of the intermediary processing device 120 to match the performance of another device in a system of devices) to match the current performance of the artificial-reality headset 110. At time t₇, the watch performance characteristics are reverted to the default setting. For example, the frequency of the watch CPU is adjusted from the reduced frequency to the default setting. All the watch performance characteristics can continue to be in a default setting while neither the artificial-reality headset 110 nor the intermediary processing device 120 is throttled. In some embodiments, the default setting for the watch performance characteristics is the setting that yields the maximum performance threshold P_{max-w} 126 at the intermediary processing device 120.

Table 190 shows the watch user experience indicators. The watch user experience indicators can include at least the resolution 192, the framerate 194, the display brightness 196, and the network speed 198. The watch user experience indicators can represent how well the user 100 experiences the intermediary processing device to be operating. As shown in table 190, the watch user experience indicators at time t₇ remain satisfied as the frequency of the watch CPU is reverted from a reduced frequency to the default setting. In some embodiments, the watch user experience indicators are satisfied when all watch performance characteristics are operating in the default setting.

In some embodiments, watch user experience indicators that impact the user experience more are prioritized. In some embodiments, the threshold for the watch user experience indicators can be set by the artificial-reality headset 110, intermediary processing device 120, and/or the user 100.

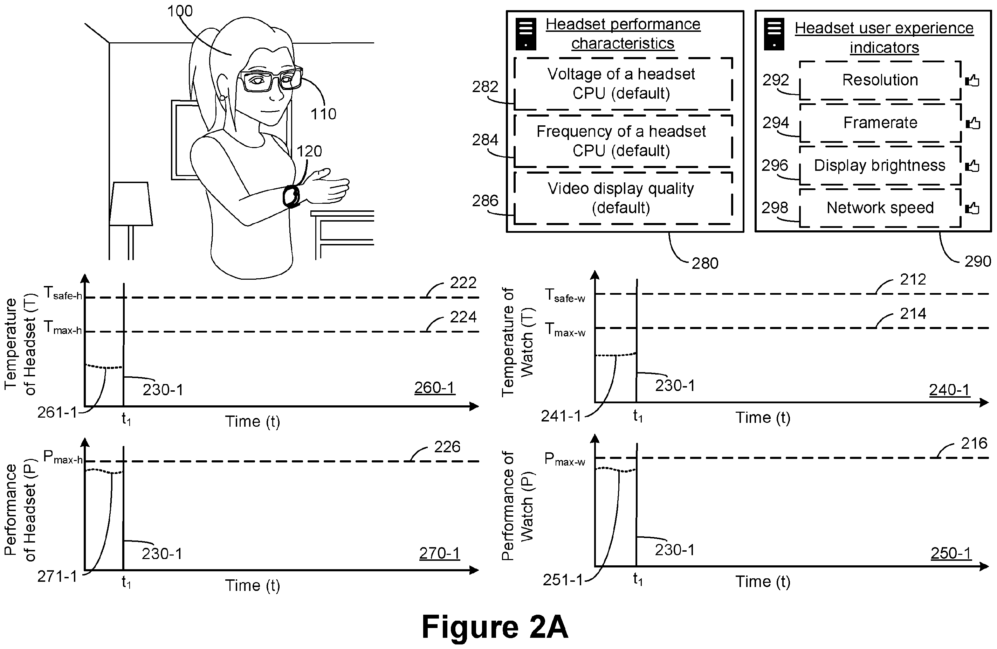

Figures 2A-2G illustrate an example of a user 100 wearing an artificial-reality headset 110 and intermediary processing device 120 where the intermediary processing device 120 approaches and exceeds a predefined thermal-throttling temperature limit 214 (T_{max-w}), and the artificial-reality headset 110 reduces its performance to match the performance of the thermal-throttling intermediary processing device 120, to save power and reduce heat output while the intermediary processing device 120 is thermal throttling, in accordance with some embodiments.

As illustrated in Figure 2A, the artificial-reality headset 110 is in communication with the intermediary processing device 120 (also referred to interchangeably herein as watch 120) via a wireless communication protocol. In the example illustrated in Figure 2A, the ambient temperature of the environment surrounding the artificial-reality headset 110 and the intermediary processing device 120 is an indoor environment (e.g., between 68°F and 76°F). Figure 2A illustrates a user 100 wearing an artificial-reality headset 110 and an intermediary processing device 120 at a first point in time, t₁., in which neither the artificial-reality headset 110 nor the intermediary processing device 120 is thermally throttled.

Chart 240-1 shows a temperature measurement of the intermediary processing device 120 at a first point in time, t₁, as illustrated by vertical bar 230-1. Chart 240-1 illustrates a horizontal threshold line 212 (labeled 'T_{safe-w}') that indicates a maximum safe temperature the intermediary processing device 120 can reach without being harmful and/or uncomfortable for the user 100. Chart 240-1 also illustrates another horizontal threshold line 214 (labeled 'T_{max-w}') that indicates a maximum temperature the intermediary processing device 120 will reach before thermal throttling. The amount of thermal throttling of the intermediary processing device 120 can vary depending on how much the current temperature of the intermediary processing device 120 has exceeded T_{max-w} 214. In some embodiments, the intermediary processing device 120 will shut off if the T_{max-w} 214 is exceeded for an extended period or if the temperature of the device gets too close to T_{safe-w} 212. At time t₁, as indicated by the vertical bar 230-1, the temperature of the intermediary processing device 120, indicated by line 241-1, is below T_{max-w}, which means thermal throttling is not required for the intermediary processing device 120 at this time.

The temperature of the artificial-reality headset 110 and/or the intermediary processing device 120 can be determined at various portions of the artificial-reality headset 110 and the intermediary processing device 120, respectively. The temperature of the artificial-reality headset 110 and/or the intermediary processing device 120 can be determined by averaging temperature measurements taken at various portions of the artificial-reality headset 110 and the intermediary processing device 120, respectively.

In some embodiments, in accordance with a determination that an operational condition (e.g., temperature of the intermediary processing device 120 approaching or exceeding T_{max-w} 214) at the intermediary processing device 120 satisfies thermal-throttling criteria, the intermediary processing device 120 begins thermal throttling. In some embodiments, the amount of thermal throttling of the intermediary processing device 120 varies based on how much the current temperature of the intermediary processing device 120 has exceeded T_{max-w} 214.

In some embodiments, the reduced performance of the intermediary processing device 120 due to thermal throttling of the intermediary processing device 120 is adjusted by adjusting one or more watch performance characteristics. Adjusting the one or more watch performance characteristics can be based on one or more watch user experience indicators. The one or more watch performance characteristics of the intermediary processing device 120 can include a voltage of the watch CPU, a frequency of the watch CPU, a wireless connectivity at the watch, a cellular throughput at the watch, a video or audio transmission or playback quality at the watch, a watch display setting (e.g., on or off state, brightness, color depth, resolution, refresh rate, and/or field of view), and/or a leader status of a system of devices (e.g., whether the watch is the leader responsible for receiving and transmitting states associated with devices in the system of devices). In some embodiments, the intermediary processing device 120 continues to thermal throttle and operate with reduced performance until a determination that the operational condition at the intermediary processing device 120 no longer satisfies the thermal-throttling criteria.

Chart 250-1 shows a performance metric of the intermediary processing device 120 at the first point in time, t₁, as illustrated by vertical bar 230-1. Chart 250-1 illustrates a horizontal maximum performance threshold line 216 (labeled 'P_{max-w}') that indicates a maximum performance threshold that the intermediary processing device 120 is capable of. At the time t₁, as indicated by the vertical bar 230-1, the currently utilized performance of the intermediary processing device 120, as indicated by line 251-1, is approximate to the maximum performance threshold P_{max-w} 216. For example, because the intermediary processing device 120 is not thermal throttling, the intermediary processing device 120 can utilize up to the maximum performance threshold P_{max-w} 216.

Chart 260-1 shows a temperature measurement of the artificial-reality headset 110 at the first point in time, t₁, as illustrated by vertical bar 230-1. Chart 260-1 illustrates a horizontal threshold line 222 (labeled 'T_{safe-h}') that indicates a maximum safe temperature the artificial-reality headset 110 can reach without being harmful and/or uncomfortable for the user 100. Chart 260-1 also illustrates another horizontal threshold line 224 (labeled 'Tₘₐₓ₋ₕ') that indicates a maximum temperature the artificial-reality headset 110 will reach before thermal throttling. In some embodiments, the artificial-reality headset 110 will shut off if the Tₘₐₓ₋ₕ is exceeded for an extended period or if the temperature of the artificial-reality headset 110 gets too close to T_{safe-h}. At time t₁, as indicated by the vertical bar 230-1, the temperature of the artificial-reality headset 110, indicated by line 261-1, is below Tₘₐₓ₋ₕ, which means thermal throttling is not required for the artificial-reality headset 110 at this time.

Chart 270-1 shows a performance metric of the artificial-reality headset 110 at the first point in time, t₁, as illustrated by vertical bar 230-1. Chart 270-1 illustrates a horizontal threshold line 226 (labeled 'Pₘₐₓ₋ₕ') that indicates a maximum performance threshold that the artificial-reality headset 110 is capable of. At the time t₁, as indicated by the vertical bar 230-1, the currently utilized performance of the artificial-reality headset 110, as indicated by line 271-1, is approximate to Pₘₐₓ₋ₕ 226. For example, because the artificial-reality headset 110 is not thermal throttling, the artificial-reality headset 110 can utilize up to the maximum performance threshold Pₘₐₓ₋ₕ 226.

Table 280 shows headset performance characteristics. As illustrated, the headset performance characteristics include at least a voltage of a headset CPU 282, a frequency of a headset CPU 284, and a video display quality 286. The headset performance characteristics can be adjusted when the artificial-reality headset 110 is throttled (e.g., thermal throttling of the artificial-reality headset 110 or throttling of the artificial-reality headset 110 to match the performance of another device in a system of devices). At time t₁, neither the artificial-reality headset 110 nor the intermediary processing device 120 is throttled. All headset performance characteristics are in a default setting at time t₁ when neither device is throttled. In some embodiments, the default setting for the headset performance characteristics is the setting that yields the maximum performance threshold Pₘₐₓ₋ₕ 226 at the artificial-reality headset 110.

Table 290 shows headset user experience indicators. The headset user-experience indicators can include at least a resolution 292, a framerate 294, a display brightness 296, and a network speed 298. The headset user-experience indicators can represent how well the user 100 experiences the artificial-reality headset 110 to be operating. As shown in table 290, the headset user-experience indicators at time t₁ are satisfied. In some embodiments, the headset user-experience indicators are satisfied when all headset performance characteristics are operating in the default setting.

In some embodiments, headset user experience indicators that impact the user experience more are prioritized. In some embodiments, the threshold for the headset user experience indicators can be set by the artificial-reality headset 110, intermediary processing device 120, and/or the user 100.

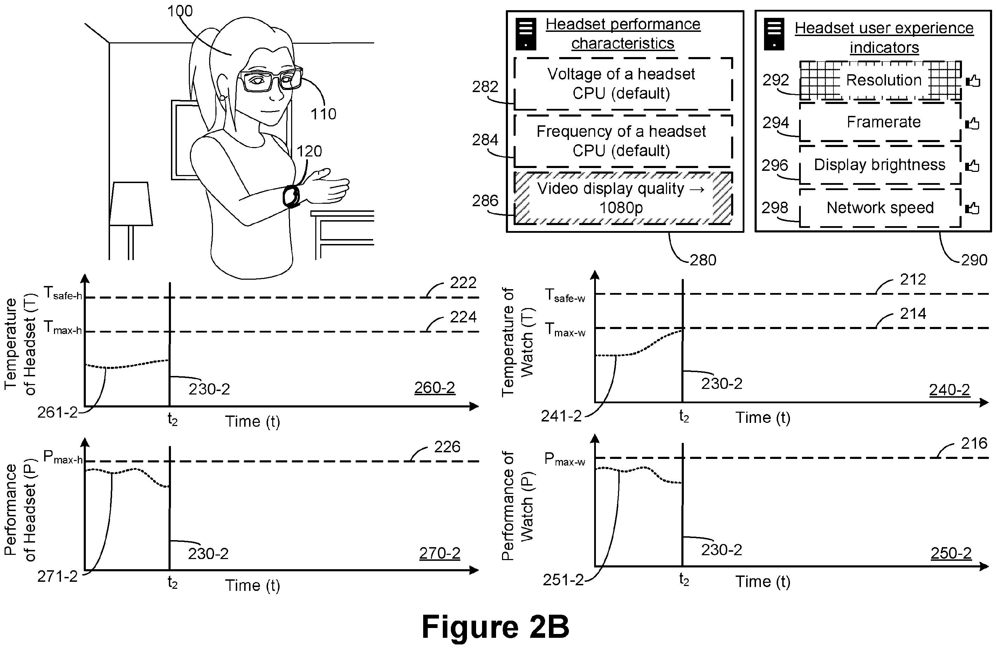

Figure 2B illustrates the user 100 wearing the artificial-reality headset 110 and the intermediary processing device 120 at the second point in time, t₂, in which the intermediary processing device 120 temperature has increased and is approaching T_{max-w} 214, causing the intermediary processing device 120 to begin thermal throttling. The artificial-reality headset 110 reduces its performance to match the performance of the thermal-throttling intermediary processing device 120.

Chart 240-2 shows a temperature measurement of the intermediary processing device 120 at the second point in time, t₂, as illustrated by vertical bar 230-2. Chart 240-2 illustrates the horizontal threshold line T_{safe-w} 212 that indicates the maximum safe temperature the intermediary processing device 120 can reach without being harmful and/or uncomfortable for the user 100. Chart 240-2 also illustrates the horizontal threshold line T_{max-w} 214 that indicates the maximum temperature the intermediary processing device 120 will reach before thermal throttling. In some embodiments, the intermediary processing device 120 will shut off if the T_{max-w} 214 is exceeded for an extended period or if the temperature of the device gets too close to T_{safe-w} 212. At time t₂, as indicated by the vertical bar 230-2, the temperature of the intermediary processing device 120, indicated by line 241-2, has increased to T_{max-w} 214. In some embodiments, when the intermediary processing device 120 approaches T_{max-w} at a rate that would result in the temperature of the intermediary processing device 120 to exceed T_{max-w}, the intermediary processing device 120 will begin thermal throttling.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the intermediary processing device 120 approaching or exceeding T_{max-w} 214) at the intermediary processing device 120 satisfies thermal throttling criteria, the intermediary processing device 120 begins thermal throttling. In some embodiments, the amount of thermal throttling of the intermediary processing device 120 varies based on how much the current temperature of the intermediary processing device 120 has exceeded T_{max-w} 214.

In some embodiments, the reduced performance of the intermediary processing device 120 due to thermal throttling of the intermediary processing device 120 is adjusted by adjusting the one or more watch performance characteristics. Adjusting the one or more watch performance characteristics can be based on one or more watch user experience indicators. The one or more watch performance characteristics of the intermediary processing device 120 can include the voltage of the watch CPU, the frequency of the watch CPU, the wireless connectivity at the watch, the cellular throughput at the watch, the video or audio transmission or playback quality at the watch, the watch display setting (e.g., on or off state, brightness, color depth, resolution, refresh rate, and/or field of view), and/or the leader status of a system of devices (e.g., whether the watch is the leader responsible for receiving and transmitting states associated with devices in the system of devices). In some embodiments, the intermediary processing device 120 continues to thermal throttle and operate with reduced performance until a determination that the operational condition at the intermediary processing device 120 no longer satisfies the thermal-throttling criteria.

Chart 250-2 shows a performance metric of the intermediary processing device 120 at the second point in time, t₂, as illustrated by the vertical bar 230-2. Chart 250-2 illustrates the horizontal threshold line P_{max-w} 216 that indicates the maximum performance threshold that the intermediary processing device 120 is capable of. At the time t₂, as indicated by the vertical bar 230-2, the currently utilized performance of the intermediary processing device 120, as indicated by line 251-2, has reduced as compared to the currently utilized performance of intermediary processing device 120 at time t₁. In some embodiments, the reduction in currently utilized performance of the intermediary processing device 120 at time t₂ can be in response to the intermediary processing device 120 thermal throttling as it approaches T_{max-w}.

Chart 260-2 shows a temperature measurement of the artificial-reality headset 110 at the second point in time, t₂, as illustrated by vertical bar 230-2. Chart 260-2 illustrates the horizontal threshold line T_{safe-h} 222 that indicates the maximum safe temperature the artificial-reality headset 110 can reach without being harmful and/or uncomfortable for the user 100. Chart 260-2 also illustrates the horizontal threshold line Tₘₐₓ₋ₕ 224 that indicates the maximum temperature the artificial-reality headset 110 will reach before thermal throttling. In some embodiments, the artificial-reality headset 110 will shut off if the Tₘₐₓ₋ₕ is exceeded for an extended period or if the temperature of the device gets too close to T_{safe-h}. At time t₂, as indicated by the vertical bar 230-2, the temperature of the artificial-reality headset 110, as indicated by line 261-2, is below Tₘₐₓ₋ₕ, which means thermal throttling is not required for the artificial-reality headset 110 at this time.

Chart 270-2 shows a performance metric of the artificial-reality headset 110 at the second point in time, t₂, as illustrated by bar230-2. Chart 270-2 illustrates the horizontal threshold line Pₘₐₓ₋ₕ 226 that indicates the maximum performance threshold that the artificial-reality headset 110 is capable of. At the time t₂, as indicated by the vertical bar 230-2, the currently utilized performance of artificial-reality headset 110, as indicated by the line 271-2, is reduced as compared to the currently utilized performance of the artificial-reality headset 110 at time t₁. In some embodiments, the reduction in the currently utilized performance of artificial-reality headset 110 at time t₂ can be in response to the intermediary processing device 120 thermal throttling and as a result reducing performance at the intermediary processing device 120. Stated another way, the artificial-reality headset 110 may reduce its performance to match the performance of the intermediary processing device 120. The reduction in the currently utilized performance of the artificial-reality headset 110 can be achieved via reducing one or more headset performance characteristics of the artificial-reality headset 110.

Table 280 shows the headset performance characteristics. As illustrated, the headset performance characteristics include at least the voltage of headset CPU 282, the frequency of a headset CPU 284, and the headset video display quality 286. In some embodiments, the headset performance characteristics 280 further include the cellular throughput associated with artificial-reality headset 110, the voice call quality between the intermediary processing device 120 and the artificial-reality headset 110, and audio-only operation of the artificial-reality headset 110. The headset performance characteristics can be adjusted when the artificial-reality headset 110 is throttled to match the current performance (e.g., thermally throttled performance) of the intermediary processing device 120. At time t₂, the headset video display quality 286 is adjusted from the default setting (e.g., 4K resolution, 5K resolution, 8K resolution, or some other video resolution) to 1080p to reduce the performance at the artificial-reality headset 110 to match the current performance (e.g., thermally throttled performance) of the intermediary processing device 120. As an example, the intermediary processing device 120 decreases its video transmission quality between the intermediary processing device 120 and the artificial-reality headset 110 when the intermediary processing device 120 is thermal throttling, and the artificial-reality headset 110 also decreases the headset video display quality 286 such that the display resolution at the artificial-reality headset 110 is approximately the same as the resolution of the video transmission from the intermediary processing device 120.

Table 290 shows the headset user experience indicators. The headset user experience indicators can include at least the resolution 292, the framerate 294, the display brightness 296, and the network speed 298. The headset user experience indicators can represent how well the user 100 experiences the artificial-reality headset 110 to be operating. As shown in table 290, the headset user experience indicators at time t₂ remain satisfied even with the headset video display quality 286 adjusted to 1080p. In some embodiments, because all the headset user experience indicators are satisfied, the artificial-reality headset 110 continues to throttle via the reduction in the headset video display quality 286.

In some embodiments, headset user experience indicators that impact the user experience more are prioritized. In some embodiments, the threshold for the headset user experience indicators can be set by the artificial-reality headset 110, intermediary processing device 120, and/or the user 100.

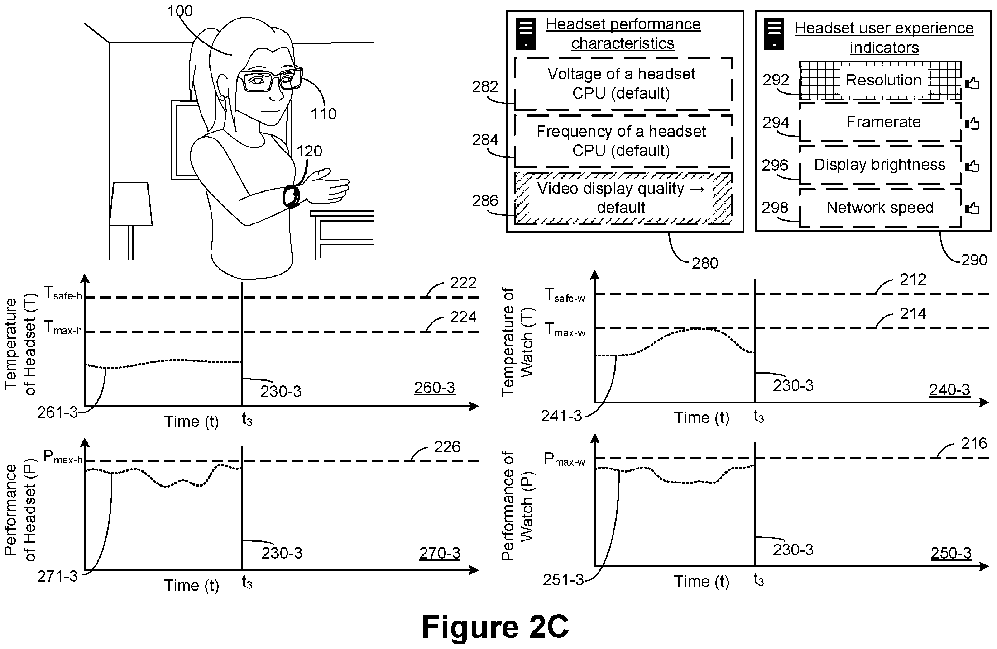

Figure 2C illustrates the user 100 wearing the artificial-reality headset 110 and the intermediary processing device 120 at the third point in time, t₃, as illustrated by vertical bar 230-3, in which the intermediary processing device 120 temperature has decreased from T_{max-w} 214, causing the intermediary processing device 120 to stop thermal throttling. The artificial-reality headset 110 increases its performance to match the performance of the now non-thermal throttling intermediary processing device 120.

Chart 240-3 shows a temperature measurement of the intermediary processing device 120 at the third point in time, t₃, as illustrated by vertical bar 230-3. Chart 240-3 illustrates the horizontal threshold line T_{safe-w} 212 that indicates the maximum safe temperature the intermediary processing device 120 can reach without being harmful and/or uncomfortable for the user 100. Chart 240-3 also illustrates the horizontal threshold line T_{max-w} 214 that indicates the maximum temperature the intermediary processing device 120 will reach before thermal throttling. In some embodiments, the intermediary processing device 120 will shut off if the T_{max-w} is exceeded for an extended period or if the temperature of the device gets too close to T_{safe-w}. At time t₃, as indicated by the vertical bar 230-3, the temperature of the intermediary processing device 120, indicated by line 241-3, has decreased from T_{max-w} 214. The temperature of the intermediary processing device 120 is now below T_{max-w}, which means thermal throttling is not required for the intermediary processing device 120 at this time.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the intermediary processing device 120 approaching or exceeding T_{max-w} 214) at the intermediary processing device 120 satisfies thermal-throttling criteria, the intermediary processing device 120 begins thermal throttling. In some embodiments, the amount of thermal throttling of the intermediary processing device 120 varies based on how much the current temperature of the intermediary processing device 120 has exceeded T_{max-w} 214.

In some embodiments, the reduced performance of the intermediary processing device 120 due to thermal throttling of the intermediary processing device 120 is adjusted by adjusting the one or more watch performance characteristics. Adjusting the one or more watch performance characteristics can be based on one or more watch user experience indicators. The one or more watch performance characteristics of the intermediary processing device 120 can include a voltage of the watch CPU, a frequency of the watch CPU, a wireless connectivity at the watch, a cellular throughput at the watch, a video or audio transmission or playback quality at the watch, an watch display setting (e.g., on or off state, brightness, color depth, resolution, refresh rate, and/or field of view), and/or the leader status of a system of devices (e.g., whether the watch is the leader responsible for receiving and transmitting states associated with devices in the system of devices). In some embodiments, the intermediary processing device 120 continues to thermal throttle and operate with reduced performance until a determination that the operational condition at the intermediary processing device 120 no longer satisfies the thermal-throttling criteria.

Chart 250-3 shows a performance metric of the intermediary processing device 120 at the third point in time, t₃, as illustrated by vertical bar 230-3. Chart 250-3 illustrates the horizontal threshold line P_{max-w} 216 that indicates a maximum performance threshold that the intermediary processing device 120 is capable of. At the time t₃, as indicated by the vertical bar 230-3, the currently utilized performance of the intermediary processing device 120, as indicated by line 251-3, has increased as compared to the reduced currently utilized performance of the intermediary processing device 120 at time t₂. The currently utilized performance of the intermediary processing device 120, as indicated by line 251-3, is approximate to the maximum performance threshold P_{max-w} 216. For example, because the intermediary processing device 120 is not thermal throttling, the intermediary processing device 120 can utilize up to the maximum performance threshold P_{max-w} 216.

Chart 260-3 shows a temperature measurement of the artificial-reality headset 110 at the third point in time, t₃, as illustrated by vertical bar 230-3. Chart 260-3 illustrates the horizontal threshold line T_{safe-h} 222 that indicates the maximum safe temperature the artificial-reality headset 110 can reach without being harmful and/or uncomfortable for the user 100. Chart 260-3 also illustrates the horizontal threshold line Tₘₐₓ₋ₕ 224 that indicates the maximum temperature the artificial-reality headset 110 will reach before thermal throttling. In some embodiments, the artificial-reality headset 110 will shut off if the Tₘₐₓ₋ₕ is exceeded for an extended period or if the temperature of the device gets too close to T_{safe-h}. At time t₃, as indicated by the vertical bar 230-3, the temperature of the artificial-reality headset 110, indicated by line 261-3, is below Tₘₐₓ₋ₕ, which means thermal throttling is not required for the artificial-reality headset 110 at this time.

Chart 270-3 shows a performance metric of artificial-reality headset 110 at the third point in time, t₃ as illustrated by bar 230-3. Chart 270-3 illustrates a horizontal threshold line Pₘₐₓ₋ₕ 226 that indicates the maximum performance threshold that the artificial-reality headset 110 is capable of. At the time t₃, as indicated by the vertical bar 230-3, the currently utilized performance of the artificial-reality headset 110, as indicated by line 271-3, is increased as compared to the reduced currently utilized performance of the artificial-reality headset 110 at time t₂. In some embodiments, the increase in the currently utilized performance of the artificial-reality headset 110 at time t₃ can be in response to the intermediary processing device 120 no longer thermal throttling and as a result increasing or reverting the performance of the intermediary processing device 120 to the non-throttled setting. Stated another way, the artificial-reality headset 110 may increase its performance to match the performance of the intermediary processing device 120. For example, because the intermediary processing device 120 and the artificial-reality headset 110 are not thermal throttling, the artificial-reality headset 110 can utilize up to the maximum performance threshold Pₘₐₓ₋ₕ 226.

Table 280 shows the headset performance characteristics. As illustrated, the headset performance characteristics include at least the voltage of headset CPU 282, the frequency of a headset CPU 284, and the headset video display quality 286. In some embodiments, the headset performance characteristics 280 further include the cellular throughput associated with artificial-reality headset 110, the voice call quality between the intermediary processing device 120 and the artificial-reality headset 110, and audio-only operation of the artificial-reality headset 110. The headset performance characteristics can be adjusted when the artificial-reality headset 110 is throttled to match the current performance of the intermediary processing device 120. At time t₃, the headset performance characteristics are reverted to the default setting. For example, the headset video display quality 286 is adjusted from 1080p to the default setting. All the headset performance characteristics can continue to be in a default setting while neither the artificial-reality headset 110 nor the intermediary processing device 120 is throttled. In some embodiments, the default setting for the headset performance characteristics is the setting that yields the maximum performance threshold Pₘₐₓ₋ₕ 226 at the artificial-reality headset 110.

Table 290 shows the headset user experience indicators. The headset user experience indicators can include at least the resolution 292, the framerate 294, the display brightness 296, and the network speed 298. The headset user experience indicators can represent how well the user 100 experiences the artificial-reality headset 110 to be operating. As shown in table 290, the headset user experience indicators at time t₃ remain satisfied as the headset video display quality 286 is reverted from 1080p to the default setting. In some embodiments, the headset user experience indicators are satisfied when all headset performance characteristics are operating in the default setting.

In some embodiments, headset user experience indicators that impact the user experience more are prioritized. In some embodiments, the threshold for the headset user experience indicators can be set by the artificial-reality headset 110, intermediary processing device 120, and/or the user 100.

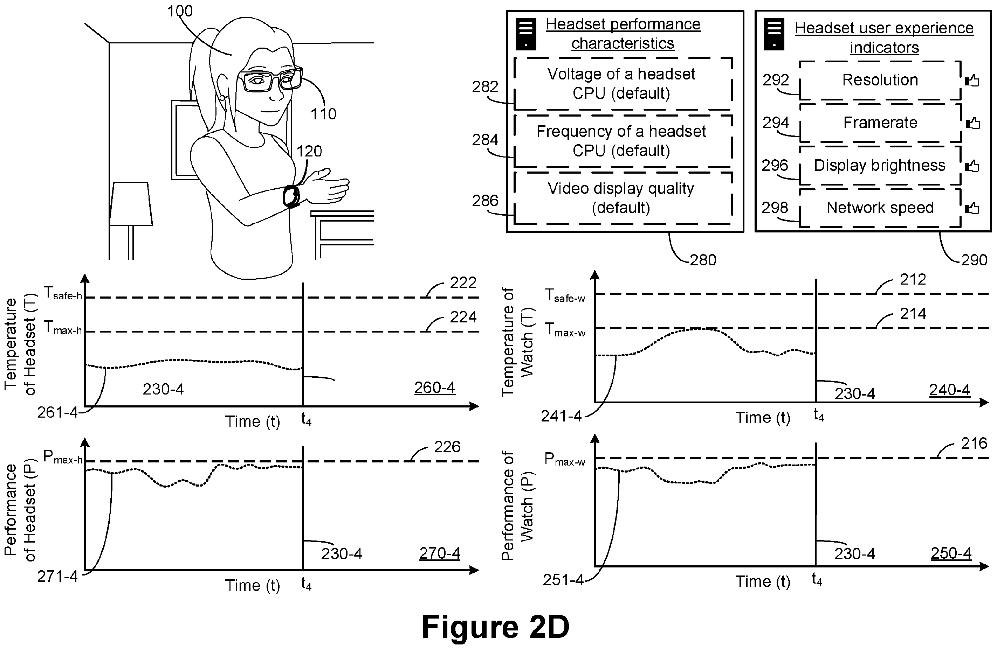

Figure 2D illustrates a user 100 wearing an artificial-reality headset 110 and an intermediary processing device 120 at a fourth point in time, t₄, in which the artificial-reality headset 110 and the intermediary processing device 120 have returned to a default operating condition. For example, neither the artificial-reality headset 110 nor the intermediary processing device 120 is being thermally throttled and neither has reduced performance.

Chart 240-4 shows a temperature measurement of the intermediary processing device 120 at a fourth point in time, t₄, as illustrated by vertical bar 230-4. Chart 240-4 illustrates the horizontal threshold line T_{safe-w} 212 that indicates the maximum safe temperature the intermediary processing device 120 can reach without being harmful and/or uncomfortable for the user 100. Chart 240-4 also illustrates the horizontal threshold line T_{max-w} 214 that indicates the maximum temperature the intermediary processing device 120 will reach before thermal throttling. In some embodiments, the intermediary processing device 120 will shut off if the T_{max-w} 214 is exceeded for an extended period or if the temperature of the device gets too close to T_{safe-w} 212. At time t₄, as indicated by the vertical bar 230-4, the temperature of the intermediary processing device 120, indicated by line 241-4, is below T_{max-w} 214, which means thermal throttling is not required for the intermediary processing device 120 at this time.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the intermediary processing device 120 approaching or exceeding T_{max-w} 214) at the intermediary processing device 120 satisfies thermal-throttling criteria, the intermediary processing device 120 begins thermal throttling. In some embodiments, the amount of thermal throttling of the intermediary processing device 120 varies based on how much the current temperature of the intermediary processing device 120 has exceeded T_{max-w} 214.

In some embodiments, the reduced performance of the intermediary processing device 120 due to thermal throttling of the intermediary processing device 120 is adjusted by adjusting the one or more watch performance characteristics. Adjusting the one or more watch performance characteristics can be based on one or more watch user experience indicators. The one or more performance characteristics of the intermediary processing device 120 can include the voltage of the watch CPU, the frequency of the watch CPU, the wireless connectivity at the watch, the cellular throughput at the watch, the video or audio transmission or playback quality at the watch, the watch display setting (e.g., on or off state, brightness, color depth, resolution, refresh rate, and/or field of view), and/or the leader status of a system of devices (e.g., whether the watch is the leader responsible for receiving and transmitting states associated with devices in the system of devices). In some embodiments, the intermediary processing device 120 continues to thermal throttle and operate with reduced performance until a determination that the operational condition at the intermediary processing device 120 no longer satisfies the thermal-throttling criteria.

Chart 250-4 shows a performance metric of the intermediary processing device 120 at the fourth point in time, t₄, as illustrated by the vertical bar 230-4. Chart 250-4 illustrates the horizontal threshold line P_{max-w} 216 that indicates the maximum performance threshold that the intermediary processing device 120 is capable of. At the time t₄, as indicated by the vertical bar 230-4, the currently utilized performance of the intermediary processing device 120, as indicated by line 251-4, is approximate to the maximum performance threshold P_{max-w} 216. For example, because the intermediary processing device 120 is not thermal throttling, the intermediary processing device 120 headset can utilize up to the maximum performance threshold P_{max-w} 216.

Chart 260-4 shows a temperature measurement of the artificial-reality headset 110 at the fourth point in time, t₄, as illustrated by vertical bar 230-4. Chart 260-4 illustrates the horizontal threshold line T_{safe-h} 222 that indicates the maximum safe temperature the artificial-reality headset 110 can reach without being harmful and/or uncomfortable for the user 100. Chart 260-4 also illustrates the horizontal threshold line Tₘₐₓ₋ₕ 224 that indicates the maximum temperature the artificial-reality headset 110 will reach before thermal throttling. In some embodiments, the artificial-reality headset 110 will shut off if the Tₘₐₓ₋ₕ is exceeded for an extended period or if the temperature of the device gets too close to T_{safe-h}. At time t₄, as indicated by the vertical bar 230-4, the temperature of the artificial-reality headset 110, indicated by line 261-4, is below Tₘₐₓ₋ₕ 224, which means thermal throttling is not required for the artificial-reality headset 110 at this time.

Chart 270-4 shows the performance metric of the artificial-reality headset 110 at the fourth point in time, t₄, as illustrated by vertical bar 230-4. Chart 270-4 illustrates the horizontal threshold line Pₘₐₓ₋ₕ 226 that indicates a maximum performance threshold that the artificial-reality headset 110 is capable of. At the time t₄, as indicated by the vertical bar 230-4, the currently utilized performance of the artificial-reality headset 110, as indicated by line 271-4, is approximate to Pₘₐₓ₋ₕ 226. For example, because the artificial-reality headset 110 is not thermal throttling, the artificial-reality headset 110 can utilize up to the maximum performance threshold Pₘₐₓ₋ₕ 226.

Table 280 shows the headset performance characteristics. As illustrated, the headset performance characteristics include at least the voltage of headset CPU 282, the frequency of a headset CPU 284, and the headset video display quality 286. In some embodiments, the headset performance characteristics 280 further include the cellular throughput associated with artificial-reality headset 110, the voice call quality between the intermediary processing device 120 and the artificial-reality headset 110, and audio-only operation of the artificial-reality headset 110. The headset performance characteristics can be adjusted when the artificial-reality headset 110 is throttled to match the current performance of the intermediary processing device 120 (e.g., thermal throttling of the artificial-reality headset 110 or throttling of the artificial-reality headset 110 to match the performance of another device in a system of devices). At time t₄, neither the artificial-reality headset 110 nor the intermediary processing device 120 is throttled. All headset performance characteristics are in a default setting at time t₄ when neither device is throttled. In some embodiments, the default setting for the headset performance characteristics is the setting that yields the maximum performance threshold Pₘₐₓ₋ₕ 226 at the artificial-reality headset 110.

Table 290 shows the headset user experience indicators. The headset user experience indicators can include at least the resolution 292, the framerate 294, the display brightness 296, and the network speed 298. The headset user experience indicators can represent how well the user 100 experiences the artificial-reality headset 110 to be operating. As shown in table 290, the headset user experience indicators at time t₄ are satisfied. In some embodiments, the headset user experience indicators are satisfied when all headset performance characteristics are operating in the default setting.

In some embodiments, headset user experience indicators that impact the user experience more are prioritized. In some embodiments, the threshold for the headset user experience indicators can be set by the artificial-reality headset 110, intermediary processing device 120, and/or the user 100.

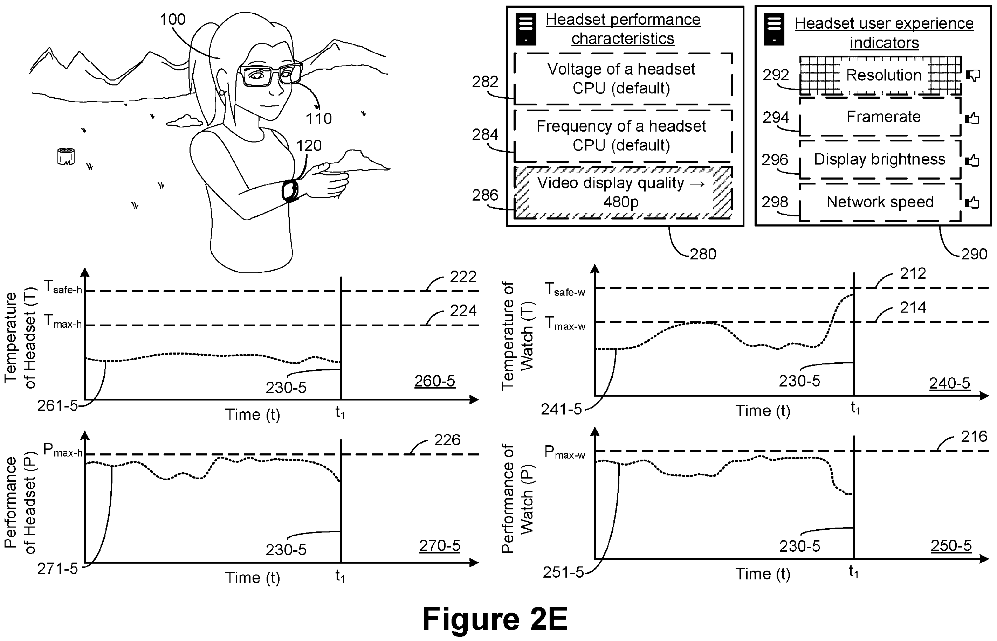

Figure 2E illustrates the user 100 wearing the artificial-reality headset 110 and the intermediary processing device 120 at the fifth point in time, t₅, in which the intermediary processing device 120 temperature has exceeded and T_{max-w} 214 when the user 100 steps outside, causing the intermediary processing device 120 to begin thermal throttling. In the example illustrated by Figure 1E, the outside temperature is higher than the indoor temperature, as illustrated by Figures 1A-1D. The artificial-reality headset 110 reduces its performance to match the performance of the thermal-throttling intermediary processing device 120.

Chart 240-5 shows a temperature measurement of the intermediary processing device 120 at the fifth point in time, t₅, as illustrated by vertical bar 230-5. Chart 240-5 illustrates the horizontal threshold line T_{safe-w} 212 that indicates the maximum safe temperature the intermediary processing device 120 can reach without being harmful and/or uncomfortable for the user 100. Chart 240-5 also illustrates the horizontal threshold line T_{max-w} 214 that indicates the maximum temperature the intermediary processing device 120 will reach before thermal throttling. In some embodiments, the intermediary processing device 120 will shut off if the T_{max-w} 214 is exceeded for an extended period or if the temperature of the device gets too close to T_{safe-w} 212. At time t₅, as indicated by the vertical bar 230-5, the temperature of the intermediary processing device 120, indicated by line 241-5, has increased past T_{max-w} 214 and is approaching T_{safe-w} 212, which means the intermediary processing device 120 will begin thermal throttling.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the intermediary processing device 120 approaching or exceeding T_{max-w} 214) at the intermediary processing device 120 satisfies thermal throttling criteria, the intermediary processing device 120 begins thermal throttling. In some embodiments, the amount of thermal throttling of the intermediary processing device 120 varies based on how much the current temperature of the intermediary processing device 120 has exceeded T_{max-w} 214.

In some embodiments, the reduced performance of the intermediary processing device 120 due to thermal throttling of the intermediary processing device 120 is adjusted by adjusting the one or more watch performance characteristics. Adjusting the one or more watch performance characteristics can be based on one or more watch user experience indicators. The one or more watch performance characteristics of the intermediary processing device 120 can include the voltage of the watch CPU, the frequency of the watch CPU, the wireless connectivity at the watch, the cellular throughput at the watch, the video or audio transmission or playback quality at the watch, the watch display setting (e.g., on or off state, brightness, color depth, resolution, refresh rate, and/or field of view), and/or the leader status of a system of devices (e.g., whether the watch is the leader responsible for receiving and transmitting states associated with devices in the system of devices). In some embodiments, the intermediary processing device 120 continues to thermal throttle and operate with reduced performance until a determination that the operational condition at the intermediary processing device 120 no longer satisfies the thermal-throttling criteria.

Chart 250-5 shows a performance metric of the intermediary processing device 120 at the fifth point in time, t₅, as illustrated by the vertical bar 230-5. Chart 250-5 illustrates the horizontal threshold line P_{max-w} 216 that indicates the maximum performance threshold that the intermediary processing device 120 is capable of. At the time t₅, as indicated by the vertical bar 230-5, the currently utilized performance of the intermediary processing device 120, as indicated by line 251-5 has reduced as compared to the currently utilized performance of the intermediary processing device 120 at time t₄. In some embodiments, the reduction in currently utilized performance of the intermediary processing device 120 at time t₅ is in response to the intermediary processing device 120 thermal throttling as it exceeds T_{max-w}.

Chart 260-5 shows a temperature measurement of the artificial-reality headset 110 at the fifth point in time, t₅, as illustrated by vertical bar 230-5. Chart 260-5 illustrates the horizontal threshold line T_{safe-h} 222 that indicates the maximum safe temperature the artificial-reality headset 110 can reach without being harmful and/or uncomfortable for the user 100. Chart 260-5 also illustrates the horizontal threshold line Tₘₐₓ₋ₕ 224 that indicates the maximum temperature the artificial-reality headset 110 will reach before thermal throttling. In some embodiments, the artificial-reality headset 110 will shut off if the Tₘₐₓ₋ₕ is exceeded for an extended period or if the temperature of the device gets too close to T_{safe-h}. At time t₅, as indicated by the vertical bar 230-5, the temperature of the artificial-reality headset 110, as indicated by line 261-5, is below Tₘₐₓ₋ₕ, which means thermal throttling is not required for the artificial-reality headset 110 at this time.

Chart 270-5 shows the performance metric of the artificial-reality headset 110 at the fifth point in time, t₅, as illustrated by vertical bar 230-5. Chart 270-5 illustrates the horizontal threshold line Pₘₐₓ₋ₕ 226 that indicates a maximum performance threshold that the artificial-reality headset 110 is capable of. At the time t₅, as indicated by the vertical bar 230-5, the currently utilized performance of the artificial-reality headset 110, as indicated by the line 271-5, is reduced as compared to the currently utilized performance of the artificial-reality headset 110 at time t₄. The reduction in the currently utilized performance of the artificial-reality headset 110 at time t₅ can be in response to the intermediary processing device 120 thermal throttling and, as a result, reduce performance at the intermediary processing device 120. Stated another way, the artificial-reality headset 110 may reduce its performance to match the performance of the intermediary processing device 120. The reduction in the currently utilized performance of the artificial-reality headset 110 can be achieved via reducing one or more performance characteristics of the artificial-reality headset 110.

Table 280 shows the headset performance characteristics. As illustrated, the headset performance characteristics include at least the voltage of headset CPU 282, the frequency of a headset CPU 284, and the headset video display quality 286. In some embodiments, the headset performance characteristics 280 further include the cellular throughput associated with artificial-reality headset 110, the voice call quality between the intermediary processing device 120 and the artificial-reality headset 110, and audio-only operation of the artificial-reality headset 110. The headset performance characteristics can be adjusted when the artificial-reality headset 110 is throttled to match the current performance of the intermediary processing device 120 (e.g., thermal throttling of the artificial-reality headset 110 or throttling of the artificial-reality headset 110 to match the performance of another device in a system of devices). At time t₅, the headset video display quality 286 is adjusted from the default setting to 480p to reduce the performance at the artificial-reality headset 110. The default setting of the wireless connectivity 186 can include 4K resolution, 5K resolution, 8K resolution, or some other video resolution.

Table 290 shows the headset user experience indicators. The headset user experience indicators can include at least the resolution 292, the framerate, 294, the display brightness 296, and the network speed 298. The headset user experience indicators can represent how well the user 100 experiences the artificial-reality headset 110 to be operating. As shown in table 290, not all the headset user experience indicators at time t₅ are satisfied. The resolution 292 is not satisfied when the headset video display quality 286 is reduced from default to 480p. Because at least one of the headset user experience indicators is not satisfied, the artificial-reality headset 110 can revert all the headset performance characteristics to the default setting and reduce the performance of a different headset performance characteristic.

In some embodiments, headset user experience indicators that impact the user experience more are prioritized. In some embodiments, the threshold for the headset user experience indicators can be set by the artificial-reality headset 110, intermediary processing device 120, and/or the user 100.

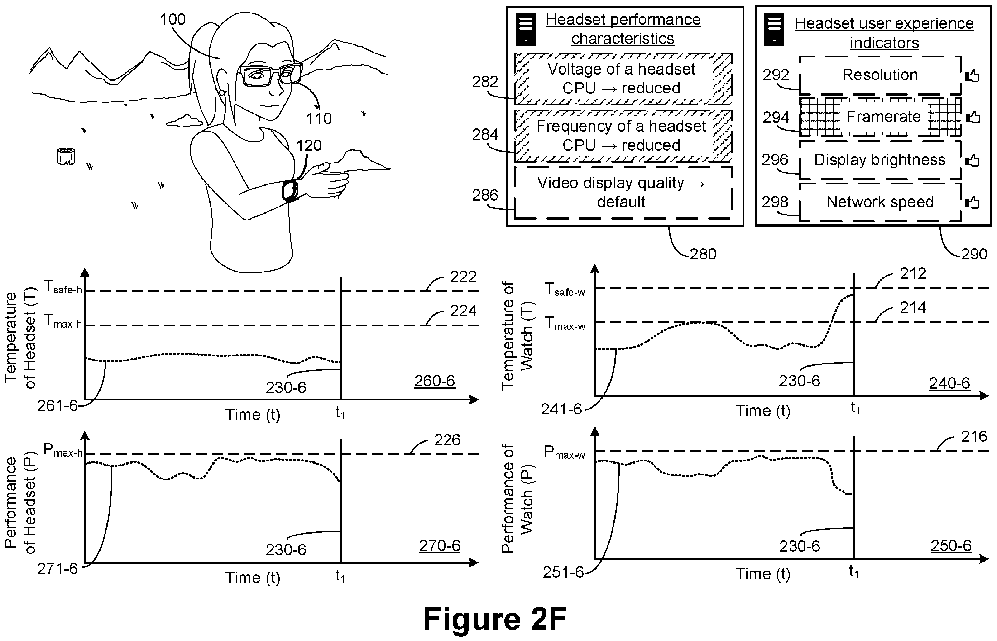

Figure 2F illustrates the user 100 wearing the artificial-reality headset 110 and the intermediary processing device 120 at the sixth point in time, t₆, in which the intermediary processing device 120 temperature has exceeded T_{max-w} 214 and the artificial-reality headset 110 has unsuccessfully already attempted to thermal throttle by reducing performance of a headset performance characteristic and is now reducing a performance of a different headset performance characteristic to match the performance of the thermal-throttling intermediary processing device 120.

Chart 240-6 shows a temperature measurement of the intermediary processing device 120 at the sixth point in time, t₆, as illustrated by vertical bar 230-6. Chart 240-6 illustrates the horizontal threshold line T_{safe-w} 212 that indicates the maximum safe temperature the intermediary processing device 120 can reach without being harmful and/or uncomfortable for the user 100. Chart 240-6 also illustrates the horizontal threshold line T_{max-w} 214 that indicates the maximum temperature the intermediary processing device 120 will reach before thermal throttling. In some embodiments, the intermediary processing device 120 will shut off if the T_{max-w} 214 is exceeded for an extended period or if the temperature of the intermediary processing device 120 gets too close to T_{safe-w} 212. At time t₆, as indicated by the vertical bar 230-6, the temperature of the intermediary processing device 120, indicated by line 241-6, remains past T_{max-w} 214, which means the intermediary processing device 120 continues to thermal throttle.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the intermediary processing device 120 approaching or exceeding T_{max-w} 214) at the intermediary processing device 120 satisfies thermal-throttling criteria, the intermediary processing device 120 begins thermal throttling. In some embodiments, the amount of thermal throttling of the intermediary processing device 120 varies based on how much the current temperature of the intermediary processing device 120 has exceeded T_{max-w} 214.

In some embodiments, the reduced performance of the intermediary processing device 120 due to thermal throttling of the intermediary processing device 120 is adjusted by adjusting the one or more watch performance characteristics. Adjusting the one or more watch performance characteristics can be based on one or more watch user experience indicators. The one or more performance characteristics of the intermediary processing device 120 can include the voltage of the watch CPU, the frequency of the watch CPU, the wireless connectivity at the watch, the cellular throughput at the watch, the video or audio transmission or playback quality at the watch, the watch display setting (e.g., on or off state, brightness, color depth, resolution, refresh rate, and/or field of view), and/or the leader status of a system of devices (e.g., whether the watch is the leader responsible for receiving and transmitting states associated with devices in the system of devices). In some embodiments, the intermediary processing device 120 continues to thermal throttle and operate with reduced performance until a determination that the operational condition at the intermediary processing device 120 no longer satisfies the thermal-throttling criteria.

Chart 250-6 shows a performance metric of the intermediary processing device 120 at the sixth point in time, t₆, as illustrated by the vertical bar 230-6. Chart 250-6 illustrates the horizontal threshold line P_{max-w} 216 that indicates the maximum performance threshold that the intermediary processing device 120 is capable of. At the time t₆, as indicated by the vertical bar 230-6, the currently utilized performance of the intermediary processing device 120, as indicated by line 251-6, has reduced as compared to the currently utilized performance of the intermediary processing device 120 at time t₄. In some embodiments, the reduction in currently utilized performance of the intermediary processing device 120 at time t₆ is in response to the intermediary processing device 120 thermal throttling as it exceeds T_{max-w}.

Chart 260-6 shows a temperature measurement of the artificial-reality headset 110 at the sixth point in time, t₆, as illustrated by vertical bar 230-6. Chart 260-6 illustrates the horizontal threshold line T_{safe-h} 222 that indicates the maximum safe temperature the artificial-reality headset 110 can reach without being harmful and/or uncomfortable for the user 100. Chart 260-6 also illustrates the horizontal threshold line Tₘₐₓ₋ₕ 224 that indicates the maximum temperature the artificial-reality headset 110 will reach before thermal throttling. In some embodiments, the artificial-reality headset 110 will shut off if the Tₘₐₓ₋ₕ is exceeded for an extended period or if the temperature of the device gets too close to T_{safe-h}. At time t₆, as indicated by the vertical bar 230-6, the temperature of the artificial-reality headset 110, as indicated by line 261-6, is below Tₘₐₓ₋ₕ, which means thermal throttling is not required for the artificial-reality headset 110 at this time.

Chart 270-6 shows a performance metric of the artificial-reality headset 110 at the sixth point in time, t₆, as illustrated by bar 230-6. Chart 270-6 illustrates the horizontal threshold line Pₘₐₓ₋ₕ 226 that indicates the maximum performance threshold that the artificial-reality headset 110 is capable of. At the time t₆, as indicated by the vertical bar 230-6, the currently utilized performance of the artificial-reality headset 110, as indicated by the line 271-6, is reduced as compared to the currently utilized performance of the artificial-reality headset 110 at time t₄. The reduction in the currently utilized performance of the artificial-reality headset 110 at time t₆ can be in response to the intermediary processing device 120 thermal throttling and, as a result, reduce performance at the intermediary processing device 120. Stated another way, the artificial-reality headset 110 may reduce its performance to match the performance of the intermediary processing device 120. The reduction in the currently utilized performance of the artificial-reality headset 110 can be achieved via reducing one or more headset performance characteristics of the artificial-reality headset 110.

Table 280 shows the headset performance characteristics. As illustrated, the headset performance characteristics include at least the voltage of the headset CPU 282, the frequency of the headset CPU 284, and the headset video display quality 286. In some embodiments, the headset performance characteristics 280 further include the cellular throughput associated with artificial-reality headset 110, the voice call quality between the intermediary processing device 120 and the artificial-reality headset 110, and audio-only operation of the artificial-reality headset 110. The headset performance characteristics can be adjusted when the artificial-reality headset 110 is throttled to match the current performance of the intermediary processing device 120 (e.g., thermal throttling of the artificial-reality headset 110 or throttling of the artificial-reality headset 110 to match the performance of another device in a system of devices). At time t₆, the headset video display quality 286 has been reverted to the default setting from the 480p setting because the headset video display quality 286 resulted in the resolution 292 (a headset user experience indicator) to not be satisfied. The voltage of the headset CPU 282 and the frequency of the watch CPU 184 is adjusted from the default setting to a reduced voltage setting and a reduced frequency setting to reduce the performance at the artificial-reality headset 110.

Table 290 shows the headset user experience indicators. The headset user experience indicators can include at least the resolution 292, the framerate 294, the display brightness 296, and the network speed 298. The headset user experience indicators can represent how well the user 100 experiences the artificial-reality headset 110 to be operating. As shown in table 290, the headset user experience indicators at time t₆ remain satisfied even with the voltage of the headset CPU 282 and the frequency of the watch CPU 184 reduced. In some embodiments, because all the headset user experience indicators are satisfied, the artificial-reality headset 110 continues to throttle via the reduction in the voltage of the headset CPU 282 and the frequency of the watch CPU 184.

In some embodiments, headset user experience indicators that impact the user experience more are prioritized. In some embodiments, the threshold for the headset user experience indicators can be set by the artificial-reality headset 110, intermediary processing device 120, and/or the user 100.

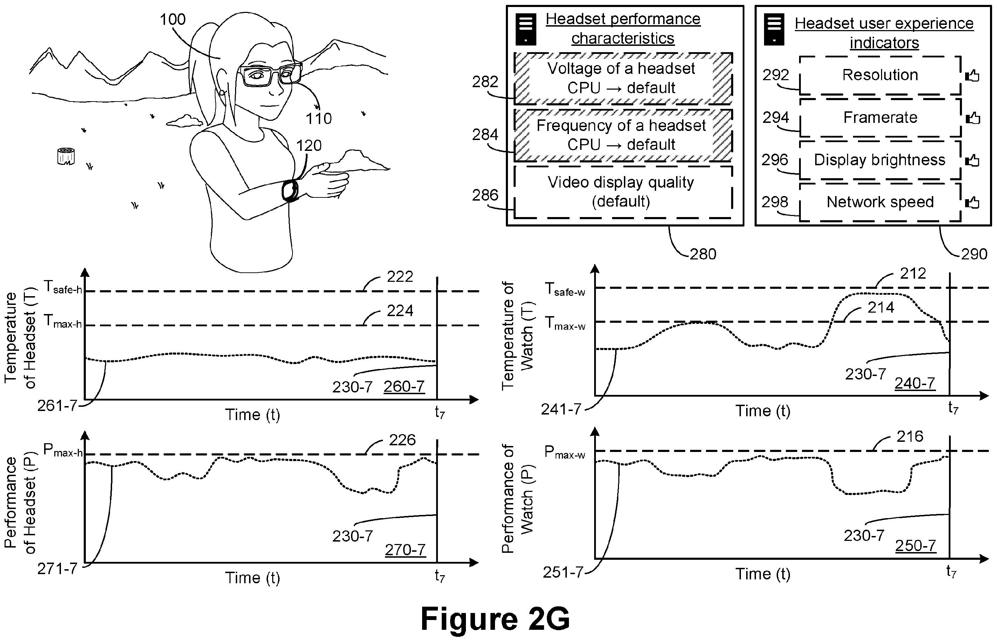

Figure 2G illustrates the user 100 wearing the artificial-reality headset 110 and the intermediary processing device 120 at the seventh point in time, t₇, as illustrated by vertical bar 130-7, in which the intermediary processing device 120 temperature has decreased from above T_{max-w} 214 to below T_{max-w} 214, causing the intermediary processing device 120 to stop thermal throttling. The artificial-reality headset 110 increases its performance to match the performance of the now non-thermal-throttling intermediary processing device 120.

Chart 240-7 shows a temperature measurement of the intermediary processing device 120 at the seventh point in time, t₇, as illustrated by vertical bar 230-7. Chart 240-7 illustrates the horizontal threshold line T_{safe-w} 212 that indicates the maximum safe temperature the intermediary processing device 120 can reach without being harmful and/or uncomfortable for the user 100. Chart 240-7 also illustrates the horizontal threshold line T_{max-w} 214 that indicates the maximum temperature the intermediary processing device 120 will reach before thermal throttling. In some embodiments, the intermediary processing device 120 will shut off if the T_{max-w} is exceeded for an extended period or if the temperature of the device gets too close to T_{safe-w}. At time t₇, as indicated by the vertical bar 230-7, the temperature of the intermediary processing device 120, indicated by line 241-7, has decreased from above T_{max-w} 214 to below T_{max-w} 214. The temperature of the intermediary processing device 120 is now below T_{max-w}, which means thermal throttling is not required for the intermediary processing device 120 at this time.

The temperature of the artificial-reality headset 110 and/or the intermediary processing device 120 can be determined at the various portions of the artificial-reality headset 110 and the intermediary processing device 120, respectively. The temperature of the artificial-reality headset 110 and/or the intermediary processing device 120 can be determined by averaging the temperature measurements taken at the various portions of the artificial-reality headset 110 and the intermediary processing device 120, respectively.

In some embodiments, in accordance with a determination that an operational condition (e.g., temperature of the intermediary processing device 120 approaching or exceeding T_{max-w} 214) at the intermediary processing device 120 satisfies thermal-throttling criteria, the intermediary processing device 120 begins thermal throttling. In some embodiments, the amount of thermal throttling of the intermediary processing device 120 varies based on how much the current temperature of the intermediary processing device 120 has exceeded T_{max-w} 214.

In some embodiments, the reduced performance of the intermediary processing device 120 due to thermal throttling of the intermediary processing device 120 is adjusted by adjusting the one or more watch performance characteristics. Adjusting the one or more watch performance characteristics can be based on one or more watch user experience indicators. The one or more performance characteristics of the intermediary processing device 120 can include the voltage of the watch CPU, the frequency of the watch CPU, the wireless connectivity at the watch, the cellular throughput at the watch, the video or audio transmission or playback quality at the watch, the watch display setting (e.g., on or off state, brightness, color depth, resolution, refresh rate, and/or field of view), and/or the leader status of a system of devices (e.g., whether the watch is the leader responsible for receiving and transmitting states associated with devices in the system of devices). In some embodiments, the intermediary processing device 120 continues to thermal throttle and operate with reduced performance until a determination that the operational condition at the intermediary processing device 120 no longer satisfies the thermal-throttling criteria.

Chart 250-7 shows a performance metric of the intermediary processing device 120 at the seventh point in time, t₇, as illustrated by vertical bar 230-7. Chart 250-7 illustrates the horizontal threshold line Pₘₐₓ₋ₕ 116 that indicates a maximum performance threshold that the intermediary processing device 120 is capable of. At the time t₇, as indicated by the vertical bar 230-7, the currently utilized performance of the intermediary processing device 120, as indicated by line 251-7, has increased as compared to the reduced currently utilized performance of the intermediary processing device 120 at time t₆. The currently utilized performance of the intermediary processing device 120, as indicated by line 251-7, is approximate to the maximum performance threshold P_{max-w} 216. For example, because the intermediary processing device 120 is not thermal throttling, the intermediary processing device 120 can utilize up to the maximum performance threshold P_{max-w} 216.

Chart 260-7 shows a temperature measurement of the artificial-reality headset 110 at the seventh point in time, t₇, as illustrated by vertical bar 230-7. Chart 260-7 illustrates the horizontal threshold line T_{safe-h} 222 that indicates the maximum safe temperature the artificial-reality headset 110 can reach without being harmful and/or uncomfortable for the user 100. Chart 260-7 also illustrates the horizontal threshold line Tₘₐₓ₋ₕ 224 that indicates the maximum temperature the artificial-reality headset 110 will reach before thermal throttling. In some embodiments, the artificial-reality headset 110 will shut off if the Tₘₐₓ₋ₕ is exceeded for an extended period or if the temperature of the device gets too close to T_{safe-h}. At time t₇, as indicated by the vertical bar 230-7, the temperature of the artificial-reality headset 110, indicated by line 261-7, is below Tₘₐₓ₋ₕ, which means thermal throttling is not required for the artificial-reality headset 110 at this time.

Chart 270-7 shows a performance metric of the artificial-reality headset 110 at the seventh point in time, t₇, as illustrated by bar 30-7. Chart 270-7 illustrates a horizontal threshold line Pₘₐₓ₋ₕ 226 that indicates the maximum performance threshold that the artificial-reality headset 110 is capable of. At the time t₇, as indicated by the vertical bar 230-7, the currently utilized performance of the artificial-reality headset 110, as indicated by line 271-7, is increased as compared to the reduced currently utilized performance of the artificial-reality headset 110 at time t₆. In some embodiments, the increase in the currently utilized performance of the artificial-reality headset 110 at time t₇ can be in response to the intermediary processing device 120 no longer thermal throttling and, as a result, increasing or reverting the performance of the intermediary processing device 120 to the non-throttled setting. For example, because the artificial-reality headset 110 and the intermediary processing device 120 are not thermal throttling, the artificial-reality headset 110 can utilize up to the maximum performance threshold Pₘₐₓ₋ₕ 226.

Table 280 shows the headset performance characteristics. As illustrated, the headset performance characteristics include at least the voltage of the headset CPU 282, the frequency of the headset CPU 284, and the headset video display quality 286. In some embodiments, the headset performance characteristics 280 further include the cellular throughput associated with artificial-reality headset 110, the voice call quality between the intermediary processing device 120 and the artificial-reality headset 110, and audio-only operation of the artificial-reality headset 110. The headset performance characteristics can be adjusted when the artificial-reality headset 110 is throttled to match the current performance of the intermediary processing device 120 (e.g., thermal throttling of the artificial-reality headset 110 or throttling of the artificial-reality headset 110 to match the performance of another device in a system of devices). At time t₇, the headset performance characteristics are reverted to the default setting. For example, the voltage of the headset CPU 282 and the frequency of the watch CPU 184 are adjusted from the reduced voltage and the reduced frequency to the default setting. All the headset performance characteristics can continue to be in a default setting while neither the artificial-reality headset 110 nor the intermediary processing device 120 is throttled. In some embodiments, the default setting for the headset performance characteristics is the setting that yields the maximum performance threshold Pₘₐₓ₋ₕ 226 at the artificial-reality headset 110.

Table 290 shows the headset user experience indicators. The headset user experience indicators can include at least the resolution 292, the framerate 294, the display brightness 296, and the network speed 298. The headset user experience indicators can represent how well the user 100 experiences the artificial-reality headset 110 to be operating. As shown in table 290, the headset user experience indicators at time t₇ remain satisfied as the voltage of the headset CPU 282 and the frequency of the headset CPU are reverted from a reduced voltage and a reduced frequency back to the default setting. In some embodiments, the headset user experience indicators are satisfied when all headset performance characteristics are operating in the default setting.

In some embodiments, headset user experience indicators that impact the user experience more are prioritized. In some embodiments, the threshold for the headset user experience indicators can be set by the artificial-reality headset 110, intermediary processing device 120, and/or the user 100.

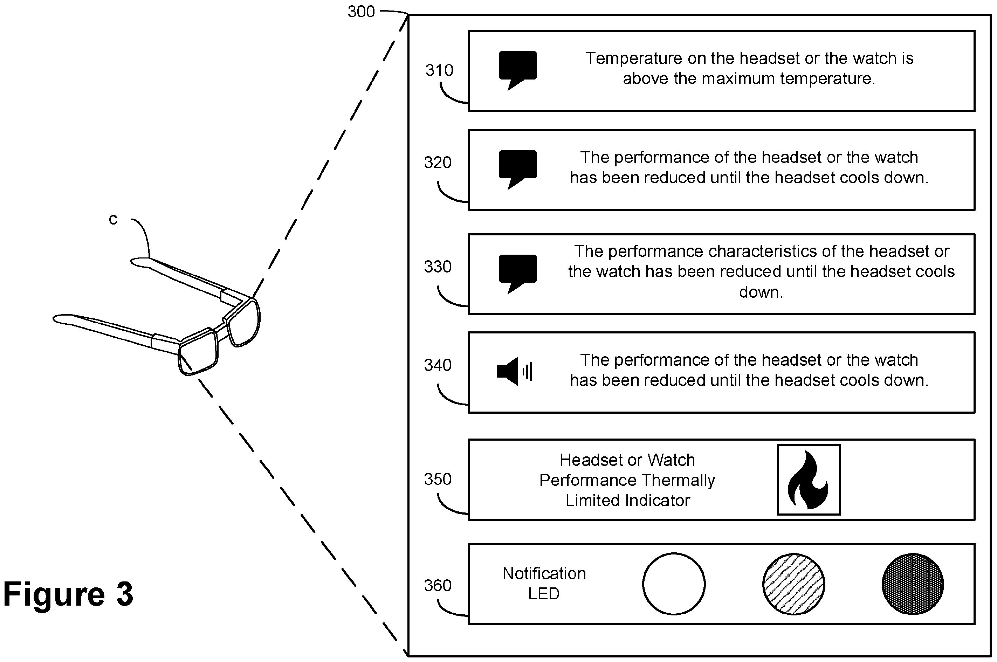

Figure 3 illustrates example notifications 300 (also referred to interchangeably as alerts 300) that are displayed at the artificial-reality headset 110 when the intermediary processing device is thermal throttling, in accordance with some embodiments.

In some embodiments, the notifications 300 are displayed to the user on a display of the artificial-reality headset 110. The display can be the same display that displays content (e.g., video stream, video game stream, and/or text) to the user. The notifications 300 can be displayed in a portion of the display. For example, the notifications 300 are displayed temporarily in the corner of the display. In this example, the notifications 300 are displayed while allowing the user to continue to view the content on the artificial-reality headset 110. Stated another way, the notifications 300 only obstruct a portion of the content. The notifications 300 can be displayed on the entire display. Forexample, the notifications 300 are displayed in full screen. In this example, the content cannot be seen while the notifications 300 are displayed. This may be advantageous to increase the likelihood that the user sees the notifications 300.

In some embodiments, a notification 310 is displayed on the artificial-reality headset 110 regarding the temperature of the artificial-reality headset 110 and/or the intermediary processing device being above a maximum temperature. The notification 310 can be displayed when the artificial-reality headset 110, the intermediary processing device, or both exceed a specified temperature limit (e.g., a maximum temperature). More than one temperature limit can be specified (e.g., a maximum temperature and a safe temperature). The exact temperature of the artificial-reality device 110 and the intermediary processing device can be displayed to the user. The temperature of both the artificial-reality headset 110 and the intermediary processing device can be concurrently displayed to the user.

In some embodiments, a notification 320 is displayed on the artificial-reality headset 110 regarding the performance of the artificial-reality device 110 and/or the intermediary processing device being thermally throttled until the artificial-reality device 110 or the intermediary processing device are below the temperature for thermal throttling. The performance of the artificial-reality headset 110 and/or the intermediary processing device can be binary (e.g., the performance is either in a normal state or a reduced state). The performance of the artificial-reality headset 110 and/or the intermediary processing device can be quantified (e.g., the performance at the artificial-reality device has been reduced by 10%). The performance of the artificial-reality headset 110 and/or the intermediary processing device can be categorized (e.g., the performance at the intermediary processing device is now medium).

In some embodiments, a notification 330 is displayed on the artificial-reality headset 110 regarding the performance characteristics of the artificial-reality headset 110 and/or the intermediary processing device. The notification 330 can include information regarding which performance characteristic has been adjusted (e.g., increased or reduced). For example, the notification 330 specifies that the resolution at the artificial-reality headset 110 has been reduced from 4K to 1080p. In another example, when two performance characteristics (e.g., voltage and frequency of the intermediary processing device CPU) are adjusted, one or more notifications 330 display the reduction to the voltage and the frequency of the intermediary processing device CPU. Stated another way, when more than one performance characteristic is adjusted, more than one notification 330 regarding the adjustment can be displayed to the user.

In some embodiments, an audio notification 340 of the performance of the artificial-reality device 110 or the intermediary processing device being thermally throttled until the artificial-reality device 110 or the intermediary processing device are below the temperature for thermal throttling is presented to the user. The audio notification 340 can also provide information regarding the temperature of the artificial-reality device 110 or the intermediary processing device being above the maximum temperature. The audio notification 340 can also provide information regarding the performance characteristics of the artificial-reality headset 110 or the intermediary processing device.

In some embodiments, an icon 350 is displayed on the artificial-reality headset 110 to indicate to the user that the artificial-reality headset 110 and/or the intermediary processing device performance is limited. The icon 350 can also indicate to the user that the temperature of the artificial-reality device 110 and/or the intermediary processing device is above the maximum temperature. The icon 350 can also indicate to the user that the performance characteristics of the artificial-reality headset 110 and/or the intermediary processing device. The icon 350 can include a plurality of icons to represent different performance characteristics. The icon 350 can be displayed concurrently with other notifications or alerts 300. The icon 350 can persist when an associated notification or alert 300 is dismissed. The icon 350 can be removed (e.g., automatically disappear) when the artificial-reality headset 110 and/or the intermediary processing device performance is not limited.

In some embodiments, a light-emitting diode (LED) light 360 at the artificial-reality headset 110 is enabled to indicate to the user that the artificial-reality headset 110 and/or the intermediary processing device performance is limited. The LED light 360 can include different colors to represent different temperatures, devices, performance characteristics, or severity of the performance reduction. The LED light 360 can flash in one or more patterns to represent different temperatures, devices, performance characteristics, or severity of the performance reduction. The LED light 360 can use a combination of colors and flashing patterns. The LED light 360 can include a plurality of LED lights (e.g., a light strip and/or a light array).

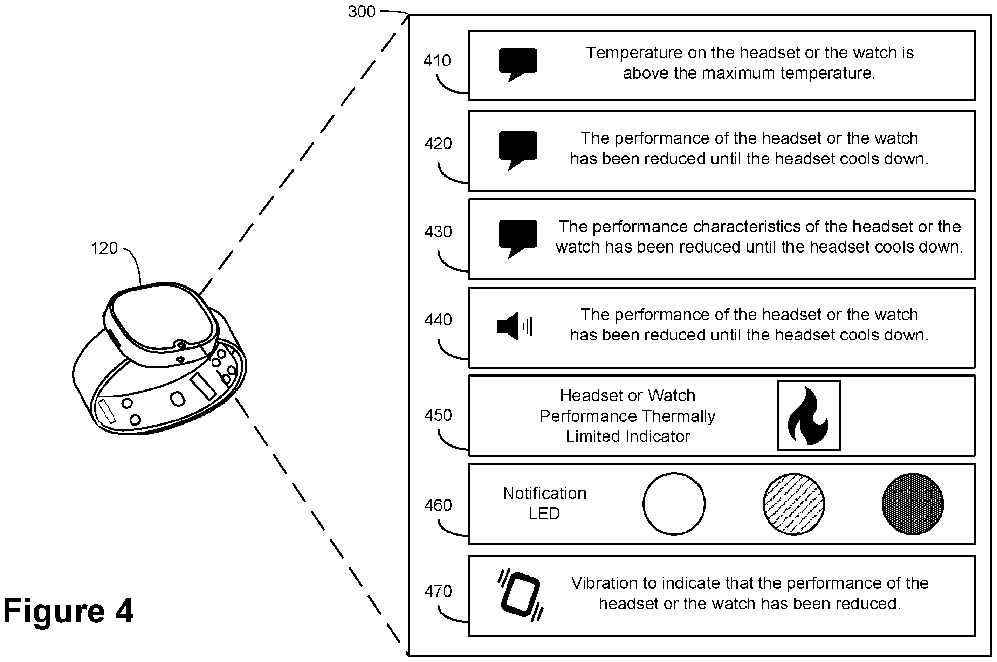

Figure 4 illustrates example notifications 300 (also referred to interchangeably as alerts 300) that are displayed at the intermediary processing device when the artificial-reality headset is thermal throttling, in accordance with some embodiments.

In some embodiments, the notifications 300 are displayed to the user on a display of the intermediary processing device 120. The display can be the same display that displays content (e.g., time, weather, and/or text) to the user. The notifications 300 can be displayed in a portion of the display. For example, the notifications 300 are displayed temporarily in the top region of the display. In this example, the notifications 300 are displayed while allowing the user to continue to view the content on the intermediary processing device 120. Stated another way, the notifications 300 only obstruct a portion of the content. The notifications 300 can be displayed on the entire display. For example, the notifications 300 are displayed in full screen. In this example, the content cannot be seen while the notifications 300 are displayed. This may be advantageous to increase the likelihood that the user sees the notifications 300.

In some embodiments, a notification 310 is displayed on intermediary processing device 120 regarding the temperature of the artificial-reality headset and/or the intermediary processing device 120 being above a maximum temperature. The notification 310 can be displayed when the artificial-reality headset, the intermediary processing device 120, or both exceed a specified temperature limit (e.g., a maximum temperature). More than one temperature limit can be specified (e.g., a maximum temperature and a safe temperature). The exact temperature of the artificial-reality device and the intermediary processing device 120 can be displayed to the user. The temperature of both the artificial-reality headset and the intermediary processing device 120 can be concurrently displayed to the user.

In some embodiments, a notification 320 is displayed on the intermediary processing device 120 regarding the performance of the artificial-reality device and/or the intermediary processing device 120 being thermally throttled until the artificial-reality device or the intermediary processing device 120 are below the temperature for thermal throttling. The performance of the artificial-reality headset and/or the intermediary processing device 120 can be binary (e.g., the performance is either in a normal state or a reduced state). The performance of the artificial-reality headset and/or the intermediary processing device 120 can be quantified (e.g., the performance at the artificial-reality device has been reduced by 10%). The performance of the artificial-reality headset and/or the intermediary processing device 120 can be categorized (e.g., the performance at the intermediary processing device is now medium).

In some embodiments, a notification 330 is displayed on intermediary processing device 120 regarding the performance characteristics of the artificial-reality headset and/or the intermediary processing device 120. The notification 330 can include information regarding which performance characteristic has been adjusted (e.g., increased or reduced). For example, the notification 330 specifies that the watch display brightness at the intermediary processing device 120 has been reduced from the maximum brightness to 50% brightness. In another example, when two performance characteristics (e.g., voltage and frequency of the intermediary processing device CPU) are adjusted, one or more notifications 330 display the reduction to the voltage and the frequency of the intermediary processing device CPU. Stated another way, when more than one performance characteristic is adjusted, more than one notification 330 regarding the adjustment can be displayed to the user.

In some embodiments, an audio notification 340 of the performance of the artificial-reality device or the intermediary processing device 120 being thermally throttled until the artificial-reality device or the intermediary processing device 120 are below the temperature for thermal throttling is presented to the user. The audio notification 340 can also provide information regarding the temperature of the artificial-reality device or the intermediary processing device 120 being above the maximum temperature. The audio notification 340 can also provide information regarding the performance characteristics of the artificial-reality headset or the intermediary processing device 120.

In some embodiments, an icon 350 is displayed on the artificial-reality headset 110 to indicate to the user that the artificial-reality headset and/or the intermediary processing device performance 120 is limited. The icon 350 can also indicate to the user that the temperature of the artificial-reality device and/or the intermediary processing device 120 is above the maximum temperature. The icon 350 can also indicate to the user that the performance characteristics of the artificial-reality headset and/or the intermediary processing device 120. The icon 350 can include a plurality of icons to represent different performance characteristics. The icon 350 can be displayed concurrently with other notifications or alerts 300. The icon 350 can persist when an associated notification or alert 300 is dismissed. The icon 350 can be removed (e.g., automatically disappear) when the artificial-reality headset and/or the intermediary processing device 120 performance is not limited.

In some embodiments, an LED light 360 at the artificial-reality headset 110 is activated to indicate to the user that the artificial-reality headset and/or the intermediary processing device 120 performance is limited. The LED light 360 can include different colors to represent different temperatures, devices, performance characteristics, or severity of the performance reduction. The LED light 360 can flash in one or more patterns to represent different temperatures, devices, performance characteristics, or severity of the performance reduction. The LED light 360 can use a combination of colors and flashing patterns. The LED light 360 can include a plurality of LED lights (e.g., a light strip and/or a light array).

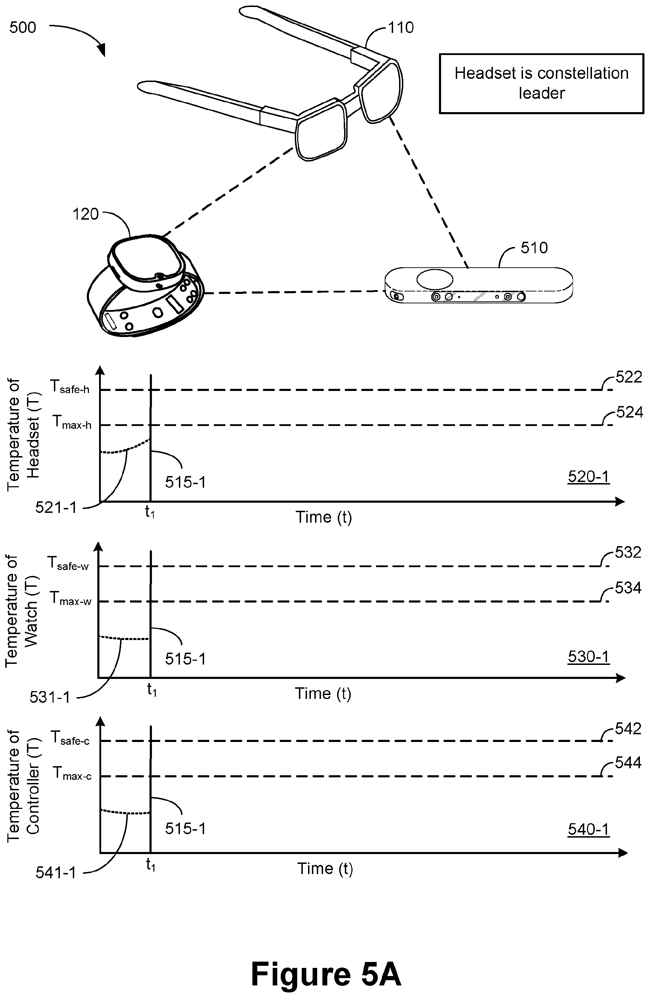

Figures 5A-5D illustrate an example selection of leader of a system of devices based on which device in the system of devices is thermal throttling, in accordance with some embodiments.

Figure 5A illustrates an example artificial-reality headset 110 as the default leader of the system of devices 500 that includes at least an artificial-reality headset 110, an intermediary processing device 120, and a controller 510. The artificial-reality headset 110 can be the default leader when the system of devices 500 is not thermal throttling (e.g., the artificial-reality headset 110, the intermediary processing device 120, and the controller 510 do not exceed Tₘₐₓ₋ₕ 524, T_{max-w} 534, and T_{max-c} 544, respectively). Information regarding the devices of the system of devices 500 can be routed via the leader of the system of devices 500. Stated another way, the status information of the respective devices of the system of devices is provided from the device to the leader of the system of devices 500 where the leader then processes the received status information before sending the status information and/or instructions based on the status information to the devices of the system of devices.

Chart 520-1 shows a temperature measurement of the artificial-reality headset 110 at a first point in time, t₁, as illustrated by vertical bar 515-1. Chart 520-1 illustrates a horizontal threshold line 522 (labeled 'T_{safe-h}') that indicates a maximum safe temperature the artificial-reality headset 110 can reach without being harmful and/or uncomfortable for the user. Chart 520-1 also illustrates another horizontal threshold line 524 (labeled 'Tₘₐₓ₋ₙ') that indicates a maximum temperature the artificial-reality headset 110 will reach before thermal throttling. At time t₁, as indicated by the vertical bar 515-1, the temperature of the artificial-reality headset 110, indicated by line 521-1, is below Tₘₐₓ₋ₕ 524, which means thermal throttling is not required for the artificial-reality headset 110 at this time. When the artificial-reality headset 110 is not thermal throttling, the artificial-reality headset 110 is eligible to be the leader of the system of devices 500. In some embodiments, the artificial-reality headset 110 is the default leader of the system of devices 500. For example, when the artificial-reality headset 110 is available to be the leader of the system of devices 500, the artificial-reality headset 110 has the highest priority in assuming the leader role in the system of devices 500.

Chart 530-1 shows a temperature measurement of the intermediary processing device 120 at a first point in time, t₁, as illustrated by vertical bar 515-1. Chart 530-1 illustrates a horizontal threshold line 532 (labeled 'T_{safe-w}') that indicates a maximum safe temperature the intermediary processing device 120 can reach without being harmful and/or uncomfortable for the user. Chart 530-1 also illustrates another horizontal threshold line 534 (labeled 'Tₘₐₓ₋ₙ') that indicates a maximum temperature the intermediary processing device 120 will reach before thermal throttling. At time t₁, as indicated by the vertical bar 515-1, the temperature of the intermediary processing device 120, indicated by line 531-1, is below T_{max-w} 534, which means thermal throttling is not required for the intermediary processing device 120 at this time. When the intermediary processing device 120 is not thermal throttling, the intermediary processing device 120 is eligible to be the leader of the system of devices 500. In some embodiments, the intermediary processing device 120 is the default leader of the system of devices 500. For example, when the intermediary processing device 120 is available to be the leader of the system of devices 500, the intermediary processing device 120 has the highest priority in assuming the leader role in the system of devices 500.

Chart 540-1 shows a temperature measurement of the controller 510 at a first point in time, t₁, as illustrated by vertical bar 515-1. Chart 540-1 illustrates a horizontal threshold line 542 (labeled 'T_{safe-c}') that indicates a maximum safe temperature the controller 510 can reach without being harmful and/or uncomfortable for the user. Chart 540-1 also illustrates another horizontal threshold line 544 (labeled 'T_{max-c}') that indicates a maximum temperature the controller 510 will reach before thermal throttling. At time t₁, as indicated by the vertical bar 515-1, the temperature of the controller 510, indicated by line 541-1, is below T_{max-c} 544, which means thermal throttling is not required for the controller 510 at this time. When the controller 510 is not thermal throttling, the controller 510 is eligible to be the leader of the system of devices 500. In some embodiments, the controller 510 is the default leader of the system of devices 500. For example, when the controller 510 is available to be the leader of the system of devices 500, the controller 510 has the highest priority in assuming the leader role in the system of devices 500.

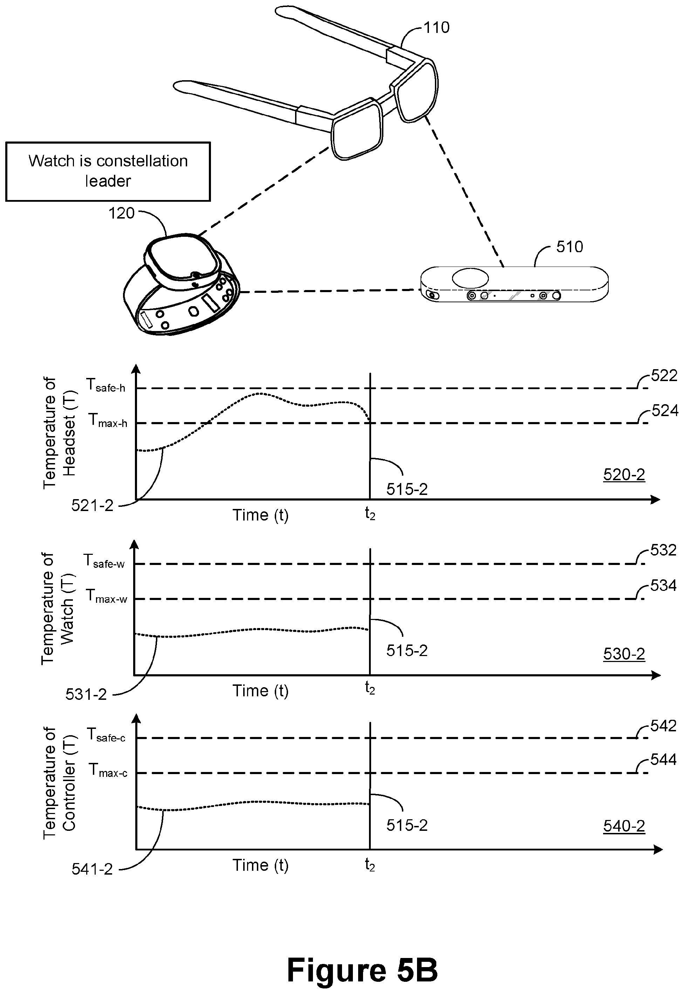

Figure 5B illustrates an example intermediary processing device 120 as the leader of the system of devices 500 (e.g., an artificial-reality headset 110, an intermediary processing device 120, and a controller 510) when the artificial-reality headset 110 is thermal throttling. Information regarding the devices of the system of devices 500 can be routed via the leader of the system of devices 500. Stated another way, the status information of the respective devices of the system of devices is provided from the device to the leader of the system of devices 500 where the leader then processes the received status information before sending the status information and/or instructions based on the status information to the devices of the system of devices.

Chart 520-2 shows a temperature measurement of the artificial-reality headset 110 at a second point in time, t₂, as illustrated by vertical bar 515-2. Chart 520-2 illustrates a horizontal threshold line 522 (labeled 'T_{safe-h}') that indicates a maximum safe temperature the artificial-reality headset 110 can reach without being harmful and/or uncomfortable for the user. Chart 520-2 also illustrates another horizontal threshold line 524 (labeled 'Tₘₐₓ₋ₙ') that indicates a maximum temperature the artificial-reality headset 110 will reach before thermal throttling. At time t₂, as indicated by the vertical bar 515-2, the temperature of the artificial-reality headset 110, indicated by line 521-2, is above Tₘₐₓ₋ₕ 524, which means the artificial-reality headset will begin thermal throttling. When the artificial-reality headset 110 is thermal throttling, the artificial-reality headset 110 is not eligible to be the leader of the system of devices 500. The artificial-reality headset 110 may not be eligible to be the leader of system of devices 500 as a result of reducing the performance of the artificial-reality headset 110 to reduce the heat generated at the artificial-reality headset 110.

Chart 530-2 shows a temperature measurement of the intermediary processing device 120 at a second point in time, t₂, as illustrated by vertical bar 515-2. Chart 530-2 illustrates a horizontal threshold line 532 (labeled 'T_{safe-w}') that indicates a maximum safe temperature the intermediary processing device 120 can reach without being harmful and/or uncomfortable for the user. Chart 530-2 also illustrates another horizontal threshold line 534 (labeled 'Tₘₐₓ₋ₕ') that indicates a maximum temperature the intermediary processing device 120 will reach before thermal throttling. At time t₂, as indicated by the vertical bar 515-2, the temperature of the intermediary processing device 120, indicated by line 531-2, is below T_{max-w} 534, which means thermal throttling is not required for the intermediary processing device 120 at this time.

In some embodiments, when the artificial-reality headset 110 is not eligible to be the leader of system of devices 500, the intermediary processing device 120 is selected as the leader of the system of devices 500 if the intermediary processing device 120 is not also thermal throttling. For example, when the artificial-reality headset 110 is not eligible (e.g., available) to be the leader of the system of devices 500, the intermediary processing device 120 has the highest priority in assuming the leader role in the system of devices 500.

Chart 540-2 shows a temperature measurement of the controller 510 at a second point in time, t₂, as illustrated by vertical bar 515-2. Chart 540-2 illustrates a horizontal threshold line 542 (labeled 'T_{safe-c}') that indicates a maximum safe temperature the controller 510 can reach without being harmful and/or uncomfortable for the user. Chart 540-2 also illustrates another horizontal threshold line 544 (labeled 'T_{max-c}') that indicates a maximum temperature the controller 510 will reach before thermal throttling. At time t₂, as indicated by the vertical bar 515-2, the temperature of the controller 510, indicated by line 541-2, is below T_{max-c} 544, which means thermal throttling is not required for the controller 510 at this time. When the controller 510 is not thermal throttling, the controller 510 is eligible to be the leader of the system of devices 500.

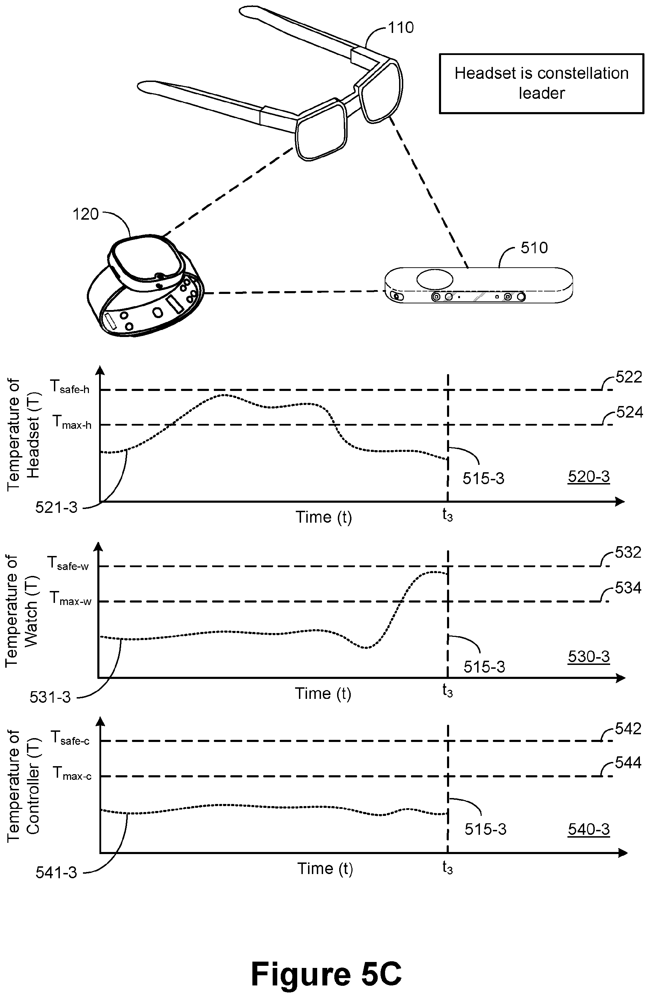

Figure 5C illustrates an example artificial-reality headset 110 as the leader of the system of devices 500 (e.g., an artificial-reality headset 110, an intermediary processing device 120, and a controller 510) when the intermediary processing device 120 is thermal throttling. Information regarding the devices of the system of devices 500 can be routed via the leader of the system of devices 500. Stated another way, the status information of the respective devices of the system of devices is provided from the device to the leader of the system of devices 500 where the leader then processes the received status information before sending the status information and/or instructions based on the status information to the devices of the system of devices.

Chart 520-3 shows a temperature measurement of the artificial-reality headset 110 at a third point in time, t₃, as illustrated by vertical bar 515-3. Chart 520-3 illustrates a horizontal threshold line 522 (labeled 'T_{safe-h}') that indicates a maximum safe temperature the artificial-reality headset 110 can reach without being harmful and/or uncomfortable for the user. Chart 520-3 also illustrates another horizontal threshold line 524 (labeled 'Tₘₐₓ₋ₙ') that indicates a maximum temperature the artificial-reality headset 110 will reach before thermal throttling. At time t₃, as indicated by the vertical bar 515-3, the temperature of the artificial-reality headset 110, indicated by line 521-3, is below Tₘₐₓ₋ₕ 524, which means thermal throttling is not required for the artificial-reality headset 110 at this time. When the artificial-reality headset 110 is not thermal throttling, the artificial-reality headset 110 is eligible to be the leader of the system of devices 500. In some embodiments, the artificial-reality headset 110 is the default leader of the system of devices 500. For example, when the artificial-reality headset 110 is available to be the leader of the system of devices 500, the artificial-reality headset 110 has the highest priority in assuming the leader role in the system of devices 500.

Chart 530-3 shows a temperature measurement of the intermediary processing device 120 at a third point in time, t₃, as illustrated by vertical bar 515-3. Chart 530-3 illustrates a horizontal threshold line 532 (labeled 'T_{safe-w}') that indicates a maximum safe temperature the intermediary processing device 120 can reach without being harmful and/or uncomfortable for the user. Chart 530-3 also illustrates another horizontal threshold line 534 (labeled 'Tₘₐₓ₋ₕ') that indicates a maximum temperature the intermediary processing device 120 will reach before thermal throttling. At time t₃, as indicated by the vertical bar 515-3, the temperature of the intermediary processing device 120, indicated by line 531-3, is above T_{max-w} 534, which means the intermediary processing device 120 will begin thermal throttling. When the intermediary processing device 120 is thermal throttling, the intermediary processing device 120 is not eligible to be the leader of the system of devices 500. The intermediary processing device 120 may not be eligible to be the leader of system of devices 500 as a result of reducing the performance of the intermediary processing device 120 to reduce the heat generated at the intermediary processing device 120.

In some embodiments, when the intermediary processing device 120 is not eligible to be the leader of system of devices 500, the artificial-reality headset 110 is selected as the leader of the system of devices 500 if the artificial-reality headset 110 is not also thermal throttling. For example, when the intermediary processing device 120 is not eligible (e.g., available) to be the leader of the system of devices 500, the artificial-reality headset 110 has the highest priority in assuming the leader role in the system of devices 500.

Chart 540-3 shows a temperature measurement of the controller 510 at a third point in time, t₃, as illustrated by vertical bar 515-3. Chart 540-3 illustrates a horizontal threshold line 542 (labeled 'T_{safe-c}') that indicates a maximum safe temperature the controller 510 can reach without being harmful and/or uncomfortable for the user. Chart 540-3 also illustrates another horizontal threshold line 544 (labeled 'T_{max-c}') that indicates a maximum temperature the controller 510 will reach before thermal throttling. At time t₃, as indicated by the vertical bar 515-3, the temperature of the controller 510, indicated by line 541-3, is below T_{max-c} 544, which means thermal throttling is not required for the controller 510 at this time. When the controller 510 is not thermal throttling, the controller 510 is eligible to be the leader of the system of devices 500.

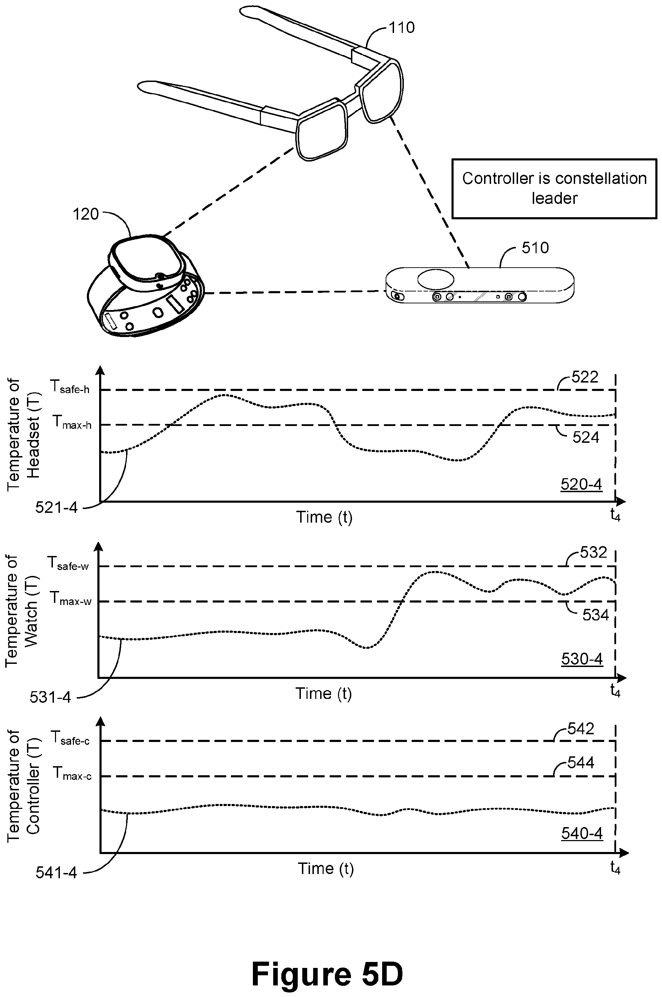

Figure 5D illustrates an example controller 510 as the leader of the system of devices 500 (e.g., an artificial-reality headset 110, an intermediary processing device 120, and a controller 510) when the artificial-reality headset 110 and the intermediary processing device 120 are thermal throttling. Information regarding the devices of the system of devices 500 can be routed via the leader of the system of devices 500. Stated another way, the status information of the respective devices of the system of devices is provided from the device to the leader of the system of devices 500 where the leader then processes the received status information before sending the status information and/or instructions based on the status information to the devices of the system of devices.

Chart 520-4 shows a temperature measurement of the artificial-reality headset 110 at a fourth point in time, t₄, as illustrated by vertical bar 515-4. Chart 520-4 illustrates a horizontal threshold line 522 (labeled 'T_{safe-h}') that indicates a maximum safe temperature the artificial-reality headset 110 can reach without being harmful and/or uncomfortable for the user. Chart 520-4 also illustrates another horizontal threshold line 524 (labeled 'Tₘₐₓ₋ₙ') that indicates a maximum temperature the artificial-reality headset 110 will reach before thermal throttling. At time t₄, as indicated by the vertical bar 515-4, the temperature of the artificial-reality headset 110, indicated by line 521-4, is above Tₘₐₓ₋ₕ 524, which means the artificial-reality headset will begin thermal throttling. When the artificial-reality headset 110 is thermal throttling, the artificial-reality headset 110 is not eligible to be the leader of the system of devices 500. The artificial-reality headset 110 may not be eligible to be the leader of system of devices 500 as a result of reducing the performance of the artificial-reality headset 110 to reduce the heat generated at the artificial-reality headset 110.

Chart 530-4 shows a temperature measurement of the intermediary processing device 120 at a fourth point in time, t₄, as illustrated by vertical bar 515-4. Chart 530-4 illustrates a horizontal threshold line 532 (labeled 'T_{safe-w}') that indicates a maximum safe temperature the intermediary processing device 120 can reach without being harmful and/or uncomfortable for the user. Chart 530-4 also illustrates another horizontal threshold line 534 (labeled 'Tₘₐₓ₋ₕ') that indicates a maximum temperature the intermediary processing device 120 will reach before thermal throttling. At time t₄, as indicated by the vertical bar 515-4, the temperature of the intermediary processing device 120, indicated by line 531-4, is above T_{max-w} 534, which means the intermediary processing device 120 will begin thermal throttling. When the intermediary processing device 120 is thermal throttling, the intermediary processing device 120 is not eligible to be the leader of the system of devices 500. The intermediary processing device 120 may not be eligible to be the leader of system of devices 500 as a result of reducing the performance of the intermediary processing device 120 to reduce the heat generated at the intermediary processing device 120.

In some embodiments, when the artificial-reality headset 110 and the intermediary processing device 120 are not eligible to be the leader of system of devices 500, the controller 510 is selected as the leader of the system of devices 500 if the controller 510 is not also thermal throttling. For example, when the artificial-reality headset 110 and the intermediary processing device 120 are not eligible (e.g., available) to be the leader of the system of devices 500, the controller 510 has the highest priority in assuming the leader role in the system of devices 500.

Chart 540-4 shows a temperature measurement of the controller 510 at a fourth point in time, t₄, as illustrated by vertical bar 515-4. Chart 540-4 illustrates a horizontal threshold line 542 (labeled 'T_{safe-c}') that indicates a maximum safe temperature the controller 510 can reach without being harmful and/or uncomfortable for the user. Chart 540-4 also illustrates another horizontal threshold line 544 (labeled 'T_{max-c}') that indicates a maximum temperature the controller 510 will reach before thermal throttling. At time t₄, as indicated by the vertical bar 515-4, the temperature of the controller 510, indicated by line 541-4, is below T_{max-c} 544, which means thermal throttling is not required for the controller 510 at this time. When the controller 510 is not thermal throttling, the controller 510 is eligible to be the leader of the system of devices 500.

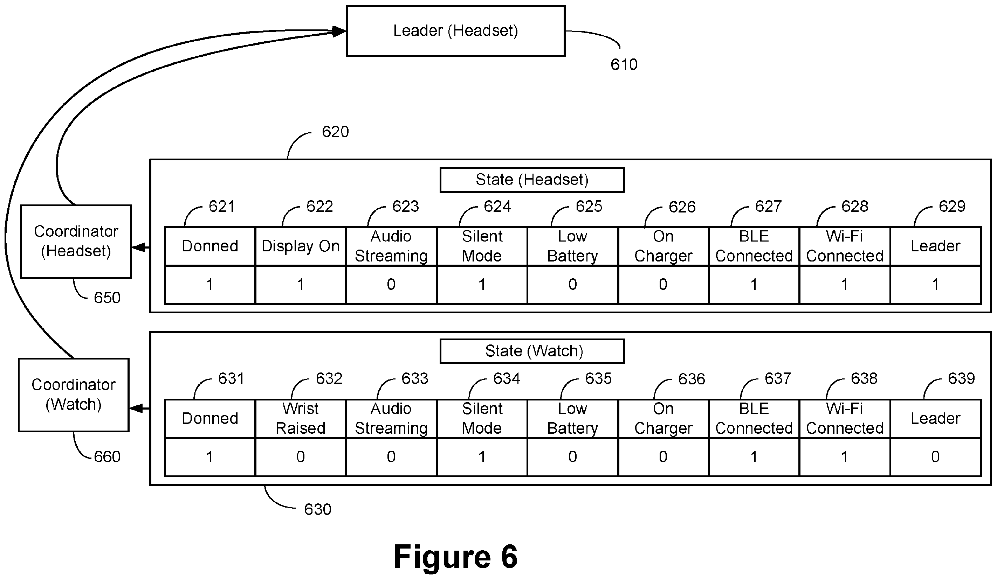

Figure 6 illustrates example device states at an artificial-reality headset and at an intermediary processing device. In some embodiments, the artificial-reality headset includes one or more artificial-reality headset states 620, and the intermediary processing device includes one or more intermediary processing device states 630. The artificial-reality headset states 620 includes donned state 621, display on state 622, audio streaming state 623, silent mode state 624, low battery state 625, on charger state 626, bluetooth low energy (BLE) connected state 627, Wi-Fi connected state 628, and leader state 629. The intermediary processing device states 630 includes donned state 621, wrist raised state 622, audio streaming state 623, silent mode state 624, low battery state 625, on charger state 626, BLE connected state 627, Wi-Fi connected state 628, and leader state 629. In some embodiments, the artificial-reality headset states 620 and the intermediary processing device states 630 can have one or more states that are monitored for both the artificial-reality headset and the intermediary processing device. For example, as shown in Figure 6, the donned state 621, 631, the audio streaming state 623, 633, the silent mode state 623, 634, the low battery state 625, 635, the on charger state 626, 636, the BLE state 627, 637, Wi-Fi connected state 628, 638, and leader state 629, 639 are monitored for both the artificial-reality headset and the intermediary processing device. In some embodiments, at least one of the artificial-reality headset states 620 is distinct from the intermediary processing device states 630. In another example, as shown in Figure 6, the display on state 622 is only monitored on the artificial-reality headset and the wrist raised state 632 is only monitored on the intermediary processing device.

The artificial-reality headset states 620 can be provided to the artificial-reality headset coordinator 650. The artificial-reality headset coordinator 650 can then send the artificial-reality headset states 620 to the leader 610. As shown in Figure 6, the leader 610 is the artificial-reality headset. The intermediary processing device states 630 can be provided to the intermediary processing device coordinator 660. The intermediary processing device coordinator 660 can then send the artificial-reality headset states 630 to the leader 610. At least one advantage to the artificial-reality headset states 620 and the intermediary processing device states being sent to the leader 610 is that there is one ground truth for the system of devices. The leader 610 can then provide instructions to the devices in the system of devices based on the states 620, 630 received by the leader 610.

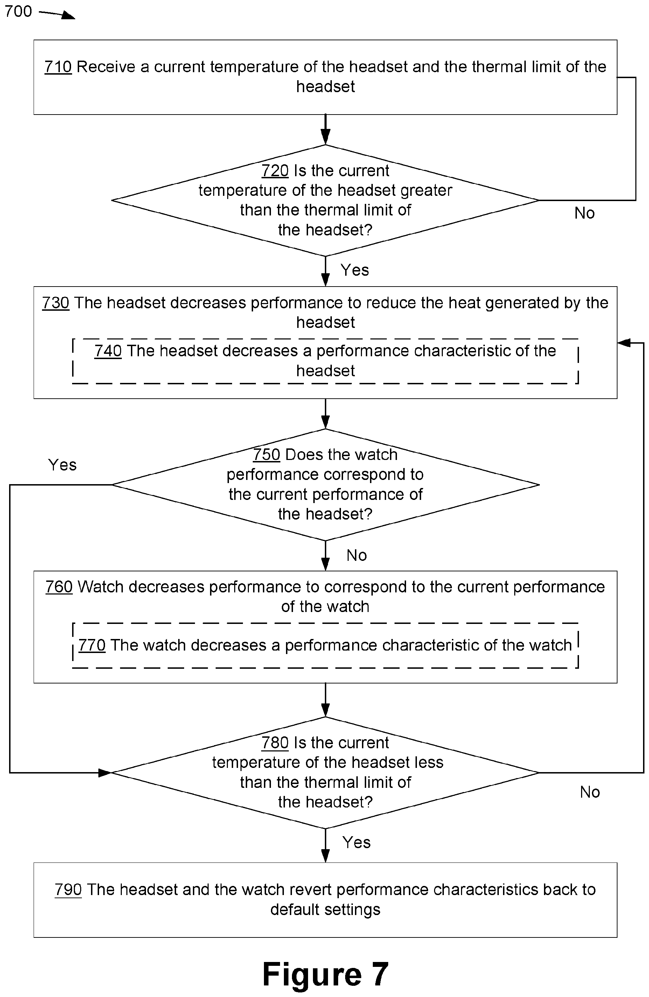

Figure 7 shows an example method flow chart for managing performance of a non-thermal-throttling device when performance is reduced at a thermal-throttling device, in accordance with some embodiments. Operations (e.g., steps) of the method 700 can be performed by one or more processors (e.g., central processing unit and/or microcontroller unit (MCU)) of the artificial-reality headset or an intermediary processing device. At least some of the operations shown in Figure 7 correspond to instructions stored in a computer memory or computer-readable storage medium (e.g., storage, random access memory (RAM), and/or memory) of the artificial-reality headset or an intermediary processing device. Operations of the method 700 can be performed by a single device alone or in conjunction with one or more processors and/or hardware components of another communicatively coupled device (e.g., of the artificial-reality headset or an intermediary processing device) and/or instructions stored in memory or computer-readable medium of the other device communicatively coupled to the system. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

(A1) In accordance with some embodiments, an intermediary processing device (e.g., intermediary processing device 120 as described in reference to Figures 1-2 and 4-6) is operated in a throttled state (e.g., a lowered performance state as described in reference to Figures 1-2 and 5). The throttled state is distinct from the default state (e.g., a nominal performance state as described in reference to Figures 1-2 and 5). The intermediary processing device is operated in the throttled state in accordance with a determination that an operational condition at the artificial-reality headset satisfies thermal-throttling criteria (e.g., the artificial-reality headset approaching or exceeding Tₘₐₓ₋ₕ or T_{safe-h}, as described in reference to Figures 1-2 and 5). In some embodiments, the operational condition is a specified temperature being reached or exceeded. The determination of the operational condition at the artificial-reality headset is made while the intermediary processing device is operating in a default state to process data for the artificial-reality headset. In some embodiments, the intermediary processing device is configured to throttle itself to match the performance at the intermediary processing device with the performance of the artificial-reality device when the performance of the intermediary processing device is greater than the artificial-reality device. For example, in accordance with a determination that the intermediary processing device is in a non-throttled state (e.g., a default state) and the artificial-reality headset is in a throttled state such that only 50% performance is available, the intermediary processing device is configured to match the current performance of the artificial-reality headset (e.g., 50% performance at the intermediary processing device). In another example, in accordance with a determination that the intermediary processing device is in a throttled state (e.g., 30% performance at the intermediary processing device) and the artificial-reality headset is in a throttled state such that only 50% performance is available, the intermediary processing device is configured to not increase the performance at the intermediary processing device to match the current performance of the artificial-reality device. In some embodiments, the intermediary processing device is distinct and separate from the artificial-reality headset. For example, the intermediary processing device is not physically coupled to the artificial-reality headset. The intermediary processing device and the artificial-reality device can be in wireless communication.

In some embodiments, the artificial-reality headset 110, when not thermal throttling, operates in a default state (e.g., setting). In some embodiments, the throttled or thermal-throttled state of the artificial-reality headset 110 is distinct from the default state of the artificial-reality headset 110. In some embodiments, the throttled state and the thermal-throttled state are distinct. For example, the thermal-throttled state is when a device is operating beyond a thermal threshold and must reduce its performance to reduce its heat output to decrease its temperature below the thermal threshold, whereas the throttled state is when another device reduces its performance to match the reduced performance of the thermal-throttled device. When operating in the default state, the artificial-reality headset 110 can operate up to maximum performance threshold Pₘₐₓ₋ₕ 116. The maximum performance threshold Pₘₐₓ₋ₕ 116 can include when the artificial-reality headset 110 is utilizing 100% of at least one component of the artificial-reality headset 110. The artificial-reality headset 110 can operate at a lower performance than Pₘₐₓ₋ₕ 116 while still maintaining the option to increase the performance up to Pₘₐₓ₋ₕ 116. In some embodiments, the artificial-reality headset 110 can be operating at less than the maximum performance threshold for reasons other than thermal throttling of the artificial-reality headset 110.

In some embodiments, the intermediary processing device 120, when not thermal throttling, operates in a default state. When operating in the default state, the intermediary processing device 120 can be operated up to maximum performance threshold P_{max-w} 126. The maximum performance threshold P_{max-w} 126 can include when the intermediary processing device 120 is utilizing 100% of at least one component of the intermediary processing device 120. The intermediary processing device 120 can operate at a lower performance than Pmax-w 126. In some embodiments, the intermediary processing device 120 can be operating at less than the maximum performance threshold for reasons other than thermal throttling of the artificial-reality headset 110.

In some embodiments, the ambient temperature can be determined by one or more temperature sensors at the artificial-reality headset 110 and/or the intermediary processing device 120. In some embodiments, the ambient temperature can be received from one or more external temperature sensors (e.g., a current temperature sensed by a thermostat), climate-control systems (e.g., a set temperature at a thermostat), and/or weather reports (e.g., weather at the current location). The ambient temperature and/or changes to the ambient temperature can also be predicted using a predictive model based on pattern recognition (e.g., average temperatures at certain dates and times). In some embodiments, the predicted ambient temperature be anticipated and used to partially throttle the artificial-reality headset and/or the intermediary processing device to reduce the likelihood of either device thermal throttling. For example, it may be more desirable to operate one or both devices at a slightly reduced performance over a longer period than to operate one or both devices at maximum performance for a portion of the same period of and then at a greater reduced performance over the remainder of the same period. In some embodiments, the predicted ambient temperature is based on a user's current and anticipated interactions (e.g., interactions with movement or interactions while stationary) with the artificial-reality headset 110 or the intermediary processing device 120.

In some embodiments, the amount of thermal throttling of the intermediary processing device 120 varies depending on how much the current temperature of the intermediary processing device 120 has exceeded T_{max-w} 124.

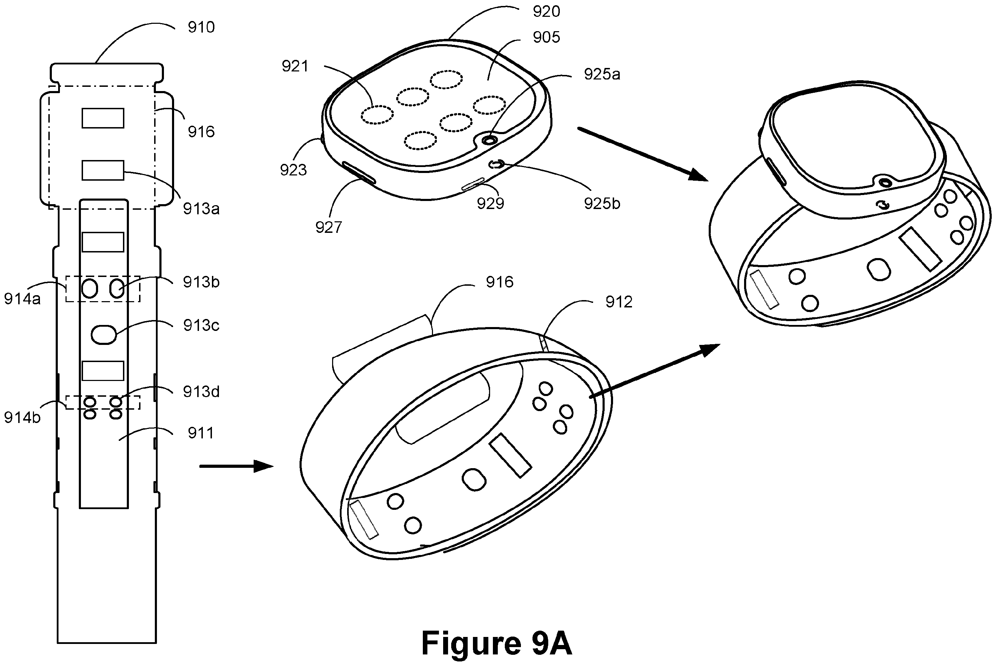

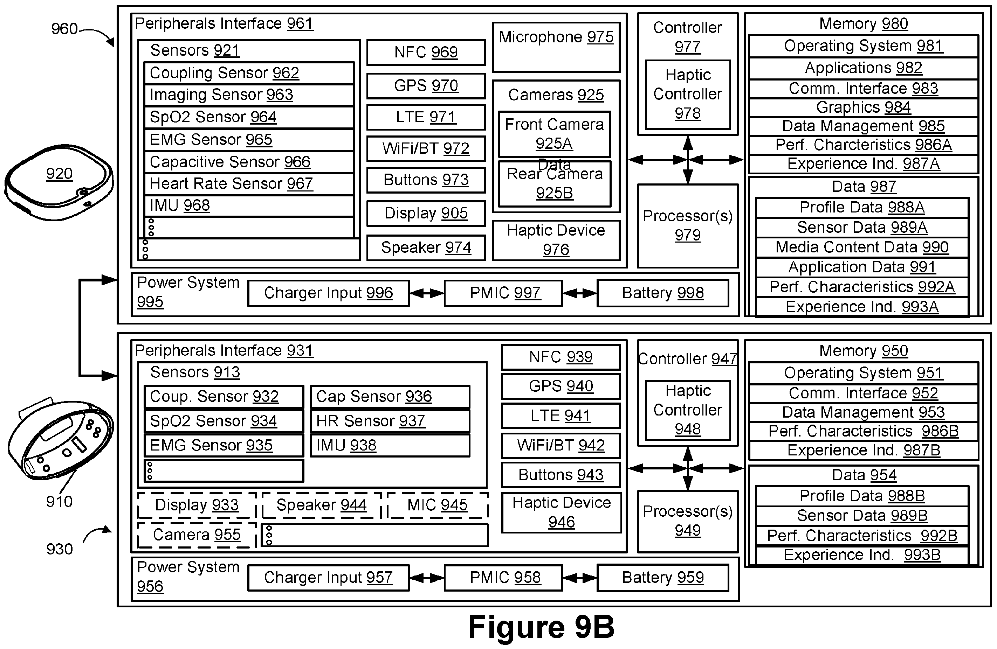

In some embodiments, the intermediary processing device is a wrist-wearable device (e.g., a watch). The wrist-wearable device is described in more detail below with reference to Figures 9A and 9B.

In some embodiments, the artificial-reality device and the intermediary processing device are in further communication with a third device. The third device can be a handheld controller or another wearable device. The third device can be configured to perform operations that the intermediary processing device can perform.

(A2) In some embodiments of A1, in accordance with a determination that the operational condition at the artificial-reality headset no longer satisfies the thermal-throttling criteria (e.g., the temperature of the artificial-reality headset 110 reducing to below Tₘₐₓ₋ₕ, as described in reference to Figures 1C-1D), revert the intermediary processing device to the default state (e.g., the performance of the artificial-reality headset 110 increasing toward Pₘₐₓ₋ₕ as described in reference to Figures 1C-1 D).

(A3) In some embodiments of A1, in accordance with the determination that the operational condition at the artificial-reality headset satisfies the thermal-throttling criteria, provide an instruction to cause a visual notification, a haptic notification, and/or an audio notification (e.g., the notifications 400 as described in reference to Figure 4) at the intermediary processing device. The notification can indicate that the artificial-reality headset satisfies the thermal-throttling criteria, which can be displayed at the intermediary processing device and/or the artificial-reality headset. The visual notification can include an LED or a display indicating a status of the device.

(A4) In some embodiments of any of A1 and A3, while the intermediary processing device is operating in the throttled state and all user-experience indicators at the artificial-reality headset and the intermediary processing device satisfy one or more user-experience criteria, maintain operating the intermediary processing device in the throttled state. For example, Figure 1F shows that the intermediary processing device continues to operate at a reduced performance while all the user-experience indicators are satisfied.

(A5) In some embodiments of any of A1 and A3, while the intermediary processing device is operating in the throttled state and in accordance with a determination that at least one user-experience indicator at the artificial-reality headset or the intermediary processing device does not satisfy one or more user-experience criteria, revert the intermediary processing device to the default state. For example, Figure 1E-1F shows that the intermediary processing device reverts the wireless connectivity 186 performance characteristic to the default state when the network speed 198 user-experience indicator is not satisfied.

(A6) In some embodiments of any of A1, A3, and A5, while the intermediary processing device is operating in the throttled state and in accordance with a determination that at least one user-experience indicator at the intermediary processing device does not satisfy one or more user-experience criteria, revert at least one performance characteristic to the default state and reduce at least one second performance characteristic that is distinct from the at least one performance characteristic. For example, Figure 1 E-1G shows that the intermediary processing device reverted the wireless connectivity 186 performance characteristic to the default state when the network speed 198 user-experience indicator is not satisfied and reduced the frequency of the watch CPU 184. In this example, all the watch user experience indicators 190 remain satisfied when the frequency of the watch CPU 184 is reduced.

(A7) In some embodiments of any of A1-A6, the performance characteristic includes a voltage of an intermediary processing device CPU associated with the intermediary processing device, a frequency of the intermediary processing device CPU associated with the intermediary processing device, a cellular throughput associated with the intermediary processing device, or video call quality between the intermediary processing device and the artificial-reality headset. Adjusting the cellular throughput involves adjusting the cellular protocol. For example, adjusting the cellular throughput as a result of thermal throttling is adjusting the cellular protocol to one that requires less power (e.g., switching from 5G to 4G cellular connectivity).

(A8) In some embodiments of any of A1-A7, the thermal throttling criteria includes a predictive model that predicts environmental temperature changes based on pattern recognition (and location) and can partially throttle to maintain a performance characteristic for a greater period of time than if the device only throttles once the thermal-throttling criteria is satisfied. For example, the predictive model can determine that during a workout a user's skin temperature can cause the artificial-reality headset to satisfy a thermal-throttling criteria faster than it would if the user is not exercising, and thus preemptively throttle to maintain a performance characteristic for a greater period of time. For example, a determined location may correspond with the user being outdoors, which can cause the artificial-reality headset to satisfy a thermal-throttling criteria faster than it would if the artificial-reality headset was indoors.

(A9) In some embodiments of any of A1-A8, the intermediary processing device is a wrist-wearable device (e.g., the intermediary processing device 120 as described with reference to Figures 9A and 9B).

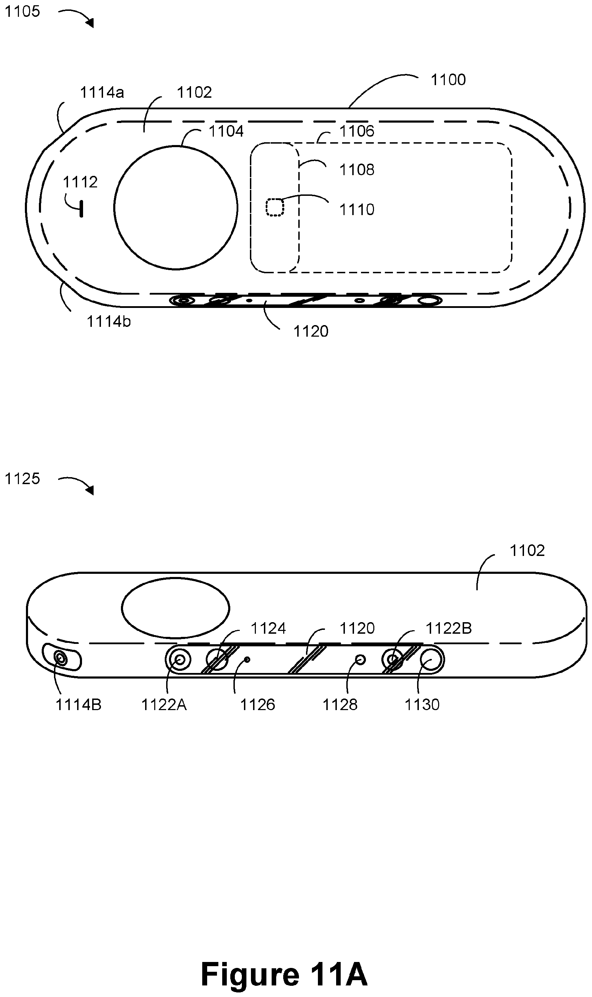

(A10) In some embodiments of any of A1-A9, the intermediary processing device and/or the artificial-reality headset are/is in further communication with another device (e.g., the controller 510 as described with reference to Figures 5A-5D and 11A-11B), which can include a controller, another wearable device, or any other device that is configured to communicate with the intermediary processing device and/or the artificial-reality headset. In some embodiments, the other device is configured to perform the operations that the intermediary processing device and/or the artificial-reality headset can perform.

(A11) In some embodiments of any of A1-A10, the intermediary processing device and the artificial-reality headset are communicatively coupled via a wireless communication protocol. The communication protocol can be a cellular network communication protocol, Bluetooth communication protocol, a Wi-Fi communication protocol, or a combination thereof.

(A12) In some embodiments of any of A1-A11, the intermediary processing device, via a network coordinator of the intermediary processing device, receives an updated thermal-throttling state of the artificial-reality headset from a network leader. The updated thermal-throttling state is received by a network coordinator of the intermediary processing device. For example, Figures 5A-5D show network 500 with different network leaders based on the thermal-throttling state of the devices of network 500. In some embodiments, an updated state of a first device is not sent to all other devices in the network. For example, a second device does not interact with the first device, and therefore does not need to receive updated states from the first device. In another example, the second device only needs to know whether the first device is active and whether the first device is unmuted but does not need to know whether a display of the first device is active. In this example, only the updated states regarding whether the first device is active and unmuted will be sent to the second device. Generally, devices can send updated states with a specified topic, and devices can receive updated states from topics to which the respective device has subscribed to.

(A13) In some embodiments of A12, the updated thermal-throttling state of the artificial-reality headset from a network leader is received by the network coordinator of the intermediary processing device.

(A14) In some embodiments of any of A12-A13, the network leader is based on a respective operational condition of a respective device within a network, wherein the network includes the artificial-reality headset and the intermediary processing device.

(A15) In some embodiments of any of A12-A14, in accordance with a determination that a connection with the network leader is lost, select a new network leader from devices still in the network.

(A16) In some embodiments of any of A12-A15, the network includes only one network leader. The network can include only one network leader in any instance. In some embodiments, the network includes more than one device that is capable of being the network leader. Each device in the network can have a respective network leader priority. For example, an artificial-reality headset can have a higher priority than an intermediary processing device, which can have a higher priority than a controller. In this example, in accordance with a determination that the three aforementioned devices are connected in a network, the artificial-reality headset will be selected as the network leader because it has the highest priority of the three devices. In the same example, in accordance with a determination that only the intermediary processing device and the controller are connected in the network, the intermediary processing device will be selected as the network leader because it has the highest priority of the devices that are connected to the network (e.g., the intermediary processing device is selected as the network leader because it has a higher priority than the controller).

(B1) In accordance with some embodiments, an artificial-reality headset (e.g., artificial-reality headset 110 as described in reference to Figures 1-3 and 5) is operated in a throttled state (e.g., a lowered performance state as described in reference to Figures 1-3 and 5). The throttled state is distinct from the default state (e.g., a nominal performance state as described in reference to Figures 1-3 and 5). The artificial-reality headset is operated in the throttled state in accordance with a determination that an operational condition at the intermediary processing device satisfies thermal-throttling criteria (e.g., the intermediary processing device approaching or exceeding T_{max-w} or T_{safe-w} as described in reference to Figures 1-2 and 5A-5D). In some embodiments, the operational condition is a specified temperature being reached or exceeded. The determination of the operational condition at the intermediary processing device is made while the artificial-reality headset is operating in a default state to process data for the intermediary processing device. In some embodiments, the artificial-reality headset is configured to throttle itself to match the performance at the artificial-reality headset with the performance of the intermediary processing device when the performance of the artificial-reality headset is greater than the intermediary processing device. For example, in accordance with a determination that the artificial-reality headset is in a non-throttled state (e.g., a default state) and the intermediary processing device is in a throttled state such that only 50% performance is available, the artificial-reality headset is configured to match the current performance of the intermediary processing device (e.g., 50% performance at the artificial-reality headset). In another example, in accordance with a determination that the artificial-reality headset is in a throttled state (e.g., 30% performance at the artificial-reality headset) and the intermediary processing device is in a throttled state such that only 50% performance is available, the artificial-reality headset is configured to not increase the performance at the artificial-reality headset to match the current performance of the artificial-reality device. In some embodiments, the artificial-reality headset is distinct and separate from the intermediary processing device. For example, the artificial-reality headset is not physically coupled to the intermediary processing device. The artificial-reality headset and the artificial-reality device can be in wireless communication.

(B2) In some embodiments of B1, in accordance with a determination that the operational condition at the intermediary processing device no longer satisfies the thermal-throttling criteria (e.g., the temperature of intermediary processing device 120 reducing to below T_{max-w}, as described in reference to Figures 2C-2D), revert the artificial-reality headset to the default state (e.g., the performance of the intermediary processing device 120 increasing towards P_{max-w} as described in reference to Figures 2C-2D).

(B3) In some embodiments of B1, in accordance with the determination that the operational condition at the intermediary processing device satisfies the thermal-throttling criteria, provide an instruction to cause a visual notification, and/or an audio notification (e.g., the notifications 300 as described in reference to Figure 3) at the artificial-reality headset. The notification can indicate that the intermediary processing device satisfies the thermal-throttling criteria, which can be displayed at the intermediary processing device and/or the artificial-reality headset. The visual notification can include an LED or a display indicating a status of the device.

(B4) In some embodiments of any of B1 and B3, while the artificial-reality headset is operating in the throttled state and all user-experience indicators at the artificial-reality headset and the intermediary processing device satisfy one or more user-experience criteria, maintain operating the artificial-reality headset in the throttled state. For example, Figure 2F shows that the intermediary processing device continues to operate at a reduced performance while all the user-experience indicators are satisfied.

(B5) In some embodiments of any of B1 and B3, while the artificial-reality headset is operating in the throttled state and in accordance with a determination that at least one user-experience indicator at the artificial-reality headset or the intermediary processing device does not satisfy one or more user-experience criteria, revert the artificial-reality headset to the default state. For example, Figure 2E-2F shows that the artificial-reality headset reverts the video display quality 286 to the default state when the resolution 292 user-experience indicator is not satisfied.

(B6) In some embodiments of any of B1, B3, and B5, while the artificial-reality headset is operating in the throttled state and in accordance with a determination that at least one user-experience indicator at the artificial-reality headset does not satisfy one or more user-experience criteria, revert at least one performance characteristic to the default state and reduce at least one second performance characteristic that is distinct from at least one performance characteristic. For example, Figure 1 E-1G shows that the artificial-reality headset reverted the video display quality 286 to the default state when the resolution 292 user-experience indicator is not satisfied and reduced the voltage of the headset CPU 282 and the frequency of the headset CPU 284. In this example, all the headset user-experience indicators 290 remain satisfied when the voltage of the headset CPU 282 and the frequency of the headset CPU 284 are reduced.

(B7) In some embodiments of any of B1-B6, the user-experience indicator includes a number of frames per second or a resolution associated with a video at the artificial-reality headset.

(B8) In some embodiments of any of B1-B7, the performance characteristic includes a voltage of a headset CPU associated with the artificial-reality headset, a frequency of the headset CPU associated with the artificial-reality headset, a cellular throughput associated with the artificial-reality headset, or a video call quality between the intermediary processing device and the artificial-reality headset (e.g., reducing post processing associated with the image quality associated with the video call at the artificial-reality headset).

(B9) In some embodiments of any of B1-B8, the thermal throttling criteria includes a predictive model that predicts environmental temperature changes based on pattern recognition (and location) and can partially throttle to maintain a performance characteristic for a greater period of time than if the device only throttles once the thermal-throttling criteria is satisfied. For example, the predictive model can determine that during a workout a user's skin temperature can cause the intermediary processing device to satisfy a thermal-throttling criteria faster than it would if the user is not exercising, and thus preemptively throttle to maintain a performance characteristic for a greater period of time. For example, a determined location may correspond with the user being outdoors, which can cause the artificial-reality headset to satisfy a thermal-throttling criteria faster than it would if the artificial-reality headset was indoors.

(B10) In some embodiments of any of B1-B9, the intermediary processing device and/or the artificial-reality headset are/is in further communication with another device (e.g., the controller 510 as described with reference to Figures 5A-5D and 11A-11B), which can include a controller, another wearable device, or any other device that is configured to communicate with the intermediary processing device and/or the artificial-reality headset. In some embodiments, the other device is configured to perform the operations that the intermediary processing device and/or the artificial-reality headset can perform.

(B11) In some embodiments of any of B1-B10, the intermediary processing device and the artificial-reality headset are communicatively coupled via a wireless communication protocol. The communication protocol can be a cellular network communication protocol, Bluetooth communication protocol, a Wi-Fi communication protocol, or a combination thereof.

(C1) In accordance with some embodiments, a system includes one or more intermediary processing devices and an artificial-reality headset. The system is configured to perform operations corresponding to any of A1-A16 and/or B1-B11.

(D1) In accordance with some embodiments, a method of operating an artificial-reality headset includes operations that correspond to any of A1- A16 and/or B1-B11. For example, Figure 7 shows a flow chart of a method 700 of causing the intermediary processing device to operate the intermediary processing device in a throttled state in accordance with a determination that an operational condition at the artificial-reality headset satisfies thermal-throttling criteria while the intermediary processing device is operating in a default state to process data for the artificial-reality headset. The method 700 includes receiving 710 a current temperature of the headset and the thermal limit of the headset. The method 700 includes a determination 720 of whether the current temperature of the headset is greater than the thermal limit of the headset. If no (e.g., the current temperature of the headset is not greater than the thermal limit of the headset), the method 700 returns to step 710. If yes (e.g., the current temperature of the headset is greater than the thermal limit of the headset), the method 700 continues to step 730. The method includes decreasing 730 the performance of the headset to reduce the heat generated by the headset, and includes decreasing 740 a performance characteristic of the headset. The method 700 includes decision 750 of whether the watch performance corresponds to the current performance of the headset. If no (e.g., the watch performance does not correspond to the current performance of the headset), then the method 700 continues to step 760. The method includes decreasing 760 the performance of the watch to correspond to the current performance of the watch, and includes decreasing 770 a performance characteristic of the watch. The method includes decision 780 of whether the current temperature of the headset is less than the thermal limit of the headset. If no, (e.g., the current temperature of the headset is equal to or more than the thermal limit of the headset) the method 700 returns to step 730. If yes, (e.g., the current temperature of the headset is less than the thermal limit of the headset), the method 700 includes reverting 790 performance characteristics of the headset and/or the watch back to default settings.

The devices described above are further detailed below, including systems, wrist-wearable devices, headset devices, and smart textile-based garments. Specific operations described above may occur as a result of specific hardware; such hardware is described in further detail below. The devices described below are not limiting and features on these devices can be removed or additional features can be added to these devices. The different devices can include one or more analogous hardware components. For brevity, analogous devices and components are described below. Any differences in the devices and components are described below in their respective sections.

As described herein, a processor (e.g., CPU, MCU), is an electronic component that is responsible for executing instructions and controlling the operation of an electronic device (e.g., a wrist-wearable device 900, a head-wearable device, an HIPD 1100, a smart textile-based garment 1200, or other computer system). There are various types of processors that may be used interchangeably, or may be specifically required, by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., virtual-reality animations, such as three-dimensional modeling); (iv) a field-programmable gate array that can be programmed and reconfigured after manufacturing, and/or can be customized to perform specific tasks, such as signal processing, cryptography, and machine learning; (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things devices; (ii) programmable logic controllers, which may be configured to be used in industrial automation systems to control and monitor manufacturing processes; (iii) system-on-a-chip controllers that integrate multiple components such as processors, memory, I/O interfaces, and other peripherals into a single chip; and/or DSPs. As described herein, a graphics module is a component or software module that is designed to handle graphical operations and/or processes, and can include a hardware module and/or a software module.

As described herein, memory refers to electronic components in a computer or electronic device that store data and instructions for the processor to access and manipulate. The devices described herein can include volatile and non-volatile memory. Examples of memory can include (i) RAM, such as DRAM, SRAM, DDR RAM or other random access solid state memory devices, configured to store data and instructions temporarily; (ii) read-only memory configured to store data and instructions permanently (e.g., one or more portions of system firmware, and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives); and (iv) cache memory configured to temporarily store frequently accessed data and instructions. Memory, as described herein, can include structured data (e.g., SQL databases, MongoDB databases, GraphQL data, JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input, and can be configured to use a wired and/or wireless connection (which may be part of a peripheral interface, such as a USB, micro-USB interface, near-field magnetic coupling, magnetic inductive and magnetic resonance charging, and/or radio frequency charging); (iii) a power-management integrated circuit, configured to distribute power to various components of the device and to ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals, and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including BLE; (iii) near-field communication (NFC) interfaces configured to be short-range wireless interface for operations such as access control; (iv) POGO pins, which may be small, spring-loaded pins configured to provide a charging interface; (v) wireless charging interfaces; (vi) GPS interfaces; (vii) Wi-Fi interfaces for providing a connection between a device and a wireless network; and/or (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device); (ii) biopotential-signal sensors; (iii) IMUs for detecting, for example, angular rate, force, magnetic field, and/or changes in acceleration; (iv) heart rate sensors for measuring a user's heart rate; (v) SpO2 sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) light sensors (e.g., time-of-flight sensors, infrared light sensors, visible light sensors), and/or sensor for sensing data from the user or the user's environment. As described herein biopotential-signal-sensing components are devices used to measure electrical activity within the body (e.g., biopotential-signal sensors). Some types of biopotential-signal sensors include (i) electroencephalography sensors configured to measure electrical activity in the brain to diagnose neurological disorders; (ii) electrocardiography sensors configured to measure electrical activity of the heart to diagnose heart problems; (iii) EMG sensors configured to measure the electrical activity of muscles and to diagnose neuromuscular disorders; and/or (iv) electrooculography sensors configure to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications, (xi) web-based applications; (xii) health applications; (xiii) artificial-reality applications; and/or any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some embodiments, a communication interface can refer to a software layer that enables different software programs to communicate with each other (e.g., application programming interfaces, protocols like HTTP and TCP/IP).

As described herein, a graphics module is a component or software module that is designed to handle graphical operations and/or processes, and can include a hardware module and/or a software module.

As described herein, non-transitory computer-readable storage media are physical devices or storage medium that can be used to store electronic data in a non-transitory form (e.g., such that the data is stored permanently until it is intentionally deleted or modified).

### Example AR Systems 8A-8C

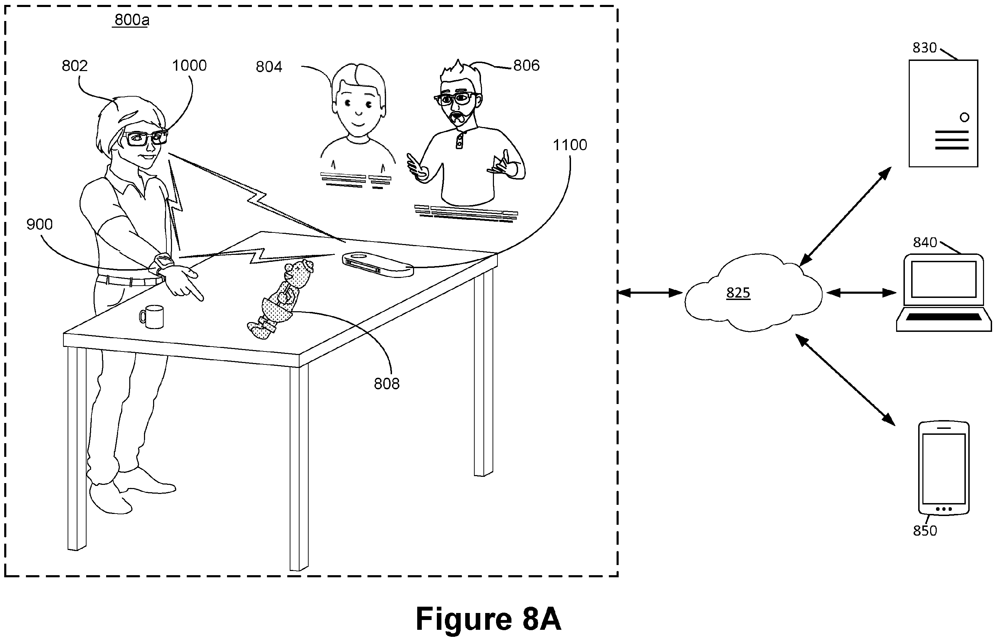

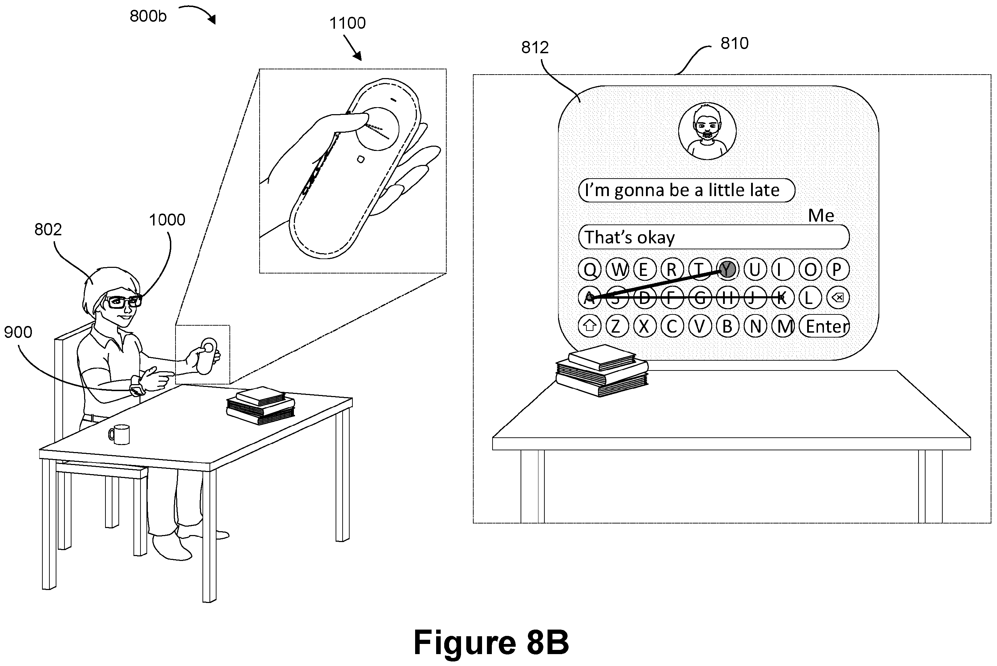

Figures 8A-8C illustrate example artificial-reality systems, in accordance with some embodiments. Figure 8A shows a first AR system 800a and first example user interactions using a wrist-wearable device 900, a head-wearable device (e.g., AR device 1000), and/or a handheld intermediary processing device (HIPD) 1100. Figure 8B shows a second AR system 800b and second example user interactions using a wrist-wearable device 900, AR device 1000, and/or an HIPD 1100. Figures 8C-1 and 8C-2 show a third AR system 800c and third example user interactions using a wrist-wearable device 900, a head-wearable device (e.g., VR device 1010), and/or an HIPD 1100. As the skilled artisan will appreciate upon reading the descriptions provided herein, the above-example AR systems (described in detail below) can perform various functions and/or operations described above with reference to Figures 1A-7.

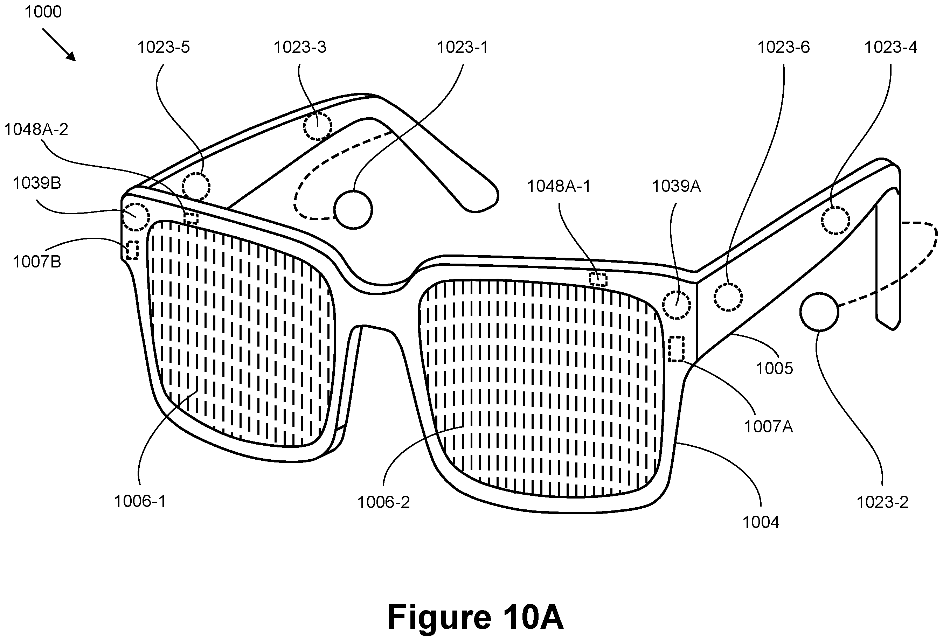

The wrist-wearable device 900 and one or more of its components are described below in reference to Figures 9A-9B; the head-wearable devices and their one or more components are described below in reference to Figures 10A-10C; and the HIPD 1100 and its one or more components are described below in reference to Figures 11A-11B. The wrist-wearable device 900, the head-wearable devices, and/or the HIPD 1100 can communicatively couple via a network 825 (e.g., cellular, near-field, Wi-Fi, personal area network, wireless LAN, etc.). Additionally, the wrist-wearable device 900, the head-wearable devices, and/or the HIPD 1100 can also communicatively couple with one or more servers 830, computers 840 (e.g., laptops, computers, etc.), mobile devices 850 (e.g., smartphones, tablets, etc.), and/or other electronic devices via the network 825 (e.g., cellular, near-field, Wi-Fi, personal area network, wireless LAN, etc.).

Turning to Figure 8A, a user 802 is shown wearing the wrist-wearable device 900 and the AR device 1000, and having the HIPD 1100 on their desk. The wrist-wearable device 900, the AR device 1000, and the HIPD 1100 facilitate user interaction with an AR environment. In particular, as shown by the first AR system 800a, the wrist-wearable device 900, the AR device 1000, and/or the HIPD 1100 cause presentation of one or more avatars 804, digital representations of contacts 806, and virtual objects 808. As discussed below, the user 802 can interact with the one or more avatars 804, digital representations of the contacts 806, and virtual objects 808 via the wrist-wearable device 900, the AR device 1000, and/or the HIPD 1100.

The user 802 can use any of the wrist-wearable device 900, the AR device 1000, and/or the HIPD 1100 to provide user inputs. For example, the user 802 can perform one or more hand gestures that are detected by the wrist-wearable device 900 (e.g., using one or more EMG sensors and/or IMUs, described below in reference to Figures 9A-9B) and/or AR device 1000 (e.g., using one or more image sensor or camera, described below in reference to Figures 10A-10B) to provide a user input. Alternatively, or additionally, the user 802 can provide a user input via one or more touch surfaces of the wrist-wearable device 900, the AR device 1000, and/or the HIPD 1100, and/or voice commands captured by a microphone of the wrist-wearable device 900, the AR device 1000, and/or the HIPD 1100. In some embodiments, the wrist-wearable device 900, the AR device 1000, and/or the HIPD 1100 include a digital assistant to help the user in providing a user input (completing a sequence of operations, suggesting different operations or commands, providing reminders, confirming a command, etc.). In some embodiments, the user 802 can provide a user input via one or more facial gestures and/or facial expressions. For example, cameras of the wrist-wearable device 900, the AR device 1000, and/or the HIPD 1100 can track the user 802's eyes for navigating a user interface.

The wrist-wearable device 900, the AR device 1000, and/or the HIPD 1100 can operate alone or in conjunction to allow the user 802 to interact with the AR environment. In some embodiments, the HIPD 1100 is configured to operate as a central hub or control center for the wrist-wearable device 900, the AR device 1000, and/or another communicatively coupled device. For example, the user 802 can provide an input to interact with the AR environment at any of the wrist-wearable device 900, the AR device 1000, and/or the HIPD 1100, and the HIPD 1100 can identify one or more back-end and front-end tasks to cause the performance of the requested interaction and distribute instructions to cause the performance of the one or more back-end and front-end tasks at the wrist-wearable device 900, the AR device 1000, and/or the HIPD 1100. In some embodiments, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). As described below in reference to Figures 11A-11B, the HIPD 1100 can perform the back-end tasks and provide the wrist-wearable device 900 and/or the AR device 1000 operational data corresponding to the performed back-end tasks such that the wrist-wearable device 900 and/or the AR device 1000 can perform the front-end tasks. In this way, the HIPD 1100, which has more computational resources and greater thermal headroom than the wrist-wearable device 900 and/or the AR device 1000, performs computationally intensive tasks and reduces the computer resource utilization and/or power usage of the wrist-wearable device 900 and/or the AR device 1000.

In the example shown by the first AR system 800a, the HIPD 1100 identifies one or more back-end tasks and front-end tasks associated with a user request to initiate an AR video call with one or more other users (represented by the avatar 804 and the digital representation of the contact 806) and distributes instructions to cause the performance of the one or more back-end tasks and front-end tasks. In particular, the HIPD 1100 performs back-end tasks for processing and/or rendering image data (and other data) associated with the AR video call and provides operational data associated with the performed back-end tasks to the AR device 1000 such that the AR device 1000 performs front-end tasks for presenting the AR video call (e.g., presenting the avatar 804 and the digital representation of the contact 806).

In some embodiments, the HIPD 1100 can operate as a focal or anchor point for causing the presentation of information. This allows the user 802 to be generally aware of where information is presented. For example, as shown in the first AR system 800a, the avatar 804 and the digital representation of the contact 806 are presented above the HIPD 1100. In particular, the HIPD 1100 and the AR device 1000 operate in conjunction to determine a location for presenting the avatar 804 and the digital representation of the contact 806. In some embodiments, information can be presented a predetermined distance from the HIPD 1100 (e.g., within five meters). For example, as shown in the first AR system 800a, virtual object 808 is presented on the desk some distance from the HIPD 1100. Similar to the above example, the HIPD 1100 and the AR device 1000 can operate in conjunction to determine a location for presenting the virtual object 808. Alternatively, in some embodiments, presentation of information is not bound by the HIPD 1100. More specifically, the avatar 804, the digital representation of the contact 806, and the virtual object 808 do not have to be presented within a predetermined distance of the HIPD 1100.

User inputs provided at the wrist-wearable device 900, the AR device 1000, and/or the HIPD 1100 are coordinated such that the user can use any device to initiate, continue, and/or complete an operation. For example, the user 802 can provide a user input to the AR device 1000 to cause the AR device 1000 to present the virtual object 808 and, while the virtual object 808 is presented by the AR device 1000, the user 802 can provide one or more hand gestures via the wrist-wearable device 900 to interact and/or manipulate the virtual object 808.

Figure 8B shows the user 802 wearing the wrist-wearable device 900 and the AR device 1000 and holding the HIPD 1100. In the second AR system 800b, the wrist-wearable device 900, the AR device 1000, and/or the HIPD 1100 are used to receive and/or provide one or more messages to a contact of the user 802. In particular, the wrist-wearable device 900, the AR device 1000, and/or the HIPD 1100 detect and coordinate one or more user inputs to initiate a messaging application and prepare a response to a received message via the messaging application.

In some embodiments, the user 802 initiates, via a user input, an application on the wrist-wearable device 900, the AR device 1000, and/or the HIPD 1100 that causes the application to initiate on at least one device. For example, in the second AR system 800b the user 802 performs a hand gesture associated with a command for initiating a messaging application (represented by messaging user interface 812); the wrist-wearable device 900 detects the hand gesture; and, based on a determination that the user 802 is wearing AR device 1000, causes the AR device 1000 to present a messaging user interface 812 of the messaging application. The AR device 1000 can present the messaging user interface 812 to the user 802 via its display (e.g., as shown by user 802's field of view 810). In some embodiments, the application is initiated and run on the device (e.g., the wrist-wearable device 900, the AR device 1000, and/or the HIPD 1100) that detects the user input to initiate the application, and the device provides another device operational data to cause the presentation of the messaging application. For example, the wrist-wearable device 900 can detect the user input to initiate a messaging application; initiate and run the messaging application; and provide operational data to the AR device 1000 and/or the HIPD 1100 to cause presentation of the messaging application. Alternatively, the application can be initiated and run at a device other than the device that detected the user input. For example, the wrist-wearable device 900 can detect the hand gesture associated with initiating the messaging application and cause the HIPD 1100 to run the messaging application and coordinate the presentation of the messaging application.

Further, the user 802 can provide a user input provided at the wrist-wearable device 900, the AR device 1000, and/or the HIPD 1100 to continue and/or complete an operation initiated are at another device. For example, after initiating the messaging application via the wrist-wearable device 900 and while the AR device 1000 present the messaging user interface 812, the user 802 can provide an input at the HIPD 1100 to prepare a response (e.g., shown by the swipe gesture performed on the HIPD 1100). The user802's gestures performed on the HIPD 1100 can be provided and/or displayed on another device. For example, the user 802's swipe gestures performed on the HIPD 1100 are displayed on a virtual keyboard of the messaging user interface 812 displayed by the AR device 1000.

In some embodiments, the wrist-wearable device 900, the AR device 1000, the HIPD 1100, and/or other communicatively coupled device can present one or more notifications to the user 802. The notification can be an indication of a new message, an incoming call, an application update, a status update, etc. The user 802 can select the notification via the wrist-wearable device 900, the AR device 1000, the HIPD 1100, and cause presentation of an application or operation associated with the notification on at least one device. For example, the user 802 can receive a notification that a message was received at the wrist-wearable device 900, the AR device 1000, the HIPD 1100, and/or other communicatively coupled device and provide a user input at the wrist-wearable device 900, the AR device 1000, and/or the HIPD 1100 to review the notification, and the device detecting the user input can cause an application associated with the notification to be initiated and/or presented at the wrist-wearable device 900, the AR device 1000, and/or the HIPD 1100.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, and financial applications, etc. For example, the AR device 1000 can present to the user 802 game application data and the HIPD 1100 can use a controller to provide inputs to the game. Similarly, the user 802 can use the wrist-wearable device 900 to initiate a camera of the AR device 1000, and the user can use the wrist-wearable device 900, the AR device 1000, and/or the HIPD 1100 to manipulate the image capture (e.g., zoom in or out, apply filters, etc.) and capture image data.

Turning to Figures 8C-1 and 8C-2, the user 802 is shown wearing the wrist-wearable device 900 and a VR device 1010, and holding the HIPD 1100. In the third AR system 800c, the wrist-wearable device 900, the VR device 1010, and/or the HIPD 1100 are used to interact within an AR environment such as a VR game or other AR application. While the VR device 1010 presents a representation of a VR game (e.g., first AR game environment 820) to the user 802, the wrist-wearable device 900, the VR device 1010, and/or the HIPD 1100 detect and coordinate one or more user inputs to allow the user 802 to interact with the VR game.

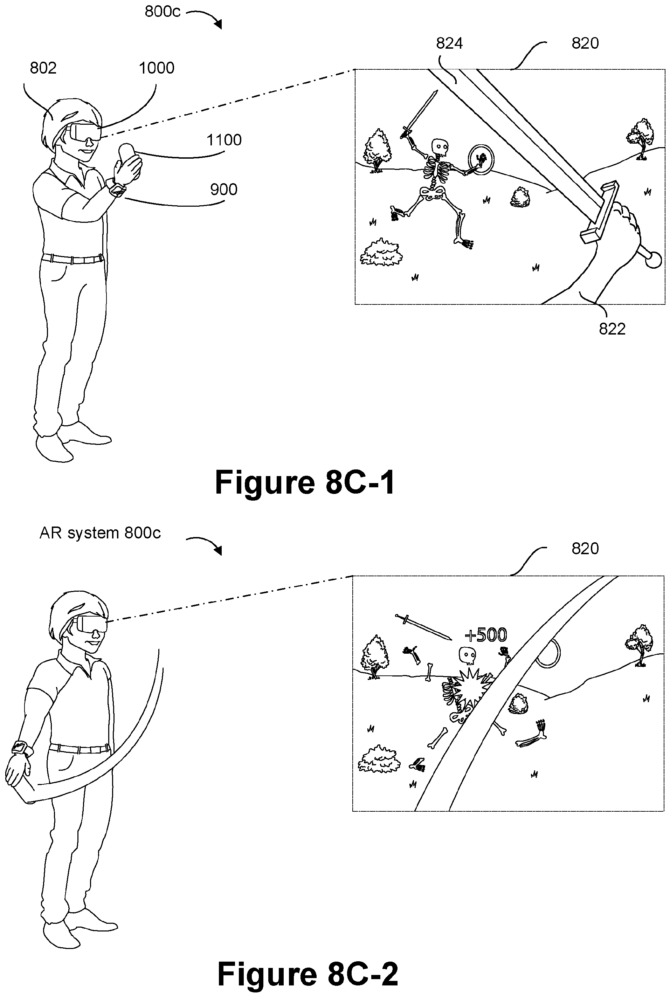

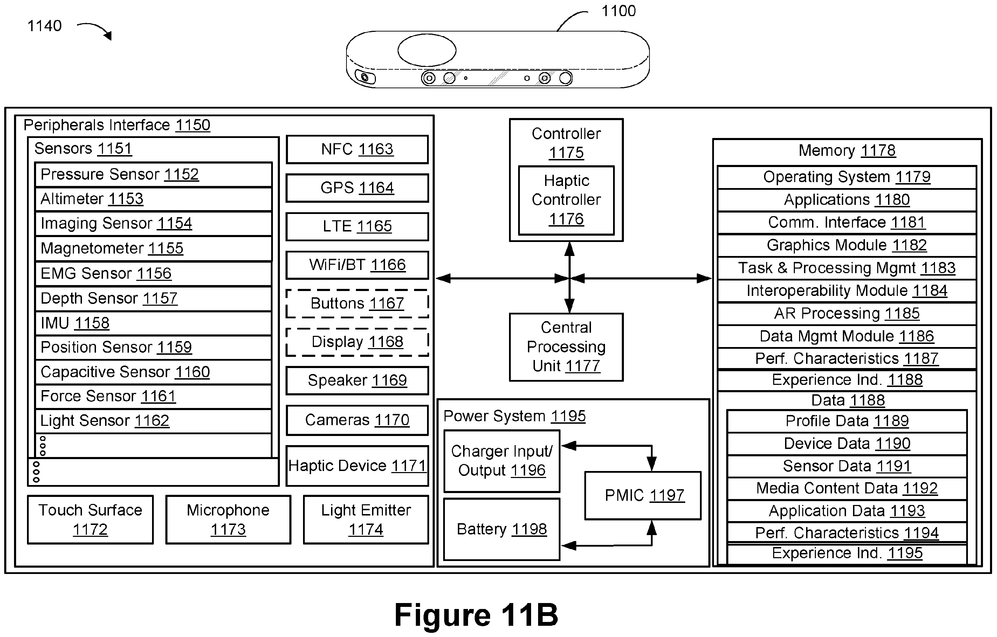

In some embodiments, the user 802 can provide a user input via the wrist-wearable device 900, the VR device 1010, and/or the HIPD 1100 that causes an action in a corresponding AR environment. For example, the user 802 in the third AR system 800c (shown in Figure 8C-1) raises the HIPD 1100 to prepare for a swing in the first AR game environment 820. The VR device 1010, responsive to the user 802 raising the HIPD 1100, causes the AR representation of the user 822 to perform a similar action (e.g., raise a virtual object such as a virtual sword 824). In some embodiments, each device uses respective sensor data and/or image data to detect the user input and provide an accurate representation of the user 802's motion. For example, image sensors 1158 (e.g., SLAM cameras or other cameras discussed below in Figures 11A and 11B) of the HIPD 1100 can be used to detect a position of the 1100 relative to the user 802's body such that the virtual object can be positioned appropriately within the first AR game environment 820; sensor data from the wrist-wearable device 900 can be used to detect a velocity at which the user 802 raises the HIPD 1100 such that the AR representation of the user 822 and the virtual sword 824 are synchronized with the user 802's movements; and image sensors 1026 (Figures 10A-10C) of the VR device 1010 can be used to represent the user 802's body, boundary conditions, or real-world objects within the first AR game environment 820.

In Figure 8C-2, the user 802 performs a downward swing while holding the HIPD 1100. The user 802's downward swing is detected by the wrist-wearable device 900, the VR device 1010, and/or the HIPD 1100 and a corresponding action is performed in the first AR game environment 820. In some embodiments, the data captured by each device is used to improve the user's experience within the AR environment. For example, sensor data of the wrist-wearable device 900 can be used to determine a speed and/or force at which the downward swing is performed and image sensors of the HIPD 1100 and/or the VR device 1010 can be used to determine a location of the swing and how it should be represented in the first AR game environment 820, which in turn can be used as inputs for the AR environment (e.g., game mechanics, which can use detected speed, force, locations, and/or aspects of the user 802's actions to classify a user's inputs (e.g., user performs a light strike, hard strike, critical strike, glancing strike, miss, etc.) or calculate an output (e.g., amount of damage)).

While the wrist-wearable device 900, the VR device 1010, and/or the HIPD 1100 are described as detecting user inputs, in some embodiments, user inputs are detected at a single device (with the single device being responsible for distributing signals to the other devices for performing the user input). For example, the HIPD 1100 can operate an application for generating the first AR game environment 820 and provide the VR device 1010 with corresponding data for causing the presentation of the first AR game environment 820, as well as detect the user 802's movements (while holding the HIPD 1100) to cause the performance of corresponding actions within the first AR game environment 820. Additionally or alternatively, in some embodiments, operational data (e.g., sensor data, image data, application data, device data, and/or other data) of one or more devices is provided to a single device (e.g., the HIPD 1100) to process the operational data and cause respective devices to perform an action associated with processed operational data.

Having discussed example AR systems, devices for interacting with such AR systems, and other computing systems more generally, will now be discussed in greater detail below. Some definitions of devices and components that can be included in some or all of the example devices discussed below are defined here for ease of reference. A skilled artisan will appreciate that certain types of the components described below may be more suitable for a particular set of devices and less suitable for a different set of devices. But subsequent reference to the components defined here should be considered to be encompassed by the definitions provided.

In some embodiments discussed below, example devices and systems, including electronic devices and systems, will be discussed. Such example devices and systems are not intended to be limiting, and one of skill in the art will understand that alternative devices and systems to the example devices and systems described herein may be used to perform the operations and construct the systems and device(s) that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices and/or a subset of components of one or more electronic devices and facilitates communication and/or data processing and/or data transfer between the respective electronic devices and/or electronic components.

### Example Wrist-Wearable Devices

Figures 9A and 9B illustrate an example wrist-wearable device 900, in accordance with some embodiments. The wrist-wearable device 900 is an instance of the wearable device (e.g., intermediary processing device 120) described in reference to Figures 1A-2G and 3-5D herein, such that the wrist-wearable devices should be understood to have the features of the wrist-wearable device 900 and vice versa. Figure 9A illustrates components of the wrist-wearable device 900, which can be used individually or in combination, including combinations that include other electronic devices and/or electronic components.

Figure 9A shows a wearable band 910 and a watch body 920 (or capsule) being coupled, as discussed below, to form the wrist-wearable device 900. The wrist-wearable device 900 can perform various functions and/or operations associated with navigating through user interfaces and selectively opening applications, as well as the functions and/or operations described above with reference to Figures 1A-2H and 3-5D.

As will be described in more detail below, operations executed by the wrist-wearable device 900 can include: (i) presenting content to a user (e.g., displaying visual content via a display 905); (ii) detecting (e.g., sensing) user input (e.g., sensing a touch on peripheral button 923 and/or at a touch screen of the display 905, and/or a hand gesture detected by sensors (e.g., biopotential sensors)); (iii) sensing biometric data via one or more sensors 913 (e.g., neuromuscular signals, heart rate, temperature, sleep, etc.); messaging (e.g., text, speech, video, etc.); image capture via one or more imaging devices or cameras 925; wireless communications (e.g., cellular, near-field, Wi-Fi, personal area network, etc.); location determination; financial transactions; providing haptic feedback; alarms; notifications; biometric authentication; health monitoring; sleep monitoring; etc.

The above-example functions can be executed independently in the watch body 920, independently in the wearable band 910, and/or via an electronic communication between the watch body 920 and the wearable band 910. In some embodiments, functions can be executed on the wrist-wearable device 900 while an AR environment is being presented (e.g., via one of the AR systems 800a to 800d). As the skilled artisan will appreciate upon reading the descriptions provided herein, the novel wearable devices described herein can be used with other types of AR environments.

The wearable band 910 can be configured to be worn by a user such that an inner (or inside) surface of the wearable structure 911 of the wearable band 910 is in contact with the user's skin. When worn by a user, sensors 913 contact the user's skin. The sensors 913 can sense biometric data such as a user's heart rate, saturated oxygen level, temperature, sweat level, neuromuscular signal sensors, or a combination thereof. The sensors 913 can also sense data about a user's environment, including a user's motion, altitude, location, orientation, gait, acceleration, position, or a combination thereof. In some embodiment, the sensors 913 are configured to track a position and/or motion of the wearable band 910. The one or more sensors 913 can include any of the sensors defined above and/or discussed below with respect to Figure 9B.

The one or more sensors 913 can be distributed on an inside and/or an outside surface of the wearable band 910. In some embodiments, the one or more sensors 913 are uniformly spaced along the wearable band 910. Alternatively, in some embodiments, the one or more sensors 913 are positioned at distinct points along the wearable band 910. As shown in Figure 9A, the one or more sensors 913 can be the same or distinct. For example, in some embodiments, the one or more sensors 913 can be shaped as a pill (e.g., sensor 913a), an oval, a circle, a square, an oblong (e.g., sensor 913c) and/or any other shape that maintains contact with the user's skin (e.g., such that neuromuscular signal and/or other biometric data can be accurately measured at the user's skin). In some embodiments, the one or more sensors 913 are aligned to form pairs of sensors (e.g., for sensing neuromuscular signals based on differential sensing within each respective sensor). For example, sensor 913b is aligned with an adjacent sensor to form sensor pair 914a and sensor 913d aligned with an adjacent sensor to form sensor pair 914b. In some embodiments, the wearable band 910 does not have a sensor pair. Alternatively, in some embodiments, the wearable band 910 has a predetermined number of sensor pairs (one pair of sensors, three pairs of sensors, four pairs of sensors, six pairs of sensors, sixteen pairs of sensors, etc.).

The wearable band 910 can include any suitable number of sensors 913. In some embodiments, the number and arrangement of sensors 913 depends on the particular application for which the wearable band 910 is used. For instance, a wearable band 910 configured as an armband, wristband, or chest band may include a plurality of sensors 913 with different number of sensors 913 and different arrangement for each use case, such as medical use cases as compared to gaming or general day-to-day use cases.

In accordance with some embodiments, the wearable band 910 further includes an electrical ground electrode and a shielding electrode. Like the sensors 913, the electrical ground and shielding electrodes can be distributed on the inside surface of the wearable band 910 such that they contact a portion of the user's skin. For example, the electrical ground and shielding electrodes can be at an inside surface of coupling mechanism 916 or an inside surface of a wearable structure 911. The electrical ground and shielding electrodes can be formed and/or use the same components as the sensors 913. In some embodiments, the wearable band 910 includes more than one electrical ground electrode and more than one shielding electrode.

The sensors 913 can be formed as part of the wearable structure 911 of the wearable band 910. In some embodiments, the sensors 913 are flush or substantially flush with the wearable structure 911 such that they do not extend beyond the surface of the wearable structure 911. While flush with the wearable structure 911, the sensors 913 are still configured to contact the user's skin (e.g., via a skin-contacting surface). Alternatively, in some embodiments, the sensors 913 extend beyond the wearable structure 911 a predetermined distance (e.g., 0.1 - 2 mm) to make contact and depress into the user's skin. In some embodiment, the sensors 913 are coupled to an actuator (not shown) configured to adjust an extension height (e.g., a distance from the surface of the wearable structure 911) of the sensors 913 such that the sensors 913 make contact and depress into the user's skin. In some embodiments, the actuators adjust the extension height between 0.01 mm - 1.2 mm. This allows the user to customize the positioning of the sensors 913 to improve the overall comfort of the wearable band 910 while still allowing the sensors 913 to contact the user's skin. In some embodiments, the sensors 913 are indistinguishable from the wearable structure 911 when worn by the user.

The wearable structure 911 can be formed of an elastic material, elastomers, or the like, configured to be stretched and fitted to be worn by the user. In some embodiments, the wearable structure 911 is a textile or woven fabric. As described above, the sensors 913 can be formed as part of a wearable structure 911. For example, the sensors 913 can be molded into the wearable structure 911 or be integrated into a woven fabric (e.g., the sensors 913 can be sewn into the fabric and mimic the pliability of fabric (e.g., the sensors 913 can be constructed from a series of woven strands of fabric)).

The wearable structure 911 can include flexible electronic connectors that interconnect the sensors 913, the electronic circuitry, and/or other electronic components (described below in reference to Figure 9B) that are enclosed in the wearable band 910. In some embodiments, the flexible electronic connectors are configured to interconnect the sensors 913, the electronic circuitry, and/or other electronic components of the wearable band 910 with respective sensors and/or other electronic components of another electronic device (e.g., watch body 920). The flexible electronic connectors are configured to move with the wearable structure 911 such that the user adjustment to the wearable structure 911 (e.g., resizing, pulling, folding, etc.) does not stress or strain the electrical coupling of components of the wearable band 910.

As described above, the wearable band 910 is configured to be worn by a user. In particular, the wearable band 910 can be shaped or otherwise manipulated to be worn by a user. For example, the wearable band 910 can be shaped to have a substantially circular shape such that it can be configured to be worn on the user's lower arm or wrist. Alternatively, the wearable band 910 can be shaped to be worn on another body part of the user, such as the user's upper arm (e.g., around a bicep), forearm, chest, legs, etc. The wearable band 910 can include a retaining mechanism 912 (e.g., a buckle, a hook-and-loop fastener, etc.) for securing the wearable band 910 to the user's wrist or other body part. While the wearable band 910 is worn by the user, the sensors 913 sense data (referred to as sensor data) from the user's skin. In particular, the sensors 913 of the wearable band 910 obtain (e.g., sense and record) neuromuscular signals.

The sensed data (e.g., sensed neuromuscular signals) can be used to detect and/or determine the user's intention to perform certain motor actions. In particular, the sensors 913 sense and record neuromuscular signals from the user as the user performs muscular activations (e.g., movements, gestures, etc.). The detected and/or determined motor actions (e.g., phalange (or digits) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on the display 905 of the wrist-wearable device 900 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm-down on a table; dynamic gestures, such as grasping a physical or virtual object; and covert gestures that are imperceptible to another person, such as slightly tensing a joint by co-contracting opposing muscles or using submuscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by the sensors 913 can be used to provide a user with an enhanced interaction with a physical object (e.g., devices communicatively coupled with the wearable band 910) and/or a virtual object in an artificial-reality application generated by an artificial-reality system (e.g., user interface objects presented on the display 905, or another computing device (e.g., a smartphone)).

In some embodiments, the wearable band 910 includes one or more haptic devices 946 (Figure 9B; e.g., a vibratory haptic actuator) that are configured to provide haptic feedback (e.g., a cutaneous and/or kinesthetic sensation, etc.) to the user's skin. The sensors 913 and/or the haptic devices 946 can be configured to operate in conjunction with multiple applications including, without limitation, health monitoring, social media, games, and artificial reality (e.g., the applications associated with artificial reality).

The wearable band 910 can also include coupling mechanism 916 (e.g., a cradle or a shape of the coupling mechanism can correspond to shape of the watch body 920 of the wrist-wearable device 900) for detachably coupling a capsule (e.g., a computing unit) or watch body 920 (via a coupling surface of the watch body 920) to the wearable band 910. In particular, the coupling mechanism 916 can be configured to receive a coupling surface proximate to the bottom side of the watch body 920 (e.g., a side opposite to a front side of the watch body 920 where the display 905 is located) such that a user can push the watch body 920 downward into the coupling mechanism 916 to attach the watch body 920 to the coupling mechanism 916. In some embodiments, the coupling mechanism 916 can be configured to receive a top side of the watch body 920 (e.g., a side proximate to the front side of the watch body 920 where the display 905 is located) that is pushed upward into the cradle, as opposed to being pushed downward into the coupling mechanism 916. In some embodiments, the coupling mechanism 916 is an integrated component of the wearable band 910 such that the wearable band 910 and the coupling mechanism 916 are a single unitary structure. In some embodiments, the coupling mechanism 916 is a type of frame or shell that allows the watch body 920 coupling surface to be retained within or on the wearable band 910 coupling mechanism 916 (e.g., a cradle, a tracker band, a support base, a clasp, etc.).

The coupling mechanism 916 can allow for the watch body 920 to be detachably coupled to the wearable band 910 through a friction fit, magnetic coupling, a rotation-based connector, a shear-pin coupler, a retention spring, one or more magnets, a clip, a pin shaft, a hook-and-loop fastener, or a combination thereof. A user can perform any type of motion to couple the watch body 920 to the wearable band 910 and to decouple the watch body 920 from the wearable band 910. For example, a user can twist, slide, turn, push, pull, or rotate the watch body 920 relative to the wearable band 910, or a combination thereof, to attach the watch body 920 to the wearable band 910 and to detach the watch body 920 from the wearable band 910. Alternatively, as discussed below, in some embodiments the watch body 920 can be decoupled from the wearable band 910 by actuation of the release mechanism 929.

The wearable band 910 can be coupled with a watch body 920 to increase the functionality of the wearable band 910 (e.g., converting the wearable band 910 into a wrist-wearable device 900, adding an additional computing unit and/or battery to increase computational resources and/or a battery life of the wearable band 910, adding additional sensors to improve sensed data, etc.). As described above, the wearable band 910 (and the coupling mechanism 916) is configured to operate independently (e.g., execute functions independently) from watch body 920. For example, the coupling mechanism 916 can include one or more sensors 913 that contact a user's skin when the wearable band 910 is worn by the user and provide sensor data for determining control commands.

A user can detach the watch body 920 (or capsule) from the wearable band 910 in order to reduce the encumbrance of the wrist-wearable device 900 to the user. For embodiments in which the watch body 920 is removable, the watch body 920 can be referred to as a removable structure, such that in these embodiments the wrist-wearable device 900 includes a wearable portion (e.g., the wearable band 910) and a removable structure (the watch body 920).

Turning to the watch body 920, the watch body 920 can have a substantially rectangular or circular shape. The watch body 920 is configured to be worn by the user on their wrist or on another body part. More specifically, the watch body 920 is sized to be easily carried by the user, attached to a portion of the user's clothing, and/or coupled to the wearable band 910 (forming the wrist-wearable device 900). As described above, the watch body 920 can have a shape corresponding to the coupling mechanism 916 of the wearable band 910. In some embodiments, the watch body 920 includes a single release mechanism 929 or multiple release mechanisms (e.g., two release mechanisms 929 positioned on opposing sides of the watch body 920, such as spring-loaded buttons) for decoupling the watch body 920 and the wearable band 910. The release mechanism 929 can include, without limitation, a button, a knob, a plunger, a handle, a lever, a fastener, a clasp, a dial, a latch, or a combination thereof.

A user can actuate the release mechanism 929 by pushing, turning, lifting, depressing, shifting, or performing other actions on the release mechanism 929. Actuation of the release mechanism 929 can release (e.g., decouple) the watch body 920 from the coupling mechanism 916 of the wearable band 910, allowing the user to use the watch body 920 independently from wearable band 910, and vice versa. For example, decoupling the watch body 920 from the wearable band 910 can allow the user to capture images using a rear-facing camera 925B. Although the is shown positioned at a corner of watch body 920, the release mechanism 929 can be positioned anywhere on watch body 920 that is convenient for the user to actuate. In addition, in some embodiments, the wearable band 910 can also include a respective release mechanism for decoupling the watch body 920 from the coupling mechanism 916. In some embodiments, the release mechanism 929 is optional and the watch body 920 can be decoupled from the coupling mechanism 916 as described above (e.g., via twisting, rotating, etc.).

The watch body 920 can include one or more peripheral buttons 923 and 927 for performing various operations at the watch body 920. For example, the peripheral buttons 923 and 927 can be used to turn on or wake (e.g., transition from a sleep state to an active state) the display 905, unlock the watch body 920, increase or decrease volume, increase or decrease brightness, interact with one or more applications, interact with one or more user interfaces, etc. Additionally, or alternatively, in some embodiments, the display 905 operates as a touch screen and allows the user to provide one or more inputs for interacting with the watch body 920.

In some embodiments, the watch body 920 includes one or more sensors 921. The sensors 921 of the watch body 920 can be the same as or distinct from the sensors 913 of the wearable band 910. The sensors 921 of the watch body 920 can be distributed on an inside and/or an outside surface of the watch body 920. In some embodiments, the sensors 921 are configured to contact a user's skin when the watch body 920 is worn by the user. For example, the sensors 921 can be placed on the bottom side of the watch body 920 and the coupling mechanism 916 can be a cradle with an opening that allows the bottom side of the watch body 920 to directly contact the user's skin. Alternatively, in some embodiments, the watch body 920 does not include sensors that are configured to contact the user's skin (e.g., including sensors internal and/or external to the watch body 920 that are configured to sense data of the watch body 920 and the watch body 920's surrounding environment). In some embodiment, the sensors 913 are configured to track a position and/or motion of the watch body 920.

The watch body 920 and the wearable band 910 can share data using a wired communication method (e.g., a universal asynchronous receiver/transmitter (UART), a USB transceiver, etc.) and/or a wireless communication method (e.g., near-field communication, Bluetooth, etc.). For example, the watch body 920 and the wearable band 910 can share data sensed by the sensors 913 and 921, as well as application and device-specific information (e.g., active and/or available applications, output devices (e.g., display, speakers, etc.), input devices (e.g., touch screen, microphone, imaging sensors, etc.)).

In some embodiments, the watch body 920 can include, without limitation, a front-facing camera 925A and/or a rear-facing camera 925B, sensors 921 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 963; Figure 9B), a touch sensor, a sweat sensor, etc.). In some embodiments, the watch body 920 can include one or more haptic devices 976 (Figure 9B; a vibratory haptic actuator) that is configured to provide haptic feedback (e.g., a cutaneous and/or kinesthetic sensation, etc.) to the user. The sensors 921 and/or the haptic device 976 can also be configured to operate in conjunction with multiple applications including, without limitation, health monitoring applications, social media applications, game applications, and artificial reality applications (e.g., the applications associated with artificial reality).

As described above, the watch body 920 and the wearable band 910, when coupled, can form the wrist-wearable device 900. When coupled, the watch body 920 and wearable band 910 operate as a single device to execute functions (operations, detections, communications, etc.) described herein. In some embodiments, each device is provided with particular instructions for performing the one or more operations of the wrist-wearable device 900. For example, in accordance with a determination that the watch body 920 does not include neuromuscular signal sensors, the wearable band 910 can include alternative instructions for performing associated instructions (e.g., providing sensed neuromuscular signal data to the watch body 920 via a different electronic device). Operations of the wrist-wearable device 900 can be performed by the watch body 920 alone or in conjunction with the wearable band 910 (e.g., via respective processors and/or hardware components) and vice versa. In some embodiments, operations of the wrist-wearable device 900, the watch body 920, and/or the wearable band 910 can be performed in conjunction with one or more processors and/or hardware components of another communicatively coupled device (e.g., the HIPD 1100; Figures 11A-11B).

As described below with reference to the block diagram of Figure 9B, the wearable band 910 and/or the watch body 920 can each include independent resources required to independently execute functions. For example, the wearable band 910 and/or the watch body 920 can each include a power source (e.g., a battery), memory, data storage, a processor (e.g., a central processing unit (CPU)), communications, a light source, and/or input/output devices.

Figure 9B shows block diagrams of a computing system 930 corresponding to the wearable band 910, and a computing system 960 corresponding to the watch body 920, according to some embodiments. A computing system of the wrist-wearable device 900 includes a combination of components of the wearable-band computing system 930 and the watch body computing system 960, in accordance with some embodiments.

The watch body 920 and/or the wearable band 910 can include one or more components shown in watch body computing system 960. In some embodiments, a single integrated circuit includes all or a substantial portion of the components of the watch body computing system 960 are in a single integrated circuit. Alternatively, in some embodiments, components of the watch body computing system 960 are included in a plurality of integrated circuits that are communicatively coupled. In some embodiments, the watch body computing system 960 is configured to couple (e.g., via a wired or wireless connection) with the wearable-band computing system 930, which allows the computing systems to share components, distribute tasks, and/or perform other operations described herein (individually or as a single device).

The watch body computing system 960 can include one or more processors 979, a controller 977, a peripherals interface 961, a power system 995, and memory (e.g., a memory 980), each of which are defined above and described in more detail below.

The power system 995 can include a charger input 996, a power-management integrated circuit (PMIC) 997, and a battery 998, each are which are defined above. In some embodiments, a watch body 920 and a wearable band 910 can have respective charger inputs (e.g., charger inputs 996 and 957), respective batteries (e.g., batteries 998 and 959), and can share power with each other (e.g., the watch body 920 can power and/or charge the wearable band 910, and vice versa). Although watch body 920 and/or the wearable band 910 can include respective charger inputs, a single charger input can charge both devices when coupled. The watch body 920 and the wearable band 910 can receive a charge using a variety of techniques. In some embodiments, the watch body 920 and the wearable band 910 can use a wired charging assembly (e.g., power cords) to receive the charge. Alternatively, or in addition, the watch body 920 and/or the wearable band 910 can be configured for wireless charging. For example, a portable charging device can be designed to mate with a portion of watch body 920 and/or wearable band 910 and wirelessly deliver usable power to a battery of watch body 920 and/or wearable band 910. The watch body 920 and the wearable band 910 can have independent power systems (e.g., power system 995 and 956) to enable each to operate independently. The watch body 920 and wearable band 910 can also share power (e.g., one can charge the other) via respective PMICs (e.g., PMICs 997 and 958) that can share power over power and ground conductors and/or over wireless charging antennas.

In some embodiments, the peripherals interface 961 can include one or more sensors 921, many of which listed below are defined above. The sensors 921 can include one or more coupling sensors 962 for detecting when the watch body 920 is coupled with another electronic device (e.g., a wearable band 910). The sensors 921 can include imaging sensors 963 (one or more of the cameras 925, and/or separate imaging sensors 963 (e.g., thermal-imaging sensors)). In some embodiments, the sensors 921 include one or more SpO2 sensors 964. In some embodiments, the sensors 921 include one or more biopotential-signal sensors (e.g., EMG sensors 965, which may be disposed on a user-facing portion of the watch body 920 and/or the wearable band 910). In some embodiments, the sensors 921 include one or more capacitive sensors 966. In some embodiments, the sensors 921 include one or more heart rate sensors 967. In some embodiments, the sensors 921 include one or more IMUs 968. In some embodiments, one or more IMUs 968 can be configured to detect movement of a user's hand or other location where the watch body 920 is placed or held.

In some embodiments, the peripherals interface 961 includes an NFC component 969, a global-position system (GPS) component 970, a long-term evolution (LTE) component 971, and/or a Wi-Fi and/or Bluetooth communication component 972. In some embodiments, the peripherals interface 961 includes one or more buttons 973 (e.g., the peripheral buttons 923 and 927 in Figure 9A) which, when selected by a user, cause an operation to be performed at the watch body 920. In some embodiments, the peripherals interface 961 includes one or more indicators, such as a light-emitting diode (LED), to provide a user with visual indicators (e.g., message received, low battery, active microphone and/or camera, etc.).

The watch body 920 can include at least one display 905, for displaying visual representations of information or data to the user, including user-interface elements and/or three-dimensional virtual objects. The display can also include a touch screen for inputting user inputs, such as touch gestures, swipe gestures, and the like. The watch body 920 can include at least one speaker 974 and at least one microphone 975 for providing audio signals to the user and receiving audio input from the user. The user can provide user inputs through the microphone 975 and can also receive audio output from the speaker 974 as part of a haptic event provided by the haptic controller 978. The watch body 920 can include at least one camera 925, including a front-facing camera 925A and a rear-facing camera 925B. The cameras 925 can include ultra-wide-angle cameras, wide angle cameras, fish-eye cameras, spherical cameras, telephoto cameras, a depth-sensing cameras, or other types of cameras.

The watch body computing system 960 can include one or more haptic controllers 978 and associated componentry (e.g., haptic devices 976) for providing haptic events at the watch body 920 (e.g., a vibrating sensation or audio output in response to an event at the watch body 920). The haptic controllers 978 can communicate with one or more haptic devices 976, such as electroacoustic devices, including a speaker of the one or more speakers 974 and/or other audio components and/or electromechanical devices that convert energy into linear motion such as a motor, solenoid, electroactive polymer, piezoelectric actuator, electrostatic actuator, or other tactile output-generating component (e.g., a component that converts electrical signals into tactile outputs on the device). The haptic controller 978 can provide haptic events that are capable of being sensed by a user of the watch body 920. In some embodiments, the one or more haptic controllers 978 can receive input signals from an application of the applications 982.

In some embodiments, the computer system 930 and/or the computer system 960 can include memory 980, which can be controlled by a memory controller of the one or more controllers 977 and/or one or more processors 979. In some embodiments, software components stored in the memory 980 include one or more applications 982 configured to perform operations at the watch body 920. In some embodiments, the one or more applications 982 include games, word processors, messaging applications, calling applications, web browsers, social media applications, media streaming applications, financial applications, calendars, clocks, etc. In some embodiments, software components stored in the memory 980 include one or more communication interface modules 983, as defined above. In some embodiments, software components stored in the memory 980 include one or more graphics modules 984 for rendering, encoding, and/or decoding audio and/or visual data; and one or more data management modules 985 for collecting, organizing, and/or providing access to the data 987 stored in memory 980. In some embodiments, software components stored in the memory 980 include a performance characteristics module 986A and experience indicators module 987A which are configured to perform the features described above in reference to Figures 1A-2G and 3-5D. In some embodiments, one or more of applications 982 and/or one or more modules can work in conjunction with one another to perform various tasks at the watch body 920.

In some embodiments, software components stored in the memory 980 can include one or more operating systems 981 (e.g., a Linux-based operating system, an Android operating system, etc.). The memory 980 can also include data 987. The data 987 can include profile data 988A, sensor data 989A, media content data 990, application data 991, and performance characteristics data 992A and experience indicators data 993A, which stores data related to the performance of the features described above in reference to Figures 1A-2G and 3-5D.

It should be appreciated that the watch body computing system 960 is an example of a computing system within the watch body 920, and that the watch body 920 can have more or fewer components than shown in the watch body computing system 960, combine two or more components, and/or have a different configuration and/or arrangement of the components. The various components shown in watch body computing system 960 are implemented in hardware, software, firmware, or a combination thereof, including one or more signal-processing and/or application-specific integrated circuits.

Turning to the wearable-band computing system 930, one or more components that can be included in the wearable band 910 are shown. The wearable-band computing system 930 can include more or fewer components than shown in the watch body computing system 960, combine two or more components, and/or have a different configuration and/or arrangement of some or all of the components. In some embodiments, all or a substantial portion of the components of the wearable-band computing system 930 are included in a single integrated circuit. Alternatively, in some embodiments, components of the wearable-band computing system 930 are included in a plurality of integrated circuits that are communicatively coupled. As described above, in some embodiments the wearable-band computing system 930 is configured to couple (e.g., via a wired or wireless connection) with the watch body computing system 960, which allows the computing systems to share components, distribute tasks, and/or perform other operations described herein (individually or as a single device).

The wearable-band computing system 930, similar to the watch body computing system 960, can include one or more processors 949, one or more controllers 947 (including one or more haptics controllers 948), a peripherals interface 931 that can include one or more sensors 913 and other peripheral devices, power source (e.g., a power system 956), and memory (e.g., a memory 950) that includes an operating system (e.g., an operating system 951), data (e.g., data 954 including profile data 988B, sensor data 989B, performance characteristics data 992A, and experience indicator data 993A, etc.), and one or more modules (e.g., a communications interface module 952, a data management module 953, a performance characteristics module 986B, and an experience indicators module 987B, etc.).

The one or more sensors 913 can be analogous to sensors 921 of the computer system 960 and in light of the definitions above. For example, sensors 913 can include one or more coupling sensors 932, one or more SpO2 sensors 934, one or more EMG sensors 935, one or more capacitive sensors 936, one or more heart rate sensors 937, and one or more IMUs 938.

The peripherals interface 931 can also include other components analogous to those included in the peripheral interface 961 of the computer system 960, including an NFC component 939, a GPS component 940, an LTE component 941, a Wi-Fi and/or Bluetooth communication component 942, and/or one or more haptic devices 976 as described above in reference to peripherals interface 961. In some embodiments, the peripherals interface 931 includes one or more buttons 943, a display 933, a speaker 944, a microphone 945, and a camera 955. In some embodiments, the peripherals interface 931 includes one or more indicators, such as an LED.

It should be appreciated that the wearable-band computing system 930 is an example of a computing system within the wearable band 910, and that the wearable band 910 can have more or fewer components than shown in the wearable-band computing system 930, combine two or more components, and/or have a different configuration and/or arrangement of the components. The various components shown in wearable-band computing system 930 can be implemented in one or a combination of hardware, software, firmware, including one or more signal processing and/or application-specific integrated circuits.

The wrist-wearable device 900 with respect to Figures 9A is an example of the wearable band 910 and the watch body 920 coupled, so the wrist-wearable device 900 will be understood to include the components shown and described for the wearable-band computing system 930 and the watch body computing system 960. In some embodiments, wrist-wearable device 900 has a split architecture (e.g., a split mechanical architecture, a split electrical architecture) between the watch body 920 and the wearable band 910. In other words, all of the components shown in the wearable-band computing system 930 and the watch body computing system 960 can be housed or otherwise disposed in a combined watch device 900, or within individual components of the watch body 920, wearable band 910, and/or portions thereof (e.g., a coupling mechanism 916 of the wearable band 910).

The techniques described above can be used with any device for sensing neuromuscular signals, including the arm-wearable devices of Figure 9A-9B, but could also be used with other types of wearable devices for sensing neuromuscular signals (such as body-wearable or head-wearable devices that might have neuromuscular sensors closer to the brain or spinal column).

In some embodiments, a wrist-wearable device 900 can be used in conjunction with a head-wearable device described below (e.g., AR device 1000 and VR device 1010) and/or an HIPD 1100; and the wrist-wearable device 900 can also be configured to be used to allow a user to control aspects of the artificial reality (e.g., by using EMG-based gestures to control user interface objects in the artificial reality and/or by allowing a user to interact with the touch screen on the wrist-wearable device to also control aspects of the artificial reality). Having thus described example wrist-wearable device, attention will now be turned to example head-wearable devices, such AR device 1000 and VR device 1010.

### Example Head-Wearable Devices

Figures 10A-10C show example head-wearable devices, in accordance with some embodiments. Head-wearable devices can include, but are not limited to, AR devices 1010 (e.g., AR or smart eyewear devices, such as smart glasses, smart monocles, smart contacts, etc.), VR devices 1010 (e.g., VR headsets, head-mounted displays (HMD)s, etc.), or other ocularly coupled devices. The AR devices 1000 and the VR devices 1010 are instances of the head-wearable devices (e.g., artificial-reality headset 110) described in reference to Figures 1A-3 and 4-5D herein, such that the head-wearable device should be understood to have the features of the AR devices 1000 and/or the VR devices 1010, and vice versa. The AR devices 1000 and the VR devices 1010 can perform various functions and/or operations associated with navigating through user interfaces and selectively opening applications, as well as the functions and/or operations described above with reference to Figures 1A-1G, 2A-2G, 3, and 5A-5D.

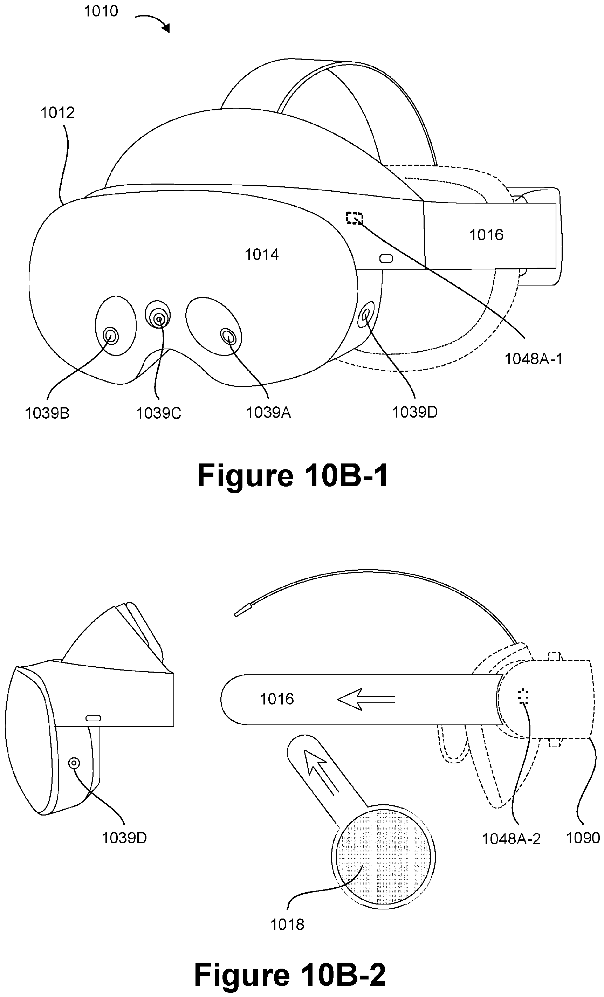

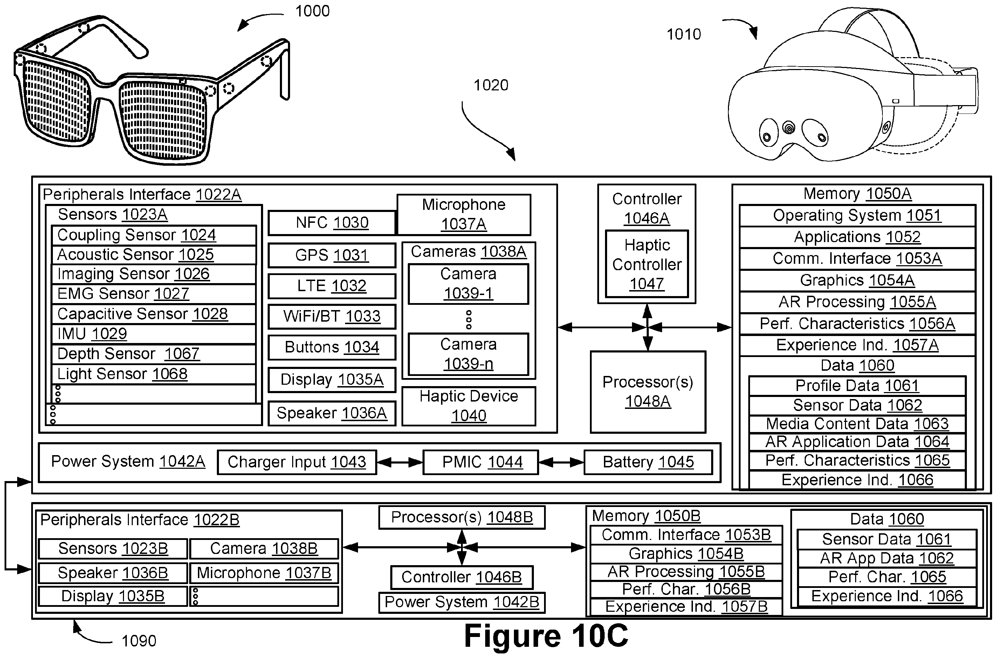

In some embodiments, an AR system (e.g., AR systems 800a-800b; Figures 8A-8B) includes an AR device 1000 (as shown in Figure 10A) and/or VR device 1010 (as shown in Figures 10B-1-B-2). In some embodiments, the AR device 1000 and the VR device 1010 can include one or more analogous components (e.g., components for presenting interactive artificial-reality environments, such as processors, memory, and/or presentation devices, including one or more displays and/or one or more waveguides), some of which are described in more detail with respect to Figure 10C. The head-wearable devices can use display projectors (e.g., display projector assemblies 1007A and 1007B) and/or waveguides for projecting representations of data to a user. Some embodiments of head-wearable devices do not include displays.

Figure 10A shows an example visual depiction of the AR device 1000 (e.g., which may also be described herein as augmented-reality glasses, and/or smart glasses). The AR device 1000 can work in conjunction with additional electronic components that are not shown in Figures 10A, such as a wearable accessory device and/or an intermediary processing device, in electronic communication or otherwise configured to be used in conjunction with the AR device 1000. In some embodiments, the wearable accessory device and/or the intermediary processing device may be configured to couple with the AR device 1000 via a coupling mechanism in electronic communication with a coupling sensor 1024, where the coupling sensor 1024 can detect when an electronic device becomes physically or electronically coupled with the AR device 1000. In some embodiments, the AR device 1000 can be configured to couple to a housing (e.g., a portion of frame 1004 or temple arms 1005), which may include one or more additional coupling mechanisms configured to couple with additional accessory devices. The components shown in Figure 10A can be implemented in hardware, software, firmware, or a combination thereof, including one or more signal-processing components and/or application-specific integrated circuits (ASICs).

The AR device 1000 includes mechanical glasses components, including a frame 1004 configured to hold one or more lenses (e.g., one or both lenses 1006-1 and 1006-2). One of ordinary skill in the art will appreciate that the AR device 1000 can include additional mechanical components, such as hinges configured to allow portions of the frame 1004 of the AR device 1000 to be folded and unfolded, a bridge configured to span the gap between the lenses 1006-1 and 1006-2 and rest on the user's nose, nose pads configured to rest on the bridge of the nose and provide support for the AR device 1000, earpieces configured to rest on the user's ears and provide additional support for the AR device 1000, temple arms 1005 configured to extend from the hinges to the earpieces of the AR device 1000, and the like. One of ordinary skill in the art will further appreciate that some examples of the AR device 1000 can include none of the mechanical components described herein. For example, smart contact lenses configured to present artificial reality to users may not include any components of the AR device 1000.

The lenses 1006-1 and 1006-2 can be individual displays or display devices (e.g., a waveguide for projected representations). The lenses 1006-1 and 1006-2 may act together or independently to present an image or series of images to a user. In some embodiments, the lenses 1006-1 and 1006-2 can operate in conjunction with one or more display projector assemblies 1007A and 1007B to present image data to a user. While the AR device 1000 includes two displays, embodiments of this disclosure may be implemented in AR devices with a single near-eye display (NED) or more than two NEDs.

The AR device 1000 includes electronic components, many of which will be described in more detail below with respect to Figure 10C. Some example electronic components are illustrated in Figure 10A, including sensors 1023-1, 1023-2, 1023-3, 1023-4, 1023-5, and 1023-6, which can be distributed along a substantial portion of the frame 1004 of the AR device 1000. The different types of sensors are described below in reference to Figure 10C. The AR device 1000 also includes a left camera 1039A and a right camera 1039B, which are located on different sides of the frame 1004. And the eyewear device includes one or more processors 1048A and 1048B (e.g., an integral microprocessor such as an ASIC) that is embedded in a portion of the frame 1004.

Figures 10B-1 and 10B-2 show an example visual depiction of the VR device 1010 (e.g., a head-mounted display (HMD) 1012, also referred to herein as an artificial-reality headset, a head-wearable device, a VR headset, etc.). The HMD 1012 includes a front body 1014 and a frame 1016 (e.g., a strap or band) shaped to fit around a user's head. In some embodiments, the front body 1014 and/or the frame 1016 includes one or more electronic elements for facilitating presentation of and/or interactions with an AR and/or VR system (e.g., displays, processors (e.g., processor 1048A-1), IMUs, tracking emitter or detectors, sensors, etc.). In some embodiments, the HMD 1012 includes output audio transducers (e.g., an audio transducer 1018-1), as shown in Figure 10B-2. In some embodiments, one or more components, such as the output audio transducer(s) 1018 and the frame 1016, can be configured to attach to and detach from (e.g., are detachably attachable) the HMD 1012 (e.g., a portion or all of the frame 1016, and/or the output audio transducer 1018), as shown in Figure 10B-2. In some embodiments, coupling a detachable component to the HMD 1012 causes the detachable component to come into electronic communication with the HMD 1012. The VR device 1010 includes electronic components, many of which will be described in more detail below with respect to Figure 10C.

Figures 10B-1 to 10B-2 also show that the VR device 1010 features one or more cameras, such as the left camera 1039A and the right camera 1039B, which can be analogous to the left and right cameras on the frame 1004 of the AR device 1000. In some embodiments, the VR device 1010 includes one or more additional cameras (e.g., cameras 1039C and 1039D), which can be configured to augment image data obtained by the cameras 1039A and 1039B by providing more information. For example, the camera 1039C can be used to supply color information that is not discerned by cameras 1039A and 1039B. In some embodiments, one or more of the cameras 1039A to 1039D can include an optional IR cut filter configured to remove IR light from being received at the respective camera sensors.

The VR device 1010 can include a housing 1090 storing one or more components of the VR device 1010 and/or additional components of the VR device 1010. The housing 1090 can be a modular electronic device configured to couple with the VR device 1010 (or an AR device 1000) and supplement and/or extend the capabilities of the VR device 1010 (or an AR device 1000). For example, the housing 1090 can include additional sensors, cameras, power sources, processors (e.g., processor 1048A-2), and so forth to improve and/or increase the functionality of the VR device 1010. Examples of the different components included in the housing 1090 are described below in reference to Figure 10C.

Alternatively or in addition, in some embodiments the head-wearable device, such as the VR device 1010 and/or the AR device 1000), includes, or is communicatively coupled to, another external device (e.g., a paired device) such as an HIPD 11 (discussed below in reference to Figures 11A-11B) and/or an optional neckband. An optional neckband can couple to the head-wearable device via one or more connectors (e.g., wired or wireless connectors). The head-wearable device and the neckband can operate independently without any wired or wireless connection between them. In some embodiments, the components of the head-wearable device and the neckband are located on one or more additional peripheral devices paired with the head-wearable device, the neckband, or some combination thereof. Furthermore, the neckband is intended to represent any suitable type or form of paired device. Thus, the following discussion of the neckband may also apply to various other paired devices, such as smart watches, smart phones, wristbands, other wearable devices, hand-held controllers, tablet computers, or laptop computers.

In some situations, pairing external devices, such as an intermediary processing device (e.g., an HIPD device 1100, an optional neckband, and/or wearable accessory device) with the head-wearable devices (e.g., an AR device 1000 and/or VR device 1010) enables the head-wearable devices to achieve a similar form factor of a pair of glasses while still providing sufficient battery and computation power for expanded capabilities. Some, or all, of the battery power, computational resources, and/or additional features of the head-wearable devices can be provided by a paired device or shared between a paired device and the head-wearable devices, thus reducing the weight, heat profile, and form factor of the head-wearable devices overall while allowing the head-wearable devices to retain its desired functionality. For example, the intermediary processing device (e.g., the HIPD 1100) can allow components that would otherwise be included in a head-wearable device to be included in the intermediary processing device (and/or a wearable device or accessory device), thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on the head-wearable devices, standing alone. Because weight carried in the intermediary processing device can be less invasive to a user than weight carried in the head-wearable devices, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

In some embodiments, the intermediary processing device is communicatively coupled with the head-wearable device and/or to other devices. The other devices may provide certain functions (e.g., tracking, localizing, depth mapping, processing, storage, etc.) to the head-wearable device. In some embodiments, the intermediary processing device includes a controller and a power source. In some embodiments, sensors of the intermediary processing device are configured to sense additional data that can be shared with the head-wearable devices in an electronic format (analog or digital).

The controller of the intermediary processing device processes information generated by the sensors on the intermediary processing device and/or the head-wearable devices. The intermediary processing device, like an HIPD 1100, can process information generated by one or more sensors of its sensors and/or information provided by other communicatively coupled devices. For example, a head-wearable device can include an IMU, and the intermediary processing device (neckband and/or an HIPD 1100) can compute all inertial and spatial calculations from the IMUs located on the head-wearable device. Additional examples of processing performed by a communicatively coupled device, such as the HIPD 1100, are provided below in reference to Figures 11A and 11B.

Artificial-reality systems may include a variety of types of visual feedback mechanisms. For example, display devices in the AR devices 1000 and/or the VR devices 1010 may include one or more liquid-crystal displays (LCDs), light-emitting diode (LED) displays, organic LED (OLED) displays, and/or any other suitable type of display screen. Artificial-reality systems may include a single display screen for both eyes or may provide a display screen for each eye, which may allow for additional flexibility for varifocal adjustments or for correcting a refractive error associated with the user's vision. Some artificial-reality systems also include optical subsystems having one or more lenses (e.g., conventional concave or convex lenses, Fresnel lenses, or adjustable liquid lenses) through which a user may view a display screen. In addition to or instead of using display screens, some artificial-reality systems include one or more projection systems. For example, display devices in the AR device 1000 and/or the VR device 1010 may include micro-LED projectors that project light (e.g., using a waveguide) into display devices, such as clear combiner lenses that allow ambient light to pass through. The display devices may refract the projected light toward a user's pupil and may enable a user to simultaneously view both artificial-reality content and the real world. Artificial-reality systems may also be configured with any other suitable type or form of image projection system. As noted, some AR systems may, instead of blending an artificial reality with actual reality, substantially replace one or more of a user's sensory perceptions of the real world with a virtual experience.

While the example head-wearable devices are respectively described herein as the AR device 1000 and the VR device 1010, either or both of the example head-wearable devices described herein can be configured to present fully-immersive VR scenes presented in substantially all of a user's field of view, additionally or alternatively to, subtler augmented-reality scenes that are presented within a portion, less than all, of the user's field of view.

In some embodiments, the AR device 1000 and/or the VR device 1010 can include haptic feedback systems. The haptic feedback systems may provide various types of cutaneous feedback, including vibration, force, traction, shear, texture and/or temperature. The haptic feedback systems may also provide various types of kinesthetic feedback, such as motion and compliance. The haptic feedback can be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices (e.g., wrist-wearable devices which may be incorporated into headwear, gloves, body suits, handheld controllers, environmental devices (e.g., chairs or floormats), and/or any other type of device or system, such as a wrist-wearable device 900, an HIPD 1100, smart textile-based garment 1200, etc.), and/or other devices described herein.

Figure 10C illustrates a computing system 1020 and an optional housing 1090, each of which show components that can be included in a head-wearable device (e.g., the AR device 1000 and/or the VR device 1010). In some embodiments, more or fewer components can be included in the optional housing 1090 depending on practical restraints of the respective head-wearable device being described. Additionally or alternatively, the optional housing 1090 can include additional components to expand and/or augment the functionality of a head-wearable device.

In some embodiments, the computing system 1020 and/or the optional housing 1090 can include one or more peripheral interfaces 1022A and 1022B, one or more power systems 1042A and 1042B (including charger input 1043, PMIC 1044, and battery 1045), one or more controllers 1046A 1046B (including one or more haptic controllers 1047), one or more processors 1048A and 1048B (as defined above, including any of the examples provided), and memory 1050A and 1050B, which can all be in electronic communication with each other. For example, the one or more processors 1048A and/or 1048B can be configured to execute instructions stored in the memory 1050A and/or 1050B, which can cause a controller of the one or more controllers 1046A and/or 1046B to cause operations to be performed at one or more peripheral devices of the peripherals' interfaces 1022A and/or 1022B. In some embodiments, each operation described can occur based on electrical power provided by the power system 1042A and/or 1042B.

In some embodiments, the peripherals interface 1022A can include one or more devices configured to be part of the computing system 1020, many of which have been defined above and/or described with respect to wrist-wearable devices shown in Figures 9A and 9B. For example, the peripherals interface can include one or more sensors 1023A. Some example sensors include: one or more coupling sensors 1024, one or more acoustic sensors 1025, one or more imaging sensors 1026, one or more EMG sensors 1027, one or more capacitive sensors 1028, and/or one or more IMUs 1029. In some embodiments, the sensors 1023A further include depth sensors 1067, light sensors 1068 and/or any other types of sensors defined above or described with respect to any other embodiments discussed herein.

In some embodiments, the peripherals interface can include one or more additional peripheral devices, including one or more NFC devices 1030, one or more GPS devices 1031, one or more LTE devices 1032, one or more WiFi and/or Bluetooth devices 1033, one or more buttons 1034 (e.g., including buttons that are slidable or otherwise adjustable), one or more displays 1035A, one or more speakers 1036A, one or more microphones 1037A, one or more cameras 1038A (e.g., including the a first camera 1039-1 through nth camera 1039-n, which are analogous to the left camera 1039A and/or the right camera 1039B), one or more haptic devices 1040; and/or any other types of peripheral devices defined above or described with respect to any other embodiments discussed herein.

The head-wearable devices can include a variety of types of visual feedback mechanisms (e.g., presentation devices). For example, display devices in the AR device 1000 and/or the VR device 1010 can include one or more liquid-crystal displays (LCDs), light-emitting diode (LED) displays, organic LED (OLED) displays, micro-LEDs, and/or any other suitable types of display screens. The head-wearable devices can include a single display screen (e.g., configured to be seen by both eyes), and/or can provide separate display screens for each eye, which can allow for additional flexibility for varifocal adjustments and/or for correcting a refractive error associated with the user's vision. Some embodiments of the head-wearable devices also include optical subsystems having one or more lenses (e.g., conventional concave or convex lenses, Fresnel lenses, or adjustable liquid lenses) through which a user can view a display screen. For example, respective displays 1035A can be coupled to each of the lenses 1006-1 and 1006-2 of the AR device 1000. The displays 1035A coupled to each of the lenses 1006-1 and 1006-2 can act together or independently to present an image or series of images to a user. In some embodiments, the AR device 1000 and/or the VR device 1010 includes a single display 1035A (e.g., a near-eye display) or more than two displays 1035A.

In some embodiments, a first set of one or more displays 1035A can be used to present an augmented-reality environment, and a second set of one or more display devices 1035A can be used to present a virtual-reality environment. In some embodiments, one or more waveguides are used in conjunction with presenting artificial-reality content to the user of the AR device 1000 and/or the VR device 1010 (e.g., as a means of delivering light from a display projector assembly and/or one or more displays 1035A to the user's eyes). In some embodiments, one or more waveguides are fully or partially integrated into the AR device 1000 and/or the VR device 1010. Additionally, or alternatively to display screens, some artificial-reality systems include one or more projection systems. For example, display devices in the AR device 1000 and/or the VR device 1010 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. The head-wearable devices can also be configured with any other suitable type or form of image projection system. In some embodiments, one or more waveguides are provided additionally or alternatively to the one or more display(s) 1035A.

In some embodiments of the head-wearable devices, ambient light and/or a real-world live view (e.g., a live feed of the surrounding environment that a user would normally see) can be passed through a display element of a respective head-wearable device presenting aspects of the AR system. In some embodiments, ambient light and/or the real-world live view can be passed through a portion (less than all) of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable devices, and an amount of ambient light and/or the real-world live view (e.g., 15-50% of the ambient light and/or the real-world live view) can be passed through the user interface element, such that the user can distinguish at least a portion of the physical environment over which the user interface element is being displayed.

The head-wearable devices can include one or more external displays 1035A for presenting information to users. For example, an external display 1035A can be used to show a current battery level, network activity (e.g., connected, disconnected, etc.), current activity (e.g., playing a game, in a call, in a meeting, watching a movie, etc.), and/or other relevant information. In some embodiments, the external displays 1035A can be used to communicate with others. For example, a user of the head-wearable device can cause the external displays 1035A to present a do not disturb notification. The external displays 1035A can also be used by the user to share any information captured by the one or more components of the peripherals interface 1022A and/or generated by head-wearable device (e.g., during operation and/or performance of one or more applications).

The memory 1050A can include instructions and/or data executable by one or more processors 1048A (and/or processors 1048B of the housing 1090) and/or a memory controller of the one or more controllers 1046A (and/or controller 1046B of the housing 1090). The memory 1050A can include one or more operating systems 1051; one or more applications 1052; one or more communication interface modules 1053A; one or more graphics modules 1054A; one or more AR processing modules 1055A; one or more performance characteristics modules 1056A for changing one or more performance characteristics of AR device 1000 or VR device 1010; one or more experience indicators modules 1057A for monitoring one or more user experience indicators of AR device 1000 or VR device 1010; and/or any other types of modules or components defined above or described with respect to any other embodiments discussed herein.

The data 1060 stored in memory 1050A can be used in conjunction with one or more of the applications and/or programs discussed above. The data 1060 can include profile data 1061; sensor data 1062; media content data 1063; AR application data 1064; performance characteristics data 1065 for setting the available performance of the AR device 1000 or the VR device 1010; experience indicators 1066 for tracking whether one or more user indicators are within an acceptable threshold for the AR device 1000 or the VR device 1010; and/or any other types of data defined above or described with respect to any other embodiments discussed herein.

In some embodiments, the controller 1046A of the head-wearable devices processes information generated by the sensors 1023A on the head-wearable devices and/or another component of the head-wearable devices and/or communicatively coupled with the head-wearable devices (e.g., components of the housing 1090, such as components of peripherals interface 1022B). For example, the controller 1046A can process information from the acoustic sensors 1025 and/or image sensors 1026. For each detected sound, the controller 1046A can perform a direction of arrival (DOA) estimation to estimate a direction from which the detected sound arrived at a head-wearable device. As one or more of the acoustic sensors 1025 detects sounds, the controller 1046A can populate an audio data set with the information (e.g., represented by sensor data 1062).

In some embodiments, a physical electronic connector can convey information between the head-wearable devices and another electronic device, and/or between one or more processors 1048A of the head-wearable devices and the controller 1046A. The information can be in the form of optical data, electrical data, wireless data, or any other transmittable data form. Moving the processing of information generated by the head-wearable devices to an intermediary processing device can reduce weight and heat in the eyewear device, making it more comfortable and safer for a user. In some embodiments, an optional accessory device (e.g., an electronic neckband or an HIPD 1100) is coupled to the head-wearable devices via one or more connectors. The connectors can be wired or wireless connectors and can include electrical and/or non-electrical (e.g., structural) components. In some embodiments, the head-wearable devices and the accessory device can operate independently without any wired or wireless connection between them.

The head-wearable devices can include various types of computer vision components and subsystems. For example, the AR device 1000 and/or the VR device 1010 can include one or more optical sensors such as two-dimensional (2D) or three-dimensional (3D) cameras, time-of-flight depth sensors, single-beam or sweeping laser rangefinders, 3D LiDAR sensors, and/or any other suitable type or form of optical sensor. A head-wearable device can process data from one or more of these sensors to identify the location of a user and/or aspects of the user's real-world physical surroundings, including the locations of real-world objects within the real-world physical surroundings. In some embodiments, the methods described herein are used to map the real world, to provide a user with context about real-world surroundings, and/or to generate interactable virtual objects (which can be replicas or digital twins of real-world objects that can be interacted with in AR environment), among a variety of other functions. For example, Figures 10B-1 and 10B-2 show the VR device 1010 having cameras 1039A-1039D, which can be used to provide depth information for creating a voxel field and a two-dimensional mesh to provide object information to the user to avoid collisions.

The optional housing 1090 can include analogous components to those described above with respect to the computing system 1020. For example, the optional housing 1090 can include a respective peripherals interface 1022B including more or fewer components than those described above with respect to the peripherals interface 1022A. As described above, the components of the optional housing 1090 can be used augment and/or expand on the functionality of the head-wearable devices. For example, the optional housing 1090 can include respective sensors 1023B, speakers 1036B, displays 1035B, microphones 1037B, cameras 1038B, and/or other components to capture and/or present data. Similarly, the optional housing 1090 can include one or more processors 1048B, controllers 1046B, and/or memory 1050B (including respective communication interface modules 1053B; one or more graphics modules 1054B; one or more AR processing modules 1055B, etc.) that can be used individually and/or in conjunction with the components of the computing system 1020.

The techniques described above in Figures 10A-10C can be used with different head-wearable devices. In some embodiments, the head-wearable devices (e.g., the AR device 1000 and/or the VR device 1010) can be used in conjunction with one or more wearable devices such as a wrist-wearable device 900 (or components thereof), as well as an HIPD 1100. Having thus described examples of the head-wearable devices, attention will now be turned to examples of handheld intermediary processing devices, such as the HIPD 1100.

### Example Handheld Intermediary Processing Devices

Figures 11A and 11B illustrate an example handheld intermediary processing device (HIPD) 1100, in accordance with some embodiments. The HIPD 1100 is an instance of the intermediary processing device 120 described in reference to Figures 1A-1G, 2A-2G, 4, and 5A-5D, herein, such that the HIPD 1100 should be understood to have the features described with respect to any intermediary device defined above or otherwise described herein, and vice versa. The HIPD 1100 can perform various functions and/or operations associated with navigating through user interfaces and selectively opening applications, as well as the functions and/or operations described above with reference to Figures 1A-1G, 2A-2G, 4, and 5A-5D.

Figure 11A shows a top view 1105 and a side view 1125 of the HIPD 1100. The HIPD 1100 is configured to communicatively couple with one or more wearable devices (or other electronic devices) associated with a user. For example, the HIPD 1100 is configured to communicatively couple with a user's wrist-wearable device 900 (or components thereof, such as the watch body 920 and the wearable band 910), AR device 1000, and/or VR device 1010. The HIPD 1100 can be configured to be held by a user (e.g., as a handheld controller), carried on the user's person (e.g., in their pocket, in their bag, etc.), placed in proximity of the user (e.g., placed on their desk while seated at their desk, on a charging dock, etc.), and/or placed at or within a predetermined distance from a wearable device or other electronic device (e.g., where, in some embodiments, the predetermined distance is the maximum distance (e.g., 10 meters) at which the HIPD 1100 can successfully be communicatively coupled with an electronic device, such as a wearable device).

The HIPD 1100 can perform various functions independently and/or in conjunction with one or more wearable devices (e.g., wrist-wearable device 900, AR device 1000, VR device 1010, etc.). The HIPD 1100 is configured to increase and/or improve the functionality of communicatively coupled devices, such as the wearable devices. The HIPD 1100 is configured to perform one or more functions or operations associated with interacting with user interfaces and applications of communicatively coupled devices, interacting with an AR environment, interacting with a VR environment, and/or operating as a human-machine interface controller, as well as functions and/or operations described above with reference to Figures 1A-1G, 2A-2G, 4, and 5A-5D. Additionally, as will be described in more detail below, functionality and/or operations of the HIPD 1100 can include, without limitation, task offloading and/or handoffs; thermals offloading and/or handoffs; 6 degrees of freedom (6DoF) raycasting and/or gaming (e.g., using imaging devices or cameras 1114A and 1114B, which can be used for simultaneous localization and mapping (SLAM) and/or with other image processing techniques); portable charging; messaging; image capturing via one or more imaging devices or cameras (e.g., cameras 1122A and 1122B); sensing user input (e.g., sensing a touch on a multi-touch input surface 1102); wireless communications and/or interlining (e.g., cellular, near-field, Wi-Fi, personal area network, etc.); location determination; financial transactions; providing haptic feedback; alarms; notifications; biometric authentication; health monitoring; sleep monitoring; etc. The above-example functions can be executed independently in the HIPD 1100 and/or in communication between the HIPD 1100 and another wearable device described herein. In some embodiments, functions can be executed on the HIPD 1100 in conjunction with an AR environment. As the skilled artisan will appreciate upon reading the descriptions provided herein, the novel HIPD 1100 described herein can be used with any type of suitable AR environment.

When the HIPD 1100 is communicatively coupled with a wearable device and/or other electronic device, the HIPD 1100 is configured to perform one or more operations initiated at the wearable device and/or the other electronic device. In particular, one or more operations of the wearable device and/or the other electronic device can be offloaded to the HIPD 1100 to be performed. The HIPD 1100 performs the one or more operations of the wearable device and/or the other electronic device and provides to data corresponded to the completed operations to the wearable device and/or the other electronic device. For example, a user can initiate a video stream using AR device 1000 and back-end tasks associated with performing the video stream (e.g., video rendering) can be offloaded to the HIPD 1100, which the HIPD 1100 performs and provides corresponding data to the AR device 1000 to perform remaining front-end tasks associated with the video stream (e.g., presenting the rendered video data via a display of the AR device 1000). In this way, the HIPD 1100, which has more computational resources and greater thermal headroom than a wearable device, can perform computationally intensive tasks for the wearable device improving performance of an operation performed by the wearable device.

The HIPD 1100 includes a multi-touch input surface 1102 on a first side (e.g., a front surface) that is configured to detect one or more user inputs. In particular, the multi-touch input surface 1102 can detect single tap inputs, multi-tap inputs, swipe gestures and/or inputs, force-based and/or pressure-based touch inputs, held taps, and the like. The multi-touch input surface 1102 is configured to detect capacitive touch inputs and/or force (and/or pressure) touch inputs. The multi-touch input surface 1102 includes a first touch-input surface 1104 defined by a surface depression, and a second touch-input surface 1106 defined by a substantially planar portion. The first touch-input surface 1104 can be disposed adjacent to the second touch-input surface 1106. In some embodiments, the first touch-input surface 1104 and the second touch-input surface 1106 can be different dimensions, shapes, and/or cover different portions of the multi-touch input surface 1102. For example, the first touch-input surface 1104 can be substantially circular and the second touch-input surface 1106 is substantially rectangular. In some embodiments, the surface depression of the multi-touch input surface 1102 is configured to guide user handling of the HIPD 1100. In particular, the surface depression is configured such that the user holds the HIPD 1100 upright when it is held in a single hand (e.g., such that the using imaging devices or cameras 1114A and 1114B are pointed toward a ceiling or the sky). Additionally, the surface depression is configured such that the user's thumb rests within the first touch-input surface 1104.

In some embodiments, the different touch-input surfaces include a plurality of touch-input zones. For example, the second touch-input surface 1106 includes at least a first touch-input zone 1108 within a second touch-input zone 1106 and a third touch-input zone 1110 within the first touch-input zone 1108. In some embodiments, one or more of the touch-input zones are optional and/or user defined (e.g., a user can specify a touch-input zone based on their preferences). In some embodiments, each touch-input surface and/or touch-input zone is associated with a predetermined set of commands. For example, a user input detected within the first touch-input zone 1108 causes the HIPD 1100 to perform a first command and a user input detected within the second touch-input zone 1106 causes the HIPD 1100 to perform a second command, distinct from the first. In some embodiments, different touch-input surfaces and/or touch-input zones are configured to detect one or more types of user inputs. The different touch-input surfaces and/or touch-input zones can be configured to detect the same or distinct types of user inputs. For example, the first touch-input zone 1108 can be configured to detect force touch inputs (e.g., a magnitude at which the user presses down) and capacitive touch inputs, and the second touch-input zone 1106 can be configured to detect capacitive touch inputs.

The HIPD 1100 includes one or more sensors 1151 for sensing data used in the performance of one or more operations and/or functions. For example, the HIPD 1100 can include an IMU that is used in conjunction with cameras 1114a and 1114b for 3-dimensional object manipulation (e.g., enlarging, moving, destroying, etc. an object) in an AR or VR environment. Non-limiting examples of the sensors 1151 included in the HIPD 1100 include a light sensor, a magnetometer, a depth sensor, a pressure sensor, and a force sensor. Additional examples of the sensors 1151 are provided below in reference to Figure 11B.

The HIPD 1100 can include one or more light indicators 1112 to provide one or more notifications to the user. In some embodiments, the light indicators are LEDs or other types of illumination devices. The light indicators 1112 can operate as a privacy light to notify the user and/or others near the user that an imaging device and/or microphone are active. In some embodiments, a light indicator is positioned adjacent to one or more touch-input surfaces. For example, a light indicator can be positioned around the first touch-input surface 1104. The light indicators can be illuminated in different colors and/or patterns to provide the user with one or more notifications and/or information about the device. For example, a light indicator positioned around the first touch-input surface 1104 can flash when the user receives a notification (e.g., a message), change red when the HIPD 1100 is out of power, operate as a progress bar (e.g., a light ring that is closed when a task is completed (e.g., 0% to 100%), operates as a volume indicator, etc.).

In some embodiments, the HIPD 1100 includes one or more additional sensors on another surface. For example, as shown Figure 11A, the HIPD 1100 includes a set of one or more sensors (e.g., sensor set 1120) on its edge. The sensor set 1120, when positioned on an edge of the of the HIPD 1100, can be pe positioned at a predetermined tilt angle (e.g., 26 degrees), which allows the sensor set 1120 to be angled toward the user when placed on a desk or other flat surface. Alternatively, in some embodiments, the sensor set 1120 is positioned on a surface opposite the multi-touch input surface 1102 (e.g., a back surface). The one or more sensors of the sensor set 1120 are discussed in detail below.

The side view 1125 of the of the HIPD 1100 shows the sensor set 1120 and camera 1114B. The sensor set 1120 includes one or more cameras 1122A and 1122B, a depth projector 1124, an ambient light sensor 1128, and a depth receiver 1130. In some embodiments, the sensor set 1120 includes a light indicator 1126. The light indicator 1126 can operate as a privacy indicator to let the user and/or those around them know that a camera and/or microphone is active. The sensor set 1120 is configured to capture a user's facial expression such that the user can puppet a custom avatar (e.g., showing emotions, such as smiles, laughter, etc., on the avatar or a digital representation of the user). The sensor set 1120 can be configured as a side stereo RGB system, a rear indirect Time-of-Flight (iToF) system, or a rear stereo RGB system. As the skilled artisan will appreciate upon reading the descriptions provided herein, the novel HIPD 1100 described herein can use different sensor set 1120 configurations and/or sensor set 1120 placement.

In some embodiments, the HIPD 1100 includes one or more haptic devices 1171 (Figure 11B; e.g., a vibratory haptic actuator) that are configured to provide haptic feedback (e.g., kinesthetic sensation). The sensors 1151, and/or the haptic devices 1171 can be configured to operate in conjunction with multiple applications and/or communicatively coupled devices including, without limitation, wearable devices, health monitoring applications, social media applications, game applications, and artificial-reality applications (e.g., the applications associated with AR).

The HIPD 1100 is configured to operate without a display. However, in optional embodiments, the HIPD 1100 can include a display 1168 (Figure 11B). The HIPD 1100 can also income one or more optional peripheral buttons 1167 (Figure 11B). For example, the peripheral buttons 1167 can be used to turn on or turn off the HIPD 1100. Further, the HIPD 1100 housing can be formed of polymers and/or elastomer elastomers. The HIPD 1100 can be configured to have a non-slip surface to allow the HIPD 1100 to be placed on a surface without requiring a user to watch over the HIPD 1100. In other words, the HIPD 1100 is designed such that it would not easily slide off a surface. In some embodiments, the HIPD 1100 include one or magnets to couple the HIPD 1100 to another surface. This allows the user to mount the HIPD 1100 to different surfaces and provides the user with greater flexibility in use of the HIPD 1100.

As described above, the HIPD 1100 can distribute and/or provide instructions for performing the one or more tasks with the HIPD 1100 and/or a communicatively coupled device. For example, the HIPD 1100 can identify one or more back-end tasks to be performed by the HIPD 1100 and one or more front-end tasks to be performed by a communicatively coupled device. While the HIPD 1100 is configured to offload and/or handoff tasks of a communicatively coupled device, the HIPD 1100 can perform both back-end and front-end tasks (e.g., via one or more processors, such as CPU 1177; Figure 11B). The HIPD 1100 can, without limitation, can be used to perform augmenting calling (e.g., receiving and/or sending 3D or 2.5D live volumetric calls, live digital human representation calls, and/or avatar calls), discreet messaging, 6DoF portrait/landscape gaming, AR/VR object manipulation, AR/VR content display (e.g., presenting content via a virtual display), and/or other AR/VR interactions. The HIPD 1100 can perform the above operations alone or in conjunction with a wearable device (or other communicatively coupled electronic device).

Figure 11B shows block diagrams of a computing system 1140 of the HIPD 1100, in accordance with some embodiments. The HIPD 1100, described in detail above, can include one or more components shown in the HIPD computing system 1140. The HIPD 1100 can be understood to include the components shown and described below for the HIPD computing system 1140. In some embodiments, all or a substantial portion of the components of the HIPD computing system 1140 are included in a single integrated circuit. Alternatively, in some embodiments, components of the HIPD computing system 1140 are included in a plurality of integrated circuits that are communicatively coupled.

The HIPD computing system 1140 can include a processor (e.g., a CPU 1177, a GPU, and/or a CPU with integrated graphics), a controller 1175, a peripherals interface 1150 that includes one or more sensors 1151 and other peripheral devices, a power source (e.g., a power system 1195), and memory (e.g., a memory 1178) that includes an operating system (e.g., an operating system 1179), data (e.g., data 1188), one or more applications (e.g., applications 1180), and one or more modules (e.g., a communications interface module 1181, a graphics module 1182, a task and processing management module 1183, an interoperability module 1184, an AR processing module 1185, a data management module 1186, a watch performance characteristics module 1187, and a watch user experience indicators module 1188). The HIPD computing system 1140 further includes a power system 1195 that includes a charger input and output 1196, a PMIC 1197, and a battery 1198, all of which are defined above.

In some embodiments, the peripherals interface 1150 can include one or more sensors 1151. The sensors 1151 can include analogous sensors to those described above in reference to Figures 9B. For example, the sensors 1151 can include imaging sensors 1154, (optional) EMG sensors 1156, IMUs 1158, and capacitive sensors 1160. In some embodiments, the sensors 1151 can include one or more pressure sensor 1152 for sensing pressure data, an altimeter 1153 for sensing an altitude of the HIPD 1100, a magnetometer 1155 for sensing a magnetic field, a depth sensor 1157 (or a time-of flight sensor) for determining a difference between the camera and the subject of an image, a position sensor 1159 (e.g., a flexible position sensor) for sensing a relative displacement or position change of a portion of the HIPD 1100, a force sensor 1161 for sensing a force applied to a portion of the HIPD 1100, and a light sensor 1162 (e.g., an ambient light sensor) for detecting an amount of lighting. The sensors 1151 can include one or more sensors not shown in Figure 11B.

Analogous to the peripherals described above in reference to Figures 9B, the peripherals interface 1150 can also include an NFC component 1163, a GPS component 1164, an LTE component 1165, a Wi-Fi and/or Bluetooth communication component 1166, a speaker 1169, a haptic device 1171, and a microphone 1173. As described above in reference to Figure 11A, the HIPD 1100 can optionally include a display 1168 and/or one or more buttons 1167. The peripherals interface 1150 can further include one or more cameras 1170, touch surfaces 1172, and/or one or more light emitters 1174. The multi-touch input surface 1102 described above in reference to Figure 11A is an example of touch surface 1172. The light emitters 1174 can be one or more LEDs, lasers, etc. and can be used to project or present information to a user. For example, the light emitters 1174 can include light indicators 1112 and 1126 described above in reference to Figure 11A. The cameras 1170 (e.g., cameras 1114A, 1114B, and 1122 described above in Figure 11A) can include one or more wide angle cameras, fish-eye cameras, spherical cameras, compound eye cameras (e.g., stereo and multi cameras), depth cameras, RGB cameras, ToF cameras, RGB-D cameras (depth and ToF cameras), and/or other available cameras. Cameras 1170 can be used for SLAM; 6 DoF ray casting, gaming, object manipulation, and/or other rendering; facial recognition and facial expression recognition, etc.

Similar to the watch body computing system 960 and the watch band computing system 930 described above in reference to Figure 9B, the HIPD computing system 1140 can include one or more haptic controllers 1176 and associated componentry (e.g., haptic devices 1171) for providing haptic events at the HIPD 1100.

Memory 1178 can include high-speed random-access memory and/or non-volatile memory, such as one or more magnetic disk storage devices, flash memory devices, or other non-volatile solid-state memory devices. Access to the memory 1178 by other components of the HIPD 1100, such as the one or more processors and the peripherals interface 1150, can be controlled by a memory controller of the controllers 1175.

In some embodiments, software components stored in the memory 1178 include one or more operating systems 1179, one or more applications 1180, one or more communication interface modules 1181, one or more graphics modules 1182, one or more data management modules 1185, which are analogous to the software components described above in reference to Figure 9B. The software components stored in the memory 1178 can also include a watch performance characteristics module 1187 and a watch user experience indicators module 1188 which are configured to perform the features described above in reference to 1A-1G, 2A-2G, 4, and 5A-5D.

In some embodiments, software components stored in the memory 1178 include a task and processing management module 1183 for identifying one or more front-end and back-end tasks associated with an operation performed by the user, performing one or more front-end and/or back-end tasks, and/or providing instructions to one or more communicatively coupled devices that cause performance of the one or more front-end and/or back-end tasks. In some embodiments, the task and processing management module 1183 uses data 1188 (e.g., device data 1190) to distribute the one or more front-end and/or back-end tasks based on communicatively coupled devices' computing resources, available power, thermal headroom, ongoing operations, and/or other factors. For example, the task and processing management module 1183 can cause the performance of one or more back-end tasks (of an operation performed at the communicatively coupled AR device 1000) at the HIPD 1100 in accordance with a determination that the operation is utilizing a predetermined amount (e.g., at least 70%) of computing resources available at the AR device 1000.

In some embodiments, software components stored in the memory 1178 include an interoperability module 1184 for exchanging and utilizing information received and/or provided to distinct communicatively coupled devices. The interoperability module 1184 allows for different systems, devices, and/or applications to connect and communicate in a coordinated way without user input. In some embodiments, software components stored in the memory 1178 include an AR module 1185 that is configured to process signals based at least on sensor data for use in an AR and/or VR environment. For example, the AR processing module 1185 can be used for 3D object manipulation, gesture recognition, facial and facial expression, recognition, etc.

The memory 1178 can also include data 1187, including structured data. In some embodiments, the data 1187 can include profile data 1189, device data 1189 (including device data of one or more devices communicatively coupled with the HIPD 1100, such as device type, hardware, software, configurations, etc.), sensor data 1191, media content data 1192, application data 1193, watch performance characteristics data 1194, which stores data related to the performance of the features described above in reference to Figures 1A-1G, 2A-2G, 4, and 5A-5D, and a watch user experience indicator data 1195, which stores data related to the performance of the features described above in reference to Figures 1A-1G, 2A-2G, 4, and 5A-5D.

It should be noted that the HIPD computing system 1140 is an example of a computing system within the HIPD 1100, and that the HIPD 1100 can have more or fewer components than shown in the HIPD computing system 1140, combine two or more components, and/or have a different configuration and/or arrangement of the components. The various components shown in the HIPD computing system 1140 are implemented in hardware, software, firmware, or a combination thereof, including one or more signal processing and/or application-specific integrated circuits.

The techniques described above in Figure 11A-11B can be used with any device used as a human-machine interface controller. In some embodiments, an HIPD 1100 can be used in conjunction with one or more wearable devices such as a head-wearable device (e.g., AR device 1000 and VR device 1010) and/or a wrist-wearable device 900 (or components thereof).

## Claims

1. A non-transitory computer-readable storage medium storing one or more programs, the one or more programs comprising instructions that, when executed by a system that includes an intermediary processing device that is in communication with an extended-reality headset, cause the system to:
while the intermediary processing device is operating in a default state to process data for the extended-reality headset and in accordance with a determination that an operational condition at the extended-reality headset satisfies thermal-throttling criteria:
operate the intermediary processing device in a throttled state that is distinct from the default state, the throttled state causing the intermediary processing device to reduce at least one performance characteristic associated with the default state.

2. The non-transitory computer-readable storage medium of claim 1, wherein the one or more programs comprise instructions that, when executed by the system, further cause the system to:
in accordance with a determination that the operational condition at the extended-reality headset no longer satisfies the thermal-throttling criteria:
revert the intermediary processing device to the default state.

3. The non-transitory computer-readable storage medium of claim 1 or claim 2, wherein the one or more programs comprise instructions that, when executed by the system, further cause the system to:
in accordance with the determination that the operational condition at the extended-reality headset satisfies the thermal-throttling criteria:
provide an instruction to cause a visual notification or a haptic notification that the extended-reality headset satisfies the thermal-throttling criteria to be displayed at one or both of the intermediary processing devices and the extended-reality headset.

4. The non-transitory computer-readable storage medium of any preceding claim, wherein the one or more programs comprise instructions that, when executed by the system, further cause the system to:
while the intermediary processing device is operating in the throttled state, and in accordance with a determination that all user-experience indicators at the extended-reality headset and the intermediary processing device satisfy one or more user-experience criteria:
maintain operating the intermediary processing device in the throttled state.

5. The non-transitory computer-readable storage medium of any preceding claim, wherein the one or more programs comprise instructions that, when executed by the system, further cause the system to:
while the intermediary processing device is operating in the throttled state, and in accordance with a determination that at least one user-experience indicator at the extended-reality headset or the intermediary processing device does not satisfy one or more user-experience criteria:
revert the intermediary processing device to the default state.

6. The non-transitory computer-readable storage medium of any preceding claim, wherein the one or more programs comprise instructions that, when executed by the system, further cause the system to:
while the intermediary processing device is operating in the throttled state, and in accordance with a determination that at least one user-experience indicator at the intermediary processing device does not satisfy one or more user-experience criteria:
revert the at least one performance characteristic to the default state; and
reduce at least one second performance characteristic that is distinct from the at least one performance characteristic.

7. The non-transitory computer-readable storage medium of any preceding claim, wherein the performance characteristic comprises:
a voltage of an intermediary processing device CPU associated with the intermediary processing device and another voltage of a headset CPU associated with the extended-reality headset;
a frequency of the intermediary processing device CPU associated with the intermediary processing device and another frequency of the headset CPU associated with the extended-reality headset;
a cellular throughput associated with the intermediary processing device and another cellular throughput associated with the extended-reality headset; or
video call quality between the intermediary processing device and the extended-reality headset.

8. The non-transitory computer-readable storage medium of any preceding claim, wherein the thermal throttling criteria includes a predictive model that predicts environmental temperature changes based on pattern recognition and can partially throttle to maintain a performance characteristic for a greater period of time than if the extended-reality headset only throttles once the thermal-throttling criteria is satisfied or the intermediary processing device only throttles once the thermal-throttling criteria is satisfied.

9. The non-transitory computer-readable storage medium of any preceding claim, wherein the intermediary processing device is a wrist-wearable device.

10. The non-transitory computer-readable storage medium of any preceding claim, wherein the intermediary processing device includes a network coordinator associated with the intermediary processing device, and wherein the one or more programs comprise instructions that, when executed by the intermediary processing device, further cause the intermediary processing device to:
in accordance with the determination that the operational condition at the extended-reality headset satisfies thermal-throttling criteria:
receive, by the network coordinator of the intermediary processing device, an updated thermal-throttling state of the extended-reality headset from a network leader;

11. The non-transitory computer-readable storage medium of claim 10, wherein:
the updated thermal-throttling criteria of the extended-reality headset is sent from a network coordinator associated with the extended-reality headset to the network leader;
optionally, wherein the network leader is based on a respective operational condition of a respective device within a network, wherein the network includes the extended-reality headset and the intermediary processing device.

12. The non-transitory computer-readable storage medium of any preceding claim, wherein the one or more programs comprise instructions that, when executed by the system, further cause the system to:
while the extended-reality headset is operating in a default state to process data for the intermediary processing device, and in accordance with a determination that an operational condition at the intermediary processing device satisfies thermal-throttling criteria:
operate the extended-reality headset in a throttled state that is distinct from the default state, the throttled state causing the extended-reality headset to reduce at least one performance characteristic associated with the default state;
optionally, wherein the one or more programs comprise instructions that, when executed by the system, further cause the system to:
in accordance with the determination that the operational condition at the intermediary processing device satisfies the thermal-throttling criteria:
provide an instruction to cause a visual notification or an auditory notification indicating that the intermediary processing device satisfies the thermal-throttling criteria to be displayed at one or both of the intermediary processing device and the extended-reality headset;
optionally, wherein the one or more programs comprise instructions that, when executed by the system, further cause the system to:
while the extended-reality headset is operating in the throttled state: in accordance with a determination that all user-experience indicators at the intermediary processing device satisfy one or more user-experience criteria:
maintain operating the extended-reality headset in the throttled state;
optionally, wherein the one or more programs comprise instructions that, when executed by the system, further cause the system to:
while the extended-reality headset is operating in the throttled state: in accordance with a determination that at least one user-experience indicator at the intermediary processing device does not satisfy one or more user-experience criteria:
revert the extended-reality headset to the default state.

13. The non-transitory computer-readable storage medium of claim 12, wherein the one or more programs comprise instructions that, when executed by the system, further cause the system to:
in accordance with a determination that the operational condition at the intermediary processing device no longer satisfies the thermal-throttling criteria:
revert the extended-reality headset to the default state;
optionally, wherein the one or more programs comprise instructions that, when executed by the system, further cause the system to:
while the extended-reality headset is operating in the throttled state: in accordance with a determination that at least one user-experience indicator at the extended-reality headset does not satisfy one or more user-experience criteria:
revert the at least one performance characteristic to the default state; and
reduce at least one second performance characteristic that is distinct from the at least one performance characteristic.

14. A method of thermal management, the method comprising:
at a system that includes an intermediary processing device that is in communication with an extended-reality headset:
while the intermediary processing device is operating in a default state to process data for the extended-reality headset and in accordance with a determination that an operational condition at the extended-reality headset satisfies thermal-throttling criteria:
operate the intermediary processing device in a throttled state that is distinct from the default state, the throttled state causing the intermediary processing device to reduce at least one performance characteristic associated with the default state.

15. An intermediate processing device, comprising:
a communication component that is configured to communicate with an extended-reality headset;
a processor, wherein the processor is configured to:
while the intermediary processing device is operating in a default state to process data for the extended-reality headset and in accordance with a determination that an operational condition at the extended-reality headset satisfies thermal-throttling criteria:
operate the intermediary processing device in a throttled state that is distinct from the default state, the throttled state causing the intermediary processing device to reduce at least one performance characteristic associated with the default state.
